(19) **Europäisches Patentamt / European Patent Office / Office européen des brevets**

(11) **EP 0 953 905 B1**

(12) **EUROPEAN PATENT SPECIFICATION**

(45) Date of publication and mention
of the grant of the patent:
**27.08.2008 Bulletin 2008/35**

(51) Int Cl.:
**G06F 9/46** (2006.01)

(21) Application number: **99303005.5**

(22) Date of filing: **19.04.1999**

(54) **Method and apparatus for switching tasks**

Verfahren und Vorrichtung zum Umschalten von Aufgaben

Procédé et dispositif pour commuter des tâches

(84) Designated Contracting States:
**DE FR GB**

(30) Priority: **27.04.1998 JP 11750598**

(43) Date of publication of application:
**03.11.1999 Bulletin 1999/44**

(73) Proprietor: **Sony Corporation
Tokyo 141 (JP)**

(72) Inventors:
• **Wakita, Yoshiro,
Intellectual Property Dpt.
Shinagawa-ku,
Tokyo 141 (JP)**

• **Murata, Seiji,
Intellectual Property Dpt.
Shinagawa-ku,
Tokyo 141 (JP)**
• **Gamo, Tsutomu,
Intellectual Property Dpt.
Shinagawa-ku,
Tokyo 141 (JP)**

(74) Representative: **Robinson, Nigel Alexander Julian
et al
D Young & Co
120 Holborn
London EC1N 2DY (GB)**

(56) References cited:
**EP-A- 0 272 150          US-A- 4 975 836
US-A- 5 159 680          US-A- 5 179 685
US-A- 5 682 531**

EP 0 953 905 B1

**Description**

The present invention relates to a method of switching tasks in a multitasking system in which a plurality of tasks are executed in parallel with each other while independence of each task is ensured. The present invention also relates to a task switching apparatus for use in a multitasking system in which a plurality of tasks are executed in parallel with each other while independence of each task is ensured.

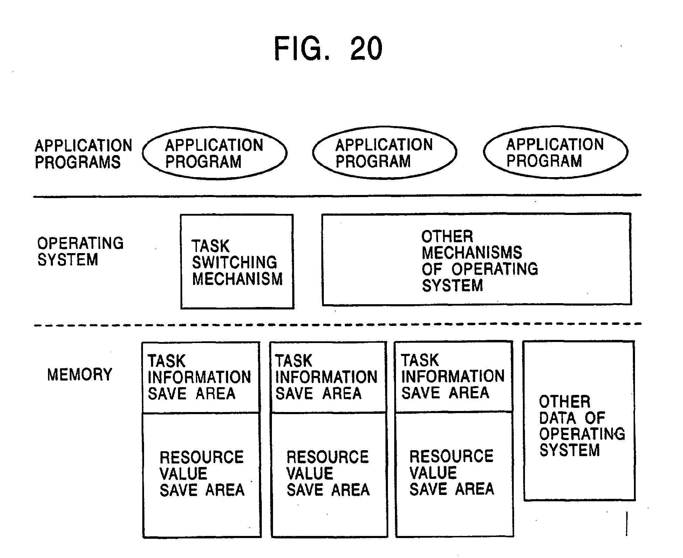

To enable task switching in conventional operating systems having a multitasking function, a task information save area for storing task information for controlling each of a plurality of tasks, and a resource value save area for saving resource values which designate the statuses of resources used for executing the task are maintained as a set of adjacent areas in a memory, as shown in Fig. 20. The resource values are, for example, values in registers for a central processing unit and values in registers for a floating-point arithmetic unit.

For example, when a task A is being executed, task switching is performed by stopping execution of the task A and starting execution of a task B. In this task switching, resource values reflecting the results of use of resources for the task A before switching are first saved in the memory together with task information about the task A. That is, when the task A is stopped, values representing the current statuses of the resources are saved as resource values in the memory.

Then, with respect to the task B to be next executed, resource values which were set as a result of the preceding execution of the task B using resources are read from the memory together with task information about the task B, and execution of the task B is thereafter started. As the resource values to be read from the memory, values indicating the statuses of the resources at the time when the task B was stopped have been set. When execution of the task B is started, the register values of the central processing unit, the register values of the floating-point arithmetic unit, etc., are restored, based on the resource values, to the statuses at the time when the task B was stopped. Thereafter, execution of the task B is restarted.

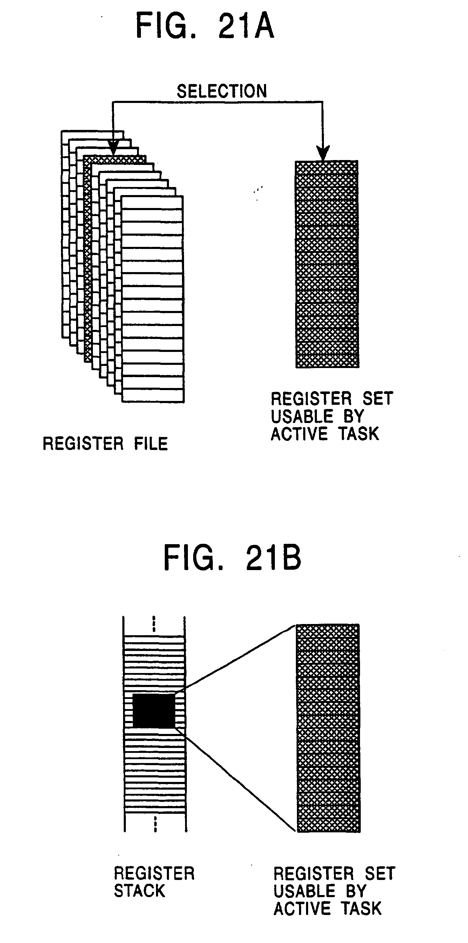

A central processing unit is known which has resource value saving hardware called "register file" used as an area for saving resources for each of a plurality of tasks, as shown in Fig. 21A. Another central processing unit is known which has resource value saving hardware called "register stack" and used as an area for saving resources for each of a plurality of tasks, as shown in Fig. 21B. In these central processing units, reads of resource values from a memory and writes of resource values to the memory at the time of task switching can be reduced, so that the task switching speed can be increased.

Conventionally, areas for saving task information and resource values are maintained in a memory with respect to each of a plurality of tasks, as shown in Fig. 20. Task switching performed in the above-described manner, however, requires reading of resource values from a memory and writing of resource values to the memory with respect to each of resources usable by tasks, and therefore entails problems described below.

(1) If there is a large number of resources (e.g., if a central processing unit has a multiplicity of registers), a need for reading and writing of a large amount of data by accessing a memory arises, so that the time required for task switching is long.

(2) If a resource is newly added, resource values of the added resource are also stored in the memory with respect to the tasks not using the added resource. The time required for task switching is thereby increased. For example, if a floating-point arithmetic unit is added for hardware function expansion, the tasks not using the function of the floating-point arithmetic unit also have register values of the floating-point arithmetic unit stored as resource values in the memory. As a result, the task switching time is increased.

(3) Even if the number of usable resources is increased, it is not always possible that each task will use all the resources. Ordinarily, some of the tasks use only a limited number of resources in the total number of usable resources. In the conventional task switching system, however, the resource values of all the usable resources are stored in the memory with respect to the tasks using only a limited number of resources in the total number of usable resources. Therefore, a considerably large amount of memory is consumed for task switching if the number of usable resources is increased.

If resource value saving hardware is prepared as shown in Fig. 21A or 21B, the problem (1) can be solved but the following is still a consideration.

(4) There is a limit to the capacity of available resource value saving hardware, and it is not always possible that prepared resource value saving hardware will suffice for any task switch. If resources are added or the number of switchable tasks is increased to such an extent that the prepared resource value saving hardware is insufficient, reading and writing performed by accessing the memory as shown in Fig. 20 are eventually required. Consequently, even if resource value saving hardware is provided to increase the task switching speed, the effect of increasing the speed is considerably low if resources are added or the number of switchable tasks is increased.

(5) A large-scale of resource value saving hardware is required with respect to the amount of resources to be handled. In integration of the desired central processing unit, etc., forming a semiconductor device, a considerably large semiconductor area is occupied by the resource value saving hardware.

(6) If the amount of resources to be handled is increased, it is necessary to correspondingly increase the scale of resource value saving hardware or to reduce the number of tasks savable by resource value saving hardware.

In the case of an application of a task switching system such as shown in Fig. 20 to an apparatus requiring real-time processing, a problem described below arises especially when the amount of usable resources is increased.

(7) Since resource values of all usable resources are saved in the memory and read out from the memory each time task switching is performed, the time required for task switching is increased especially when the amount of usable resources is increased.

In such a situation, processing, such as interrupt processing, which needs a high-speed start, cannot be performed by the task switching system. This problem is particularly considerable in the case of an apparatus requiring real-time processing.

In the case where task switching is performed as shown in Fig. 20, the memory is accessed to transfer a substantially large amount of data and the amount of data transferred by accessing the memory varies largely depending upon whether or not a cache memory or a register file can be used. Therefore, there is also a problem described below.

(8) The time required for starting a task by task switching varies largely and it is difficult to determine a processing timing when interrupt processing or the like is performed.

As described above, there are various problems relating to task switching.

In the system of US-A-5 682 531, an instruction code includes a first memory address part 22 and a second memory address part 23, and when a micro-instruction decoder 14 decodes an operation code of save or restore instruction of the instruction code prefetched by an instruction queue 13, a micro-ROM 15 assigns the task number specified by the first memory address part 22 to an index value, reads a register list of the task from a context save information specified by the second memory address part 23, and selectively saves or restores the content of the register specified by the register list.

US-A-5 179 685 describes an information processing apparatus for managing a storage such as a register file divided into a plurality of register banks. A register bank pointer is provided for each register bank in the register file so as to link the register bank to another optional register bank. The activation records for each of a plurality of tasks are allocated to the corresponding register banks in the register file. The necessary number of register banks for the allocation of the activation records for each task are linked together. The number of register banks linked together or released from the linking is changed with the increase and decrease of the number of activation records to be allocated for each task.

EP-A-0 272 150 describes a register device includes a register set group, a switching control unit (6), a write control unit (7), a write flag memory unit (5a, 5b, 5c), and a read control unit (8). The register set group consists of a plurality of register sets (1a, 1b, 1c) each constituted by a plurality of registers. The switching control unit (6) selects a register set (1a or 1b or 1c) to be used in processing from the register set group in response to a saving/recovery instruction. The write control unit (7) writes data in registers of the register set (1a or 1b or 1c) selected by the switching control unit (6) in response to a write instruction. A write flag representing whether data is written in each of the registers is held by the write flag memory unit (5a, 5b, 5c). The read control unit (8) determines, in response to a read instruction, a register in which data is written most recently of a plurality of registers corresponding to each other between the register sets with reference to the write flags, thereby reading out data from the register.

In view of the above-described circumstances, an object of the present invention is to provide a task switching apparatus and method whereby the above-described problems of the conventional art can be reduced.

To achieve this object, according to the present one aspect of the present invention, there is provided a task switching apparatus in a multitasking system comprising a plurality of tasks executed in parallel with each other while independence of each task is ensured, each task having a register value save area for its exclusive use, a plurality of register groups for controlling registers in a separate state, a task switcher which switches the tasks so that a second one of the tasks becomes active in place of a first one of the tasks, a register group usability checker for checking, when the active task uses one of the registers which belong to one of the plurality of groups, whether the active task has a right to use the register group to which the register to be used by the active task belongs, and a register group monopolizing task switcher for giving the active task a right to use the register group to which the register to be used by the active task belongs if the active task has no right to use the register group.

According to another aspect of the present invention, there is provided a task switching method in a multitasking system comprising an execution step of executing a plurality of tasks in parallel with each other while independence of each task is ensured, each task having a register value save area for its exclusive use, a storing step of storing a plurality of register groups in a separate state, a task switching step of switching the tasks so that a second one of the tasks becomes active in place of a first one of the tasks, a register group usability checking step of checking, when the active task uses one of the registers which belong to one of the plurality of groups, whether the active task has a right to use the register group to which the register to be used by the active task belongs, and a register group monopolising task switching step of giving the active task a right to use the register group to which the register to be used by the active task belongs if the active task has no right to use the register group.

Embodiments of the invention will now be described, by way of example only, with reference to the accompanying drawings, in which:

Fig. 1 is a diagram showing the configuration of hardware used in a first embodiment of the present invention;

Fig. 2 a diagram for explaining register groups and variables on a memory in the first embodiment of the present invention;

Fig. 3 is a diagram showing a state in which a plurality of tasks are executed in parallel with each other in accordance with one embodiment of the present invention.

Fig. 4 is a diagram showing a task information array in the first and second embodiment of the invention

Fig. 5 is a diagram showing a task information save area and a register value save area in the first embodiment of the invention.

Fig. 6 is a flowchart of a task switching process in the first embodiment of the invention;

Fig. 7 is a flowchart of the process of a resource group usability check in the first embodiment of the invention;

Fig. 8 is a flowchart of a resource group monopolizing task switching process in the first embodiment of the invention;

Fig. 9 is a diagram showing the configuration of hardware registers in the second embodiment of the invention;

Fig. 10 is a diagram showing a task information save area and a resource value save area in the second embodiment of the invention;

Fig. 11 is a flowchart of a task switching process in which task switching is performed by using resource group use permission flags in the second embodiment of the invention;

Fig. 12 is a flowchart of the process of a resource group usability check when task switching is performed by using resource group use permission flags in the second embodiment of the invention;

Fig. 13 is a flowchart of a resource group monopolizing task switching process when task switching is performed by using resource group use permission flags in the second embodiment of the invention;

Fig. 14 is a flowchart of a resource group saving process in the second embodiment of the invention;

Fig. 15 is a flowchart of a resource group reading process in the second embodiment of the invention;

Fig. 16 is a flowchart of a resource group save area securing process in the second embodiment of the invention;

Fig. 17 is a flowchart of a task switching process in which task switching is performed without using resource group use permission flags in the second embodiment of the invention;

Fig. 18 is a flowchart of the process of a resource group usability check when task switching is performed without using resource group use permission flags in the second embodiment of the invention;

Fig. 19 is a flowchart of a resource group monopolizing task switching process when task switching is performed without using resource group use permission flags in the second embodiment of the invention;

Fig. 20 a diagram showing a state in which a plurality of tasks are executed in parallel with each other in the conventional art;

Figs. 21A and 21B are diagrams for explaining high-seed task switching mechanisms in a conventional central processing unit;

Fig. 21A is a diagram showing a register file;

Fig. 21B is a diagram showing a register window; and

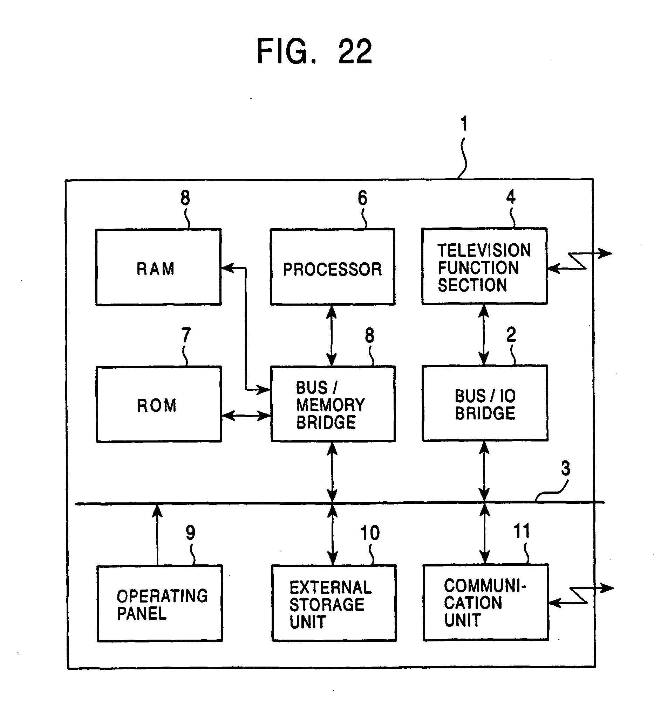

Fig. 22 is a diagram schematically showing the configuration of a television receiver which is an example of an application of the present invention.

## 1. Outline of Embodiments of the Present Invention

According to at least preferred embodiments of the present invention, resources, e.g. registers for a central processing unit and registers for a floating-point arithmetic unit used for tasks and having values to be saved independent of each other with respect to the tasks are controlled by being separated into a plurality of groups called resource groups.

According to at least preferred embodiments of the present invention, when an active task uses a resource, a check called "resource group usability check" is executed for determination as to whether a resource group to which the resource belongs is usable by the active task. According to at least preferred embodiments of the present invention, if the active task is monopolizing the resource group, it is determined that the resource group is usable by the task. If usability of the resource is recognized as a result of the resource group usability check, the process in which the task is executed is advanced, as is the corresponding conventional process not using the method of at least preferred embodiments of the present invention. If the resource is not usable, a process called "resource group monopolizing task switching process" is started.

In the resource group monopolizing task switching process, saving and reading of resource values and changing of the resource group monopolizing state are performed with respect to the switching-object resource group. More specifically, the task which is presently monopolizing the switching-object resource group is identified and, if valid values have been set in some resources which belong to the resource group by the task presently monopolizing the resource group, they are saved in a resource value save area for the task. If the active task (i.e., the task being about to use the above-mentioned resource) has, in a resource value save area, stored valid values corresponding to the resource group, those values are read. After these operations, switching from the task monopolizing the resource group to the active task is performed.

A method and an apparatus for switching tasks in accordance with at least preferred embodiments of the present invention can be realized as a portion of software such as an operating system and can be realized by using hardware to which the present invention is applied. In either case, to enable normal execution of a process including a resource group usability check and processing for resource group monopolizing task switching, some flags and variables are prepared and the values of them are set and referred to as desired.

A resource group usability check is a process performed considerably frequently. Therefore, it is preferred that the resource group usability check is executed by hardware processing based on a resource group usability checking mechanism in prepared hardware instead of software processing based on an operating system or the like, because a higher processing speed can be achieved thereby.

For example, such a resource group usability check is executed by using a use permission flag which is provided as a function of hardware to indicate permission/inhibition of use of each of functional blocks. Each functional block is formed of one or more resource groups which provide a common function. More specifically, a group of registers for an arithmetic unit is handled as a functional block, for example.

If a resource group usability check is performed by using use permission flags indicating permission/inhibition of use of such functional blocks, the use permission flag corresponding to some of the functional blocks containing an unusable resource group is set such as to indicate that use of the functional block containing the unusable resource group is not permitted. In the resource group usability check, permission/inhibition of use of one of resource groups is recognized by referring to the corresponding use permission flag.

Alternatively, a resource group use permission flag indicating permission/inhibition of use of each of resource groups may be provided as a function of hardware, and a resource group usability check may be executed by using the resource group use permission flag. To enable a resource group usability check by using resource group use permission flags indicating permission/inhibition of use of resources, the resource group use permission flag corresponding to an unusable one of resource groups is previously set such as to indicate that use of the resource group is not permitted. In the resource group usability check, permission/inhibition of use of one of the resource groups is recognized by referring to the corresponding resource group use permission flag.

Also, a register in which resource group monopolizing task variables are set in one-to-one correspondence with resource groups, and a register in which an active task variable set to a value corresponding to an active task is stored may be provided in the form of hardware and a resource group usability check may be performed by using the resource group monopolizing task variables and the active task variable. In a resource group usability check using the resource group monopolizing task variables and the active task variable, permission/inhibition of use of each resource group is ascertained by comparing the corresponding resource group monopolizing task variable and the active task variable.

If registers for storing flags or variables used for a resource group usability check are provided in the form of hardware as described above, a resource group usability can be performed without reducing the task execution efficiency.

On the other hand, from the viewpoint of performing a resource group monopolizing task switching process in a shorter time, it is also preferred that the greatest possible portions of mechanisms for a resource group monopolizing task switching process are provided as functions of hardware to perform the process mainly by hardware processing. However, since a resource group monopolizing task switching process is not so frequently performed as a resource group usability check, it may be performed by software processing based on an operating system or the like. A large portion of a resource group monopolizing task switching process can be realized by using software such as an operating system, hardware provided in a data processing apparatus, or microprograms.

More specifically, in a resource group monopolizing task switching process, a determination is made as to whether it is necessary to save resource values of switching-object resource groups, and, if so, processing for saving the resource values and processing for updating flags necessary for determination as to whether saving of the resource values is necessary are performed. A determination is also made as to whether there is a need to read the resource values of the switching-object resource groups. If reading of the resource values is required, processing for reading the resource values and processing for updating flags for determination as to whether there is a need to read the resource values are performed. Further, processing for updating variables necessary for identifying a task monopolizing some of the resource groups and processing for updating flags used in a resource group usability check, and so on are performed.

To perform such a resource group monopolizing task switching process, a resource group in-use flag corresponding to each of resource groups is prepared as a means for determination as to whether it is necessary to save resource values of switching-object resource groups. If during execution of a task a resource which belongs to one of the resource groups is used, the value "TRUE" is set in the corresponding resource group in-use flag. If, in a task executed by task switching, a processing with which destruction of resource values of a particular one of the resource groups is presupposed (e.g., a system call, a subroutine call or processing for return from a subroutine) is executed, the value "FALSE" is set in the resource group in-use flag corresponding to the resource group. Also, if it is determined that resource values of a resource used by a task can be discarded with no problem, for example, when execution of the task is stopped, the value "FALSE" is set in the resource group in-use flag corresponding to the resource group which has been monopolized by the task.

To enable a resource group monopolizing task switching process such as described above, resource group saved value validity flags corresponding to resource groups are prepared with respect to each of a plurality of tasks as means for making a determination as to whether there is a need to read resource values of switching-object resource groups. When an active task uses one of the resources, the value "TRUE" is set in the resource group saved value validity flag corresponding to the resource group to which the resource used by the task belongs, in the resource group saved value validity flags corresponding to the task. If the resource group saved value validity flags are used in this manner, a register for holding the resource group saved value validity flags corresponding to the active task may be provided in a data processing apparatus. Memory accessing events required for updating the resource group saved value validity flags can be reduced thereby.

If a task started by task switching to be executed includes a process in which destruction of resource values of a particular one of the resource groups is presupposed, the value "FALSE" is set in the resource group saved value validity flag corresponding to the resource group in which destruction of resource values is allowed, in the resource group saved value validity flags corresponding to the task. In this manner, saving and reading of unnecessary resource values can be omitted to reduce memory accessing events. If it is determined that resource values of a resource used by a task can be discarded with no problem, for example, when execution of the task is stopped, the value "FALSE" is set in the resource group saved value validity flag corresponding to the resource group which has been monopolized by the task, in the resource group saved value validity flags corresponding to the task. In this manner, saving and reading of unnecessary resource values can be omitted to further reduce memory accessing events.

To perform a resource group monopolizing task switching process such as described above, resource group monopolizing task variables corresponding to resource groups are prepared as means for identifying a task monopolizing some of the resources. In the resource group monopolizing task switching process, the value of the resource group monopolizing task variable corresponding to each resource group is updated to the value corresponding to the active task.

2. Basic Processing Flow

When a need for a task switch has arisen, an operating system updates the resource group saved value validity flags and the resource group monopolization flags, etc., corresponding to a task to be stopped from being executed. The operating system also performs saving and setting of the resource group use permission flags, the resource group saved value validity flags, the active task variable, etc., according to need with respect to a task started by task switching to be executed. Further, the operating system performs saving and reading of resource values at suitable times in the process of saving and setting these flags, if necessary. After these processings, the operating system starts execution of the new task.

If the active task started by task switching is about to use a resource which belongs to a resource group which the task has not been permitted to use. The state of the task being about to use the resource in the resource group without permission is detected by a resource group usability check, and a resource group monopolizing switching process is then started. In the resource group monopolizing switching process, processings necessary for enabling the task to use the resource in the resource group that the task has not been permitted to use are performed. After the resource group monopolizing switching process has enabled the task to use the resource, the process of the task using the resource is continued.

If a register holding the resource group in-use flags has been provided in the form of hardware, the value "TRUE" is set in the resource group in-use flag corresponding to the resource group to which the resource required by the active task belongs when the active task is about to use the resource. If a register holding the resource group saved value validity flags has been provided in the form of hardware, the value "TRUE" is set in the resource group saved value validity flag corresponding to the resource group to which the resource required by the active task belongs when the active task is about to use the resource.

In the resource group monopolizing task switching process, a task monopolizing the resource group to which the resource that the active task is about to use belongs is first identified from the resource group monopolizing task variable corresponding to the resource group. Then the value "FALSE" is set in the resource group monopolization flag corresponding to the task monopolizing the resource group. Also, the resource group saved value validity flag corresponding to the task monopolizing the resource group is checked. If the value of the resource group saved value validity flag is "TRUE", resource values of the resource group are saved in the resource value save area corresponding to the task monopolizing the resource group.

If a register holding the values of the resource group in-use flags has been provided in the form of hardware, the corresponding content of this register is checked. If the value of the resource group in-use flag corresponding to the switching-object resource group is "TRUE", resource values of the resource group are saved in the resource group save area corresponding to the task monopolizing the resource group.

Next, the resource group saved value validity flags corresponding to the active task are checked. If the value corresponding to the monopolizing task switching-object resource group is "TRUE", resource values of the resource group are read from the resource value save area corresponding to the active task to the resource, thereby enabling the active task to see the resource values as if the values that it set by itself have existed continuously in the resource, thus ensuring independence between the tasks.

If the value of the resource group saved value validity flag corresponding to the active task is "FALSE", a check is performed as to whether the resource value save area corresponding to the monopolizing task switching-object resource group has been secured. If no, the resource value save area corresponding to the resource group is secured. Thereafter, the value "TRUE" is set in the resource group saved value validity flag corresponding to the resource group.

Following the above-described process, the resource group monopolizing task variable corresponding to the monopolizing task switching-object resource group is set to the value corresponding to the active task. The process of switching the task monopolizing the resource group is thereby completed, thereby enabling the active task to use the resource.

In the case of performing resource group usability check by using the resource group user permission flags, the resource group monopolizing task switching process also includes a process in which the value "TRUE" is set in the resource group use permission flag corresponding to the monopolizing task switching-object resource group.

3. About use of Memory

When task switching is performed in the above-described manner, it is preferable to secure the resource value save area for a task in one memory block in which a stack used by the task is also provided. Before a task is generated, it is not necessary to secure the memory block area used for its stack. Also, this memory block area can be freed when execution of the task is finished. Because of such a characteristic of a stack, it is possible to realize a mechanism for saving the memory consumption in such a manner that the memory block area for a stack is dynamically allocated for a task. If such a mechanism is used, and if the resource values save area and a stack used by the same task are secured in one common memory block, the resource value save area can also be dynamically allocated, thereby further saving the memory consumption. One resource value save area is provided for one task. When each resource value save area is secured, it is preferable to dynamically change the size of the resource value save area according to the size of resource values to be saved therein. In this manner, the memory can be used efficiently. In such memory allocation, while the size of the resource value save area is dynamically changed as described above, the size of the resource value save area is increased to accommodate resource values of a resource group newly used by an active task in the resource group monopolizing task switching process. In this event, it is preferred that the resource value save area is secured in a direction opposite from the direction in which data is stored in a stack by the task, thereby enabling further effective use of the memory.

When the resource value save area and a stack used by a task are secured in one common memory block, it is desirable to prevent overlapping of the resource value save area and the area used for a stack. To avoid overlapping of the resource value save area and the area used for a stack, memory allocation may be such that, when the size of the resource value save area is dynamically changed, occurrence of overlapping of the resource value save area with the area used as a stack is checked, and that, when the size of the area used as a stack by a task is dynamically changed, occurrence of overlapping of the area used as a stack with the resource value save area is checked.

If the data processing apparatus of at least preferred embodiments of the present invention has a cache memory, it is preferable to separate resources into resource groups in such a manner that the size of the resource value save area corresponding to each resource group is an integer multiple of the cache line size of the cache memory. If the size of the resource value save area corresponding to each resource group is an integer multiple of the cache line size of the cache memory, accessing to the memory can be performed more efficiently.

If the hardware includes a cache memory, and if resource value save areas are secured on the cache memory, it is preferred that the starting address of each resource value save area is set at a cache line boundary of the cache memory. If the starting address of each resource value save area corresponds to a cache line boundary of the cache memory, accessing to the memory can be performed more efficiently.

4. Embodiments of the Invention

Embodiments of the present invention will now be described in detail. An example of the task switching method of at least preferred embodiments of the present invention realized by a process based on an operating system with an existing processor will first be described as a first embodiment of the present invention, and an example of task switching using a novel data processor to which the present invention has been applied will thereafter be described as a second embodiment of the present invention.

4-1 First Embodiment

A case in which the task switching method of the present invention has been realized mainly by a process based on an operating system with conventional practical hardware will first be described as a first embodiment of the present invention.

The task switching method described below is mainly expressed as a process based on an operating system, which may have any configuration excepting a module for realizing task switching and, therefore, may have the same configuration as the conventional operating systems.

For ease of explanation in the following description of the task switching method, it is assumed here that the operating system for executing a task switching process and so on performs processing by using registers for the operating system only and does not destroy values in registers used by tasks. However, the present invention can also be applied to a process in which an operating system and tasks use the same registers. In a case where an operating system and tasks use the same registers, saving and reading of values in the registers may be performed by suitable timing according to whether each register is used by the operating system or the task.

4-1-1 Hardware Configuration

Hardware used in this embodiment will first be described. The hardware used in this embodiment is not a novel one but one already put to practical use.

The hardware used in this embodiment includes a central processing unit (CPU) and a floating-point arithmetic unit for executing instructions of operations such as floating-point operations at a high speed. The central processing unit has a cache memory having a cache line size of 16 bytes.

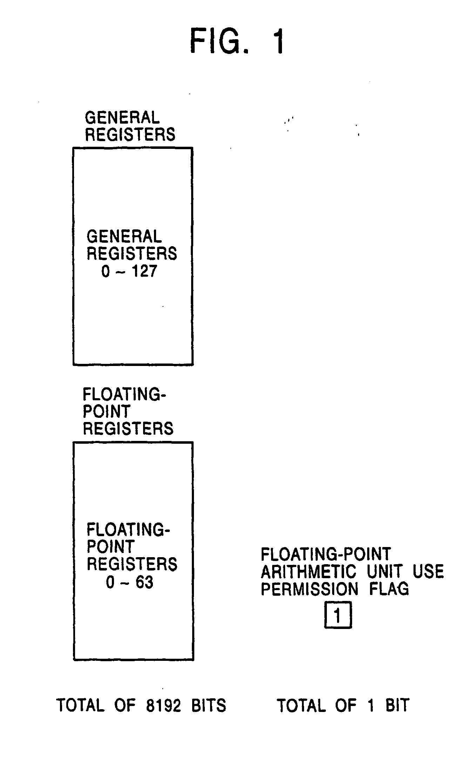

As shown in Fig. 1, this hardware has, as resources usable for tasks, registers for the central processing unit (hereinafter referred to as general registers) and registers for the floating-point arithmetic unit (hereinafter referred to as floating-point registers).

The registers for the central processing units are general registers 0 to 127. Each general register has a capacity of 32 bits. The registers for the floating-point arithmetic unit are floating-point registers 0 to 63. Each floating-point register has a capacity of 64 bits. This hardware has a total capacity of 8192 bits (= 1024 bytes), which is the sum of capacities of the general registers and floating-point registers.

This hardware also has a 1-bit register in which is stored a use permission flag for indication as to whether the floating-point arithmetic unit is usable or unusable (hereinafter referred to as a floating-point arithmetic unit use permission flag).

4-1-2 Program Specifications

In this embodiment, a program executed by the hardware is specified as described below. When a functional block call or return instruction, such as a subroutine call, an instruction for a return from a subroutine or a system call (these sorts of instructions hereinafter referred to collectively as "functional block transition instruction" for simplification), is executed, the general registers 0 to 63 and the floating-point registers 0 to 31 are used as work registers, and the values thereof can be changed during processing with a called functional block. On the other hand, it is necessary that, when the process of the program is advanced by finishing the processing with the functional block, the general registers 64 to 127 and the floating-point registers 32 to 63 be holding the values held before the call of the functional block.

A demand for a task switch from an active task to the operating system is made by using a functional block transition instruction.

To enable the process to allow interrupts generated at arbitrary times, it is necessary that, following interrupt processing, the main process be restarted after restoring the values of all the general registers and the floating-point registers to the values held immediately before the interrupt.

4-1-3 Outline of Operating System and Data Structure

An outline of the operating system and the structure of data handled by the operating system will next be described.

The operating system used in this embodiment has a multitasking function. That is, in this operating system, resource values representing the statuses of resources used by tasks (i.e., the values of the general registers and the floating-point registers) are saved in resource value save areas respectively prepared for the tasks, and the resource values of the resources used by one of the tasks when the task is executed are read out from the resource value save area, thereby enabling a plurality of tasks to be executed in parallel with each other while ensuring independence of each task.

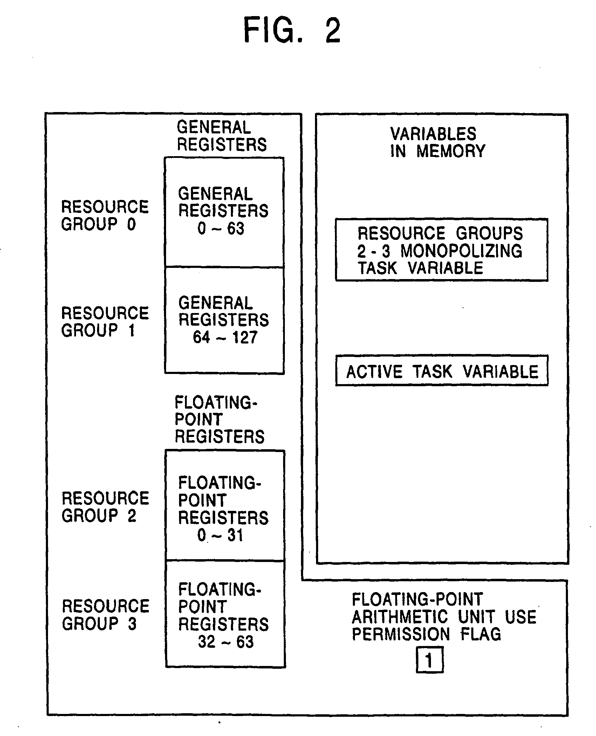

At least preferred embodiments of the present invention are characterized in that, to realize such a multitasking function, resources usable by tasks are controlled by being separated into a plurality of resource groups. In this embodiment, the general registers and the floating-point registers, which are resources usable by tasks through the operating system, are controlled by being separated into four resource groups: a resource group 0, a resource group 1, a resource group 2, and a resource group 3, as shown in Fig. 2.

The resource group 0 is a group of general registers with no need to hold, at the time of task switching by a functional block transition instruction, the values held before the functional block transition instruction is issued. That is, the general registers 0 to 63 belong to the resource group 0. The resource group 1 is a group of general registers with a need to hold, at the time of task switching by a functional block transition instruction, the values held before the functional block transition instruction is issued. That is, the general registers 64 to 127 belong to the resource group 0. The resource group 2 is a group of floating-point registers with no need to hold, at the time of task switching by a functional block transition instruction, the values held before the functional block transition instruction is issued. That is, the floating-point registers 0 to 31 belong to the resource group 2. The resource group 3 is a group of floating-point registers with a need to hold, at the time of task switching by a functional block transition instruction, the values held before the functional block transition instruction is issued. That is, the floating-point registers 32 to 63 belong to the resource group 3.

In the operating system, a resource groups 2-3 monopolizing task variable and an active task variable are defined as variables in a memory, as shown in Fig. 2. The resource groups 2-3 monopolizing task variable is set to a value designating a task which is monopolizing the resource groups 2 and 3. That it, the resource values of the resource groups 2 and 3 are valid with respect to a task designated by the resource group 2-3 monopolizing task variable. The active task variable is set to a value designating a task which is presently being executed. That is, in this embodiment, a task which is being executed can be identified by referring to the value of the active task variable.

In the operating system, a floating-point arithmetic unit use permission flag provided in the hardware is used as a resource group use permission flag for indication as to whether use of the resources which belong to the resource groups 2 and 3 is permitted. More specifically, if an active task can use the resources which belong to the resource groups 2 and 3, the floating-point arithmetic unit use permission flag is set to the value "TRUE". If an active task is not to be permitted to use the resources which belong to the resource groups 2 and 3, the floating-point arithmetic unit use permission flag is set to the value "FALSE".

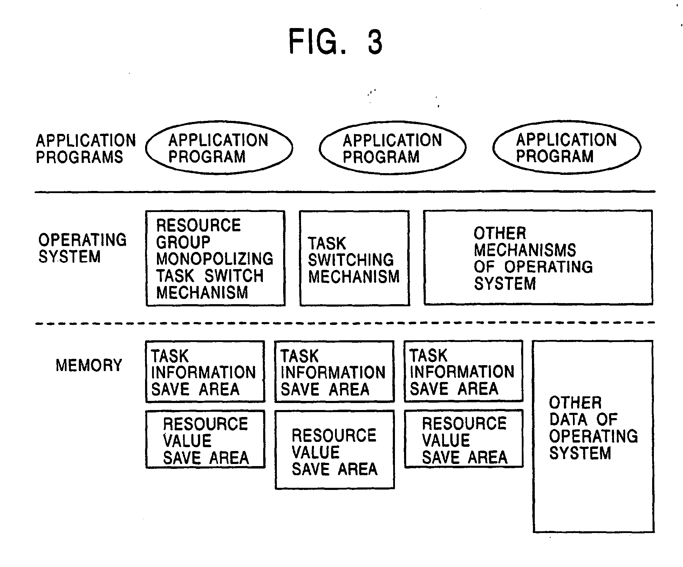

As shown in Fig. 3, to execute a plurality of tasks in parallel with each other, the operating system maintains, in a memory, for each task, a task information save area for saving task information and a resource value save area for saving resource values indicating the status of some of the resources used in execution of the task.

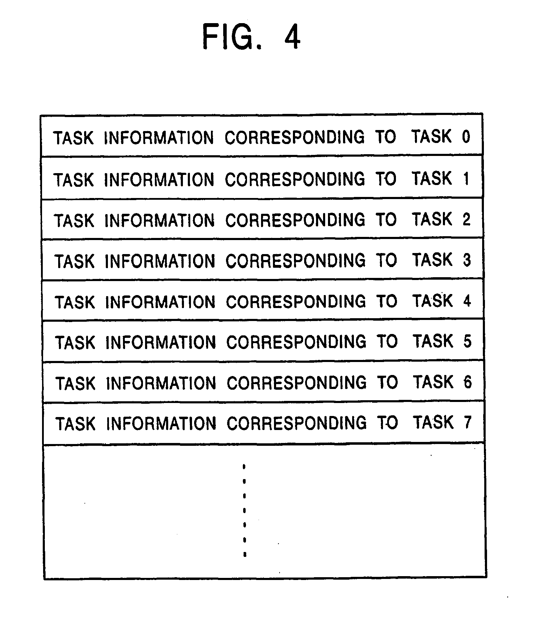

One set of information items corresponding to one task is stored as task information in each task information save area. Sets of task information items corresponding to tasks are collectively saved in array in the memory according to numbering of the tasks, as shown in Fig. 4. Each information set can be referred to by using the corresponding suffix in the array. That is, each task information set is saved in the memory as an array element, and the area in which each array element is saved corresponds to the task information save area. If task information sets are saved in array in the memory in this manner, the memory can be effectively used and each task information set can be accessed in a short time.

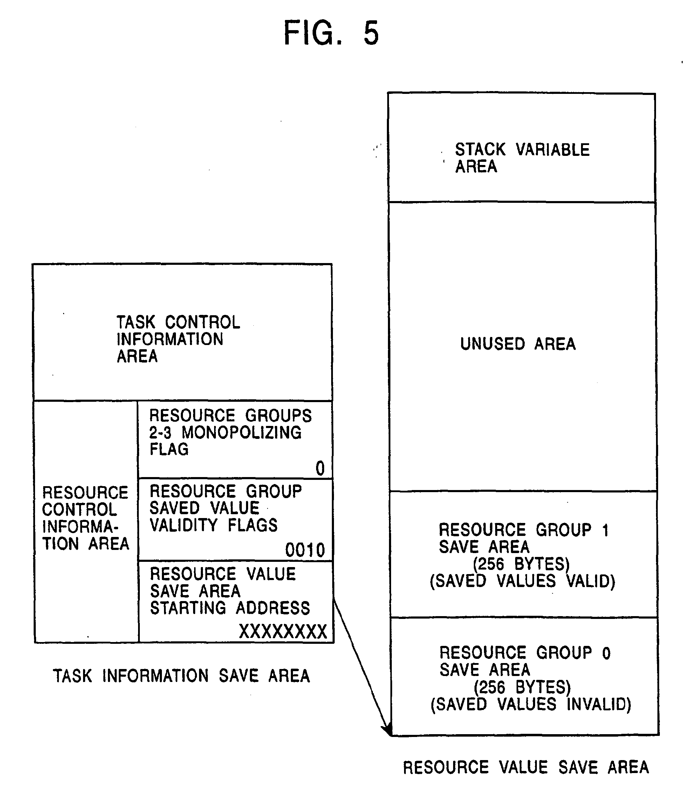

Each task information save area includes a task control information area and a resource control information area, as shown in Fig. 5. The task control information area is an area in which task control information required by the operating system to control a task is saved. Task control information saved in the task control information area is not a feature of the present invention. It may be the same as that used in the conventional systems and will not be described in detail.

The resource control information area is an area in which resource control information necessary for controlling some of the resources used by a task is saved, and which has not been provided in the conventional systems. In the resource control information area are saved a resource groups 2-3 monopolization flag, resource group saved value validity flags, and a resource value save area starting address.

The resource groups 2-3 monopolization flag in these resource control information items is a flag for indication as to whether the resource groups 2 and 3 are monopolized. When a task is monopolizing the resource groups 2 and 3, the resource groups 2-3 monopolization flag in the task information corresponding to the task is set to the value "TRUE". When the task is not monopolizing the resource groups 2 and 3, the resource groups 2-3 monopolization flag in the task information corresponding to the task is set to the value "FALSE".

That is, if the resource groups 2-3 monopolization flag in the task information corresponding to a task is "TRUE", the resource values of the resource groups 2 and 3 are valid with respect to the task. If the resource groups 2-3 monopolization flag in the task information corresponding to a task is "FALSE", the resource values of the resource groups 2 and 3 are invalid with respect to the task.

The resource group saved value validity flags in the resource control information items are flags for indication as to whether some valid values have been saved in the resource value save area. The resource group saved value validity flags are provided in one-to-one correspondence with the resource groups.

If valid values have been saved in the resource value save area as resource values of one of the resource groups, the corresponding resource group saved value validity flag is set to the value "TRUE". If no valid values have been saved, the flag is set to the value "FALSE". For example, if valid values have been saved as resource values of the resource group 2, the resource group saved value validity flag corresponding to the resource group 2 is set to the value "TRUE". If no valid values have been saved as resource values of the resource group 2, the resource group saved value validity flag corresponding to the resource group 2 is set to the value "FALSE".

When execution of a task is completed, saving of resource values in the resource value save area is not performed and the values of all the resource group saved value validity flags in the task information corresponding to the task are set to the value "FALSE", thereby avoiding saving of unnecessary resource values.

A value designating the starting address of each resource value save area in the memory is set as the above-mentioned resource value save area starting address in resource control information. Conventionally, a task information save area and a resource value save area are provided as a set of adjacent areas in a memory, as shown in Fig. 20. In contrast, in this embodiment of the present invention, each task information save area and the corresponding resource value save area are maintained separately from each other in the memory, as shown in Figs. 3 and 5. In this embodiment, therefore, the resource value save area starting address is saved as resource control information for access to each resource value save area.

As mentioned above, the operating system maintains a resource value save area for each task. In each resource value save area, the resource values indicating the status of some of the resources used for execution of the task corresponding to the resource value save area are saved. In this embodiment, however, the resource values of all the resources are not always saved in each resource value save area, and the resource values of necessary ones of the resources, collectively selected as some of the resource groups, are saved in each resource value save area.

That is, if it is sufficient to save, for example, only the resource values of the resource groups 0 and 1 for a task, only the resource values of the resource groups 0 and 1 are saved in the resource value save area corresponding to the task, as shown in Fig. 5. In other words, with respect to a task not using, for example, the floating-point arithmetic unit, there is no need for resource value save area for the resource groups 2 and 3.

In the conventional task switching method, the resource values of all resources are saved in the resource value save area for each of executable tasks, so that the amount of memory for all the general registers and floating-point registers, i.e., an amount of 1024 bytes, has been required as the resource value save area for one task. On the other hand, in this embodiment, resources are controlled by being separated into resource groups, and only the resource values of the resource groups to which some of the resources the values of which are to be saved belongs are stored in each resource value save area. With respect to tasks not using, for example, the floating-point arithmetic unit, there is no need for the resource value save area corresponding to the floating-point registers. Consequently, an amount of memory of 512 bytes (i.e., the amount of memory corresponding to the floating-point registers) per task can be saved in comparison with the conventional task switching method.

In this embodiment, as described above, resources are controlled by being separated into resource groups, and only the resource values of the resource groups to which some of the resources the values of which are to be saved belongs are stored in each resource value save area. Therefore, the amount of data to be saved in the memory when a task switch is made can be effectively reduced, and the number of memory accessing events or the amount of data transferred by accessing the memory at the time of task switching can be effectively reduced.

When the resource values of some of the resources are stored in one resource value save area, the resource values of the resource group 0 are successively stored from the memory address designated by the resource value save area starting address in the resource control information. The resource values of the resource group 1 are successively stored from the memory address 256 bytes behind the memory address designated by the resource value save area starting address in the resource control information. The resource values of the resource group 2 are successively stored from the memory address 512 bytes behind the memory address designated by the resource value save area starting address in the resource control information. Finally, the resource values of the resource group 3 are successively stored from the memory address 768 bytes behind the memory address designated by the resource value save area starting address in the resource control information.

If the relationship between the relative positions of subareas for saving the resource values of the resource groups is predetermined in this manner, the resource value save area starting address may suffice as information indicating the subarea for saving the resource values of each resource group, and the need for storing the memory address of the subarea for saving the resource values of each resource group can be eliminated.

4-1-4 Outline of Task Switching Process

A task switching process performed by the above-described operating system will next be outlined.

In task switching of this embodiment, with respect to resource groups 2 and 3 controlled with the floating-point arithmetic unit use permission flag, saving of the resource values in the relating resource value save area and reading of the resource values from the relating resource value save area are not performed at the time of task switching. With respect to resource groups 2 and 3, saving and reading of the resource values are performed if necessary when a need for some of the resources which belong to resource group 2 or 3 arises.

Also with respect to resource groups 0 and 1, saving of the resource values in the relating resource value save area and reading of resource values from the relating resource value save area are not always performed. Saving and reading of the resource values may be performed only with respect to a necessary one of resource groups 0 and 1.

That is, if task switching is started by a functional block transition instruction, it is necessary to hold the resource values of resource group 1 but it is possible to change the resource values of resource group 0. In this case, therefore, only the resource values of resource group 1 are saved. On the other hand, if task switching is started by interrupt processing, it is necessary to hold the resource values of both the resource groups 0 and 1, and the resource values of both resource groups 0 and 1 are saved in the resource value save area.

To read resource values from each resource value save area, the resource group saved value validity flag is first checked to ascertain whether values have been stored in the resource value save area as valid resource values of resource group 0 or 1. Only if valid values are stored, reading of resource values from the resource value save area is performed. That is, with respect to a task to be restarted by task switching, only valid resource values are read from the resource value save area by referring to the value of the resource group saved value validity flag set when execution of the task was stopped.

As mentioned above, with respect to resource groups 2 and 3, saving of resource values in the resource value save area and reading of resource values from the resource value save area are not performed at the time of task switching. If a need for some of the resources which belong to resource group 2 or 3 has arisen, a resource group usability check is first executed. In the resource group usability check, an examination is made as to whether the task can use the resource which belongs to resource group 2 or 3, as described below in detail.

If the result of the resource group usability check is that the task can use the resource, the process of the task is continued by using the resource. If it is determined that the task cannot use the resource, a resource group monopolizing task switching process is performed. In the resource group monopolizing task switching process, the state of the system is changed so that the task can use the resource, described below in detail. After the state of the system has been changed by the resource group monopolizing task switching process to enable the task to use the resource, the process of the task is continued by using the resource.

4-1-5 Details of Task Switching Process

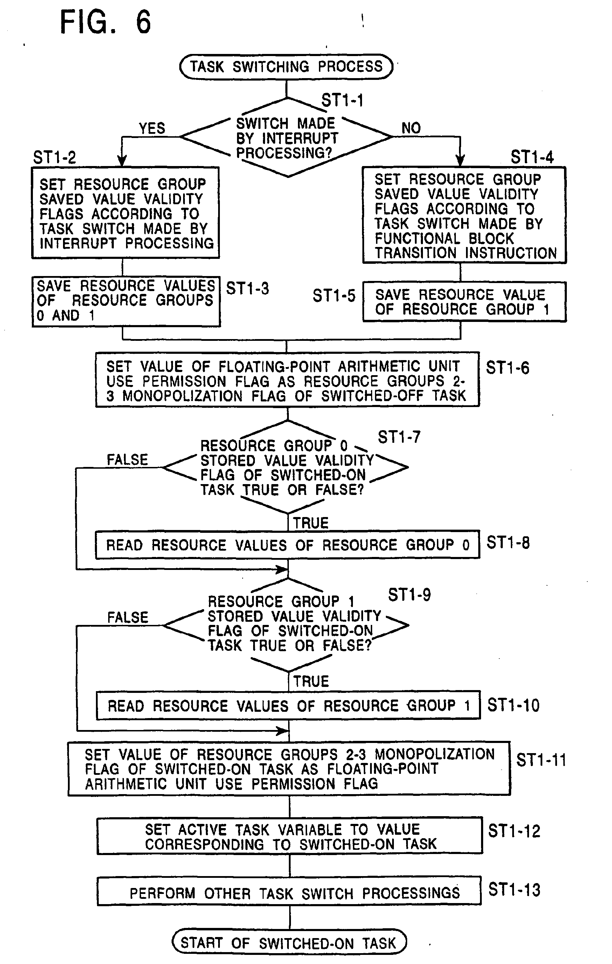

The task switching process will be described in detail with reference to the flowchart of Fig. 6. The description will be made with respect to a task switch from task A to task B.

In the process of task switching from task A to task B, it is first determined in step ST1-1 as to whether task switching is started by interrupt processing. If task switching is started by interrupt processing, the process advances to step ST1-2. If task switching is not started by interrupt processing (that is, if task switching is started by a functional block transition instruction), the process advances to step ST1-4.

In step ST1-2, setting of resource group saved value validity flags in the task information corresponding to task A is performed for task switching started by interrupt processing. More specifically, the values of the resource group saved value validity flags corresponding to resource groups 0 and 1 in the resource group saved value validity flags in the task information corresponding to task A are set to "TRUE". The values of the resource group saved value validity flags corresponding to resource groups 2 and 3 in the resource group saved value validity flags in the task information corresponding to task A are not changed.

Next, in step ST1-3, the resource values of the resource groups without the use permission flag are saved in the resource value save area corresponding to task A. More specifically, the resource values of resource groups 0 and 1 are saved in the resource value save area corresponding to task A. With respect to resource groups 2 and 3, a resource group usability check can be executed by using the floating-point arithmetic unit use permission flag, as described below. At the time of task switching, therefore, saving of the resource values of resource groups 2 and 3 is not performed. Then, after completion of the processing in step ST1-3, the process advances to step ST1-6.

On the other hand, in step ST1-4, setting of resource group saved value validity flags in the task information corresponding to task A is performed for task switching performed by a functional block transition instruction. More specifically, the value of the resource group saved value validity flag corresponding to resource group 0 is set to "FALSE", the resource group saved value validity flag corresponding to resource group 1 is set to "TRUE", and the value of the resource group saved value validity flag corresponding to resource group 2 is set to "FALSE". The value of the resource group saved value validity flag corresponding to resource group 3 is not changed.

In step ST1-5, the resource values of the resource groups without the use permission flag are saved to the resource value save area corresponding to task A. More specifically, the resource values of resource group 1 are saved in the resource value save area corresponding to task A. Although the resource groups without the use permission flag are resource groups 0 and 1, the resource values of resource group 0 are not saved in this embodiment because the resource values of resource group 0 can be changed in the case of task switching started by a functional block transition instruction. Since a resource group usability check can be executed by using the floating-point arithmetic unit use permission flag with respect to resource groups 2 and 3 as described below, saving of the resource values of resource groups 2 and 3 is not performed at the time of task switching. After completion of the processing in step ST1-5, the process advances to step ST1-6.

Step ST1-6 and other subsequent steps are common task switching started by interrupt processing and task switching started by a functional block transition instruction. First, in step ST1-6, the value of floating-point arithmetic unit use permission flag is set as the resource group 2-3 monopolization flag in the task information corresponding to task A (i.e., switched-off task).

If the resource values of resource groups 0 and 1 have been saved in the resource value save area corresponding to task B (i.e., switched-on task), they are read out by processings in steps step ST1-7 to step ST1-10. That is, while there is no need for reading the resource values of resource groups 2 and 3 at the time of task switching since a resource group usability check can be executed with respect to resource groups 2 and 3, reading of the resource values of resource groups 0 and 1 is performed at the time of task switching by referring to the resource group saved value validity flag corresponding to task B since resource group usability checking cannot be performed with respect to resource groups 0 and 1.

In more detail, in step ST1-7, the value of resource group 0 saved value validity flag in the resource group saved value validity flag in the information corresponding to task B is checked. If the value of the resource group 0 saved value validity flag is "TRUE", the process advances to step ST1-8 and the resource values of resource group 0 are read. The process then advances to step ST1-9. If the value of the resource group 0 saved value validity flag is "FALSE", the process moves to step ST1-9 without reading of the resource values of resource group 0.

In step ST1-9, the value of resource group 1 saved value validity flag in the resource group saved value validity flag in the information corresponding to task B is checked. If the value of the resource group 1 saved value validity flag is "TRUE", the process advances to step ST1-10 and the resource values of resource group 1 are read. The process then advances to step ST1-11. If the value of the resource group 1 saved value validity flag is "FALSE", the process moves to step ST1-11 without reading of the resource values of resource group 0.

In step ST1-11, the value of the resource group 2-3 monopolization flag in the task information corresponding to task B is set as the floating-point arithmetic unit use permission flag.

In step ST1-12, the active task variable is set to value corresponding to task B. The processing necessary for control of the resource groups and the processing for necessary saving and reading of the resource values at the time of task switching are completed by the above-described steps.

Finally, in step ST1-13, other task switch processings are performed. After all the task switch processings have been completed, task B is started. The processings in step ST1-13 are processings other than those for resource management and may be the same as those of the conventional operating systems. Therefore, they do not relate particularly to the essentials of the present invention and will not be described specially in detail.

Processing similar to that in step ST1-12 is usually performed to control executed tasks in task switching processes with the conventional operating systems. However, the active task variable is a variable used in the process specific to the present invention, and the processing for setting the active task variable to the value corresponding to task B is therefore shown as a step independent of step ST1-13.

According to the conventional task switching method, if task switching is performed in a data processor having a configuration such as shown in Fig. 1, there is a need for saving and reading of values with respect to all general registers and floating-point registers, i.e., saving of resource values of 1024 bytes in a resource value save area and reading of resource values of 1024 bytes from the resource value save area. In contrast, in the above-described task switching process, resources are controlled by being separated into four resource groups 0, 1, 2, and 3, and saving to the resource value save area and reading from the save area are performed with respect to only necessary ones of the resource groups, so that the number of memory accessing events or the amount of data transferred by accessing the memory at the time of task switching is markedly small.

That is, in the above-described task switching process, if task switching is started by interrupt processing, saving of resource value in the resource value save area corresponding to a switched-off task (i.e., task A) may be performed with respect to resource groups 0 and 1 only. In this case, only a space of 512 bytes suffices as the memory area for saving resource values. If task switching is started by a functional block transition instruction, saving of resource values in the resource value save area corresponding to a switched-off task (i.e., task A) may be performed with respect to resource group 1. In this case, only a space of 256 bytes suffices as the memory area for saving resource values.

In the above-described task switching process, the maximum amount of resource value data read from the resource value save area corresponds to the case where each of the resource group 0 saved value validity flag and the resource group 1 saved value validity flag in the resource group saved value validity flags in the task information corresponding to the switched-on task (i.e., task B) is "TRUE". Even in this case, reading of resource value from the resource value save area corresponding to the switched-on task may be performed with respect to resource groups 0 and 1 only. That is, the amount of resource value data read from the resource value save area in the above-described task switching process is only 512 bytes at the maximum.

If, in the above-described task switching process, the resource group 0 saved value validity flag and the resource group 1 saved value validity flag in the resource group saved value validity flags in the task information corresponding to the switched-on task (i.e., task B) are "FALSE" and "TRUE", respectively, reading of resource values from the resource value save area corresponding to the switched-on task may be performed with respect to resource group 1 only. In this case, the amount of resource value data read from the resource value save area is only 256 bytes.

The case where each of the resource group 0 saved value validity flag and the resource group 1 saved value validity flag in the resource group saved value validity flags in the task information corresponding to the switched-on task (i.e., task B) is "TRUE" is a case where the switched-on task has been stopped by task switching started by interrupt processing. The case where the resource group 0 saved value validity flag and the resource group 1 saved value validity flag in the resource group saved value validity flags in the task information corresponding to the switched-on task (i.e., task B) are "FALSE" and "TRUE", respectively, is a case where the switched-on task has been stopped by task switching started by a functional block transition instruction.

4-1-6 Resource Group Usability Check

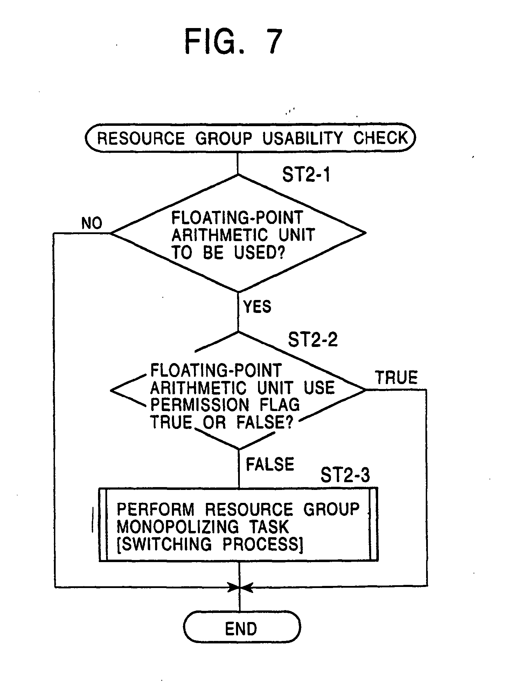

Resource group usability check will be described in detail with reference to the flowchart of Fig. 7.

A resource group usability check is performed in parallel with execution of an instruction with the central processing unit. That is, a resource group usability check is executed each time an instruction for a task is executed.

First, in step ST2-1 of the process for a resource group usability check, a determination is made as to whether an instruction to be executed requires use of the floating-point arithmetic unit. If the instruction requires use of the floating-point arithmetic unit, the process advances to step ST2-2. If the instruction does not require use of the floating-point arithmetic unit, the resource group usability check is immediately finished and the instruction for the task is executed without using the floating-point arithmetic unit.

In step ST2-2, the value of the floating-point arithmetic unit use permission flag is checked. If the value of the floating-point arithmetic unit use permission flag is "FALSE", the process advances to step ST2-3. If the value of the floating-point arithmetic unit use permission flag is "TRUE", the conditions for use of the floating-point arithmetic unit by the task have already been satisfied. The resource group usability check is then finished and the instruction for the task is executed by using the floating-point arithmetic unit.

Since the process advances to step ST2-3 when the conditions for use of the floating-point arithmetic unit by the task are not satisfied, the resource group monopolizing task switching process is started in step ST2-3 to enable the task to use the floating-point arithmetic unit, as described below in detail. When the resource group monopolizing task switching process is completed to enable the task to use the floating-point arithmetic unit, the resource group usability check is finished and the instruction for the task using the floating-point arithmetic unit is executed. Specifically, the process may be such that, if, when an instruction involving use of the floating-point arithmetic unit is executed (ST2-1), the floating-point arithmetic unit use permission flag is "FALSE" (ST2-2), an interrupt is caused and the process advances to resource group monopolizing task switching process (ST2-3).

The above-described resource group usability check is performed in parallel with execution of an instruction with the central processing unit, and the processing time is not increased by the resource group usability check if the resource group monopolizing task switching process is not started. That is, with respect to a task not using the floating-point arithmetic unit, the resource group monopolizing task switching process is not started and there is no influence of the resource group usability check upon the task execution speed. Tasks not using the floating-point arithmetic unit, therefore, can be executed with the effect of reducing the processing time and the resource value save area by avoiding saving and reading resource values relating to the floating-point arithmetic unit, without making any sacrifice.

On the other hand, with a task using the floating-point arithmetic unit, there is a possibility of the resource group monopolizing task switching process being started. If the resource group monopolizing task switching process is started, the total processing load is increased by an amount corresponding to this process in comparison with the conventional art.

In this embodiment, however, saving in the resource value save area and reading from the resource value save area of the floating-point register values (i.e., the resource values of the resource groups 2 and 3) are not performed at the time of switching to a task not using the floating-point arithmetic unit. The total processing load is reduced by the corresponding amount in comparison with the conventional art. For example, a situation may be taken into consideration in which, during the time period from a moment at which a task using the floating-point arithmetic unit is stopped to a moment at which execution of this task is restarted, no other task uses the floating-point arithmetic unit, and the values of the floating-point arithmetic unit registers are maintained during the time period according to at least preferred embodiments of the present invention. Therefore, processings required for or accompanying updating of the floating-point register values can be effectively reduced in comparison with the conventional task switching method in which all resource values are updated each time task switching is performed.

As long as the frequency of task switching between tasks each using floating-point arithmetic unit is not excessively high, the effect of reducing the processing load by eliminating processings required for or accompanying updating of the floating-point register values advantageously prevails over the effect of increasing the processing load with the resource group monopolizing task switching process. Consequently, even if tasks existing as switching objects include tasks using floating-point arithmetic unit, the processing load in this embodiment is much smaller than that in the conventional art as long as the frequency of task switching between the tasks using floating-point arithmetic unit is not excessively high. 4-1-7 Resource Group Monopolizing Task Switching Process

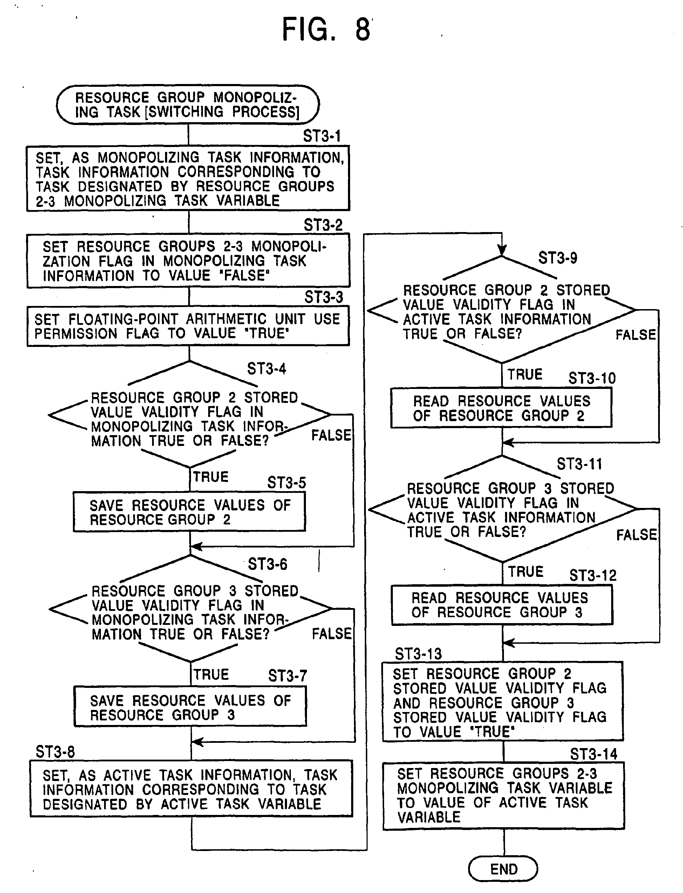

The resource group monopolizing task switching process will be described in detail with reference to the flowchart of Fig. 8.

The resource group monopolizing task switching process is executed in the case where, when a task is about to use a resource (the floating-point registers in this embodiment), a resource group usability check is executed to determine that the resource is unusable, as mentioned above. That is, if a resource is unusable when a task is about to use the resource, the relating conditions are changed by the resource group monopolizing task switching process so that the resource becomes usable by the task. The resource group monopolizing task switching process comprises two main processings, i.e., processing for changing a right to use of some resource group, and processing for saving and reading of the resource values of the resource group.

This resource group monopolizing task switching process is performed as shown in the flowchart of Fig. 8. First, in step ST3-1, the task information corresponding to the task designated by the resource groups 2-3 monopolizing task variable (i.e., the task information about the task presently monopolizing the floating-point arithmetic unit) is identified as monopolizing task information.

In step ST3-2, the resource groups 2-3 monopolization flag in the monopolizing task information is set to the value "FALSE".

In step ST3-3, the floating-point arithmetic unit use permission flag is set to the value "TRUE", thereby permitting a presently executed task to use the floating-point arithmetic unit.

If it is necessary to hold the resource values of resource groups 2 and 3, the resource values are saved in the resource value save area corresponding to the task presently monopolizing the resource groups 2 and 3 by processings in steps ST3-4 to ST3-7.

More specifically, in step ST3-4, the resource group 2 saved value validity flag in the resource group saved value validity flags of the monopolizing task information is checked. If the value of the resource group 2 saved value validity flag is "TRUE", the process advances to step ST3-5 and the resource values of resource group 2 are saved in the resource value save area corresponding to the monopolizing task information. The process then advances to step ST3-6. If the value of resource group 2 saved value validity flag is "FALSE", the process moves to step ST3-6 without saving the resource values of resource group 2 in the resource value save area.

In step ST3-6, the resource group 3 saved value validity flag in the resource group saved value validity flags of the monopolizing task information is checked. If the value of the resource group 3 saved value validity flag is "TRUE", the process advances to step ST3-7 and the resource values of resource group 3 are saved in the resource value save area corresponding to the monopolizing task information. The process then advances to step ST3-8. If the value of resource group 3 saved value validity flag is "FALSE", the process moves to step ST3-8 without saving the resource values of resource group 3 in the resource value save area.

In step ST3-8, the task information corresponding to the task designated by the active task variable (i.e., the task information corresponding to the task which is presently being executed) is identified as active task information.

Next, if valid values have been saved as resource group 2 and/or 3 resource values in the resource value save area corresponding to the active task, the saved values are read by processings in steps ST3-9 to ST3-12.

More specifically, in step ST3-9, the resource group 2 saved value validity flag in the resource group saved value validity flags of the active task information is checked. If the value of the resource group 2 saved value validity flag is "TRUE", the process advances to step ST3-10 and the resource values of resource group 2 are read from the resource value save area corresponding to the active task information. The process then advances to step ST3-11. If the value of resource group 2 saved value validity flag is "FALSE", the process moves to step ST3-11 without reading the resource values of resource group 2 from the resource value save area.

In step ST3-11, the resource group 3 saved value validity flag in the resource group saved value validity flags of the active task information is checked. If the value of the resource group 3 saved value validity flag is "TRUE", the process advances to step ST3-12 and the resource values of resource group 3 are read from the resource value save area corresponding to the active task information. The process then advances to step ST3-13. If the value of resource group 3 saved value validity flag is "FALSE", the process moves to step ST3-13 without reading the resource values of resource group 3 from the resource value save area.

In step ST3-13, each of the resource group 2 saved value validity flag and the resource group 3 saved value validity flag in the resource group saved value validity flags in the active task information is set to the value "TRUE". Even though the use of the resource groups 2 and 3 is permitted with respect to the active task, the active task does not necessarily use both the resource groups 2 and 3. Accordingly, even though the use of the resource groups 2 and 3 is permitted with respect to the active task, it does not necessarily follow that there is a need to hold both the resource values of the resource group 2 and the resource values of the resource group 3. In this embodiment, however, no means is provided for determination as to whether a task has actually used some of the resources which belong to the resource group 2 or 3. In this embodiment, it is assumed that there is a need to hold all the resource values of resources which have been rendered usable. Accordingly, in step ST3-13, each of the values of the resource group 2 save validity flag and the resource group 3 save validity flag is set to "TRUE".

Finally, in step ST3-14, the resource groups 2-3 monopolizing task variable is set to the value of the active task variable.

The resource group monopolizing task switching process is thus completed, thereby enabling the active task to use the resource groups 2 and 3 (i.e., the floating-point registers).

4-2 Second Embodiment

Task switching performed by using a novel data processing apparatus to which the present invention has been applied will now be described as a second embodiment of the present invention.

In this embodiment, registers for holding necessary information for task switching are provided in the form of hardware, and a mechanism for switching tasks by using the registers is also provided as functions of hardware corresponding to major portions of processings required for or accompanying task switching.

If such a task switching mechanism is provided as functions of hardware, the amount of software processing performed by the operating system can be effectively reduced and task switching can be efficiently performed at a higher speed in comparison with the case of performing task switching only by the operation of the operating system.

4-2-1 Hardware Configuration

Hardware used in this embodiment will first be described. The hardware of this embodiment is novel hardware to which the present invention has been applied.

The hardware used in this embodiment includes a central processing unit (CPU) and a floating-point arithmetic unit for executing instructions of operations such as floating-point operations at a high speed. The central processing unit has a cache memory having a cache line size of 16 bytes.

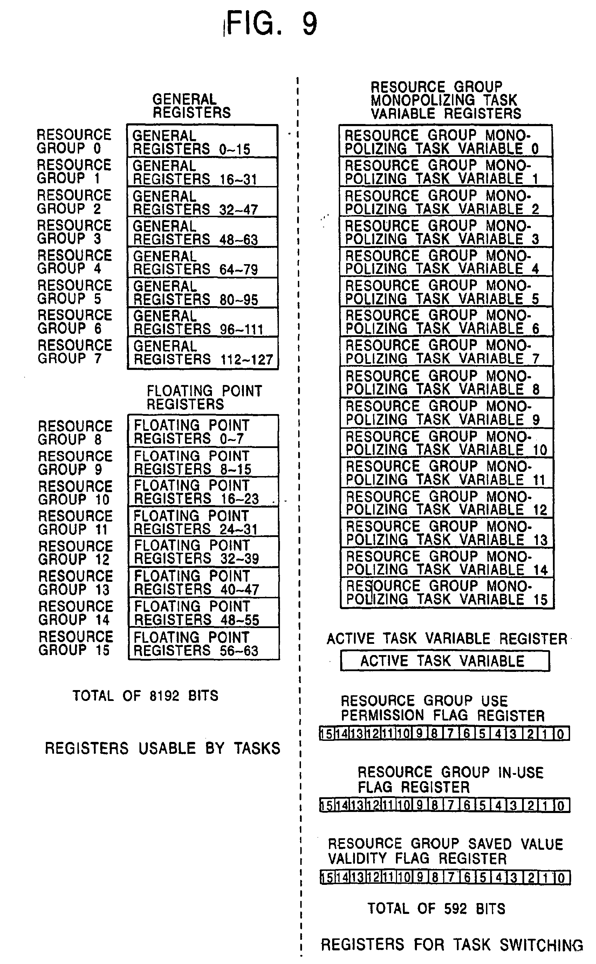

As shown in Fig. 9, this hardware has, as resources usable for tasks, registers for the central processing unit (hereinafter referred to as general registers) and registers for the floating-point arithmetic unit (hereinafter referred to as floating-point registers). The registers for the central processing units are general registers 0 to 127. Each general register has a capacity of 32 bits. The registers for the floating-point arithmetic unit are floating-point registers 0 to 63. Each floating-point register has a capacity of 64 bits. This hardware has a total capacity of 8192 bits (= 1024 bytes), which is the sum of capacities of the general registers and floating-point registers.

In this embodiment, a program executed by the hardware is specified as described below, as is that in the above-described first embodiment of the present invention. When a functional block transition instruction is executed, the general registers 0 to 63 and the floating-point registers 0 to 31 are used as work registers, and the values thereof can be changed during processing with a called functional block. On the other hand, it is necessary that, when the process of the program is advanced by finishing the processing with the functional block, the general registers 64 to 127 and the floating-point registers 32 to 63 be holding the values held before the call of the functional block.

A demand for a task switch from an active task to the operating system is made by using a functional block transition instruction.

To enable the process to allow interrupts generated at arbitrary times, it is necessary that, following interrupt processing, the main process be restarted after restoring the values of all the general registers and the floating-point registers to the values held immediately before the interrupt.

At least preferred embodiments of the present invention are characterized in that the general registers and the floating-point registers, which are resources usable by tasks, are controlled by being separated into sixteen resource groups, as shown in Fig. 9.

That is, this task switching apparatus controls the general registers and the floating-point registers, which are resources usable by tasks, by separating the tasks into the following sixteen resource groups.

Resource group 0: general registers 0 to 15
Resource group 1: general registers 16 to 31
Resource group 2: general registers 32 to 47
Resource group 3: general registers 48 to 63
Resource group 4: general registers 64 to 79
Resource group 5: general registers 80 to 95
Resource group 6: general registers 96 to 111
Resource group 7: general registers 112 to 127
Resource group 8: floating-point registers 0 to 7
Resource group 9: floating-point registers 8 to 15
Resource group 10: floating-point registers 16 to 23
Resource group 11: floating-point registers 24 to 31
Resource group 12: floating-point registers 32 to 39
Resource group 13: floating-point registers 40 to 47
Resource group 14: floating-point registers 48 to 55
Resource group 15: floating-point registers 56 to 63

The resource groups 0, 1, 2, and 3 are groups of general registers with no need to hold, at the time of task switching by a functional block transition instruction, the values held before the functional block transition instruction is issued. The resource groups 4, 5, 6, and 7 are groups of general registers with a need to hold, at the time of task switching by a functional block transition instruction, the values held before the functional block transition instruction is issued. The resource groups 8, 9, 10, and 11 are groups of floating-point registers with no need to hold, at the time of task switching by a functional block transition instruction, the values held before the functional block transition instruction is issued. The resource groups 12, 13, 14, and 15 are groups of floating-point registers with a need to hold, at the time of task switching by a functional block transition instruction, the values held before the functional block transition instruction is issued.

As shown in Fig. 9, the hardware of this task switching apparatus comprises registers for holding information necessary for task switching: resource group monopolizing task variable registers, an active task variable register, a resource group use permission flag register, a resource group in-use flag register, and a resource group saved value validity flag register. These registers, without their equals in the conventional hardware, are uniquely provided in the hardware shown in Fig. 9 to which the present invention has been applied.

The resource group monopolizing task variable registers are 32-bit unsigned integer registers provided in one-to-one correspondence with the sixteen resource groups. A resource group monopolizing task variable is set in each of the resource group monopolizing task variable registers to designate, if there is a task monopolizing the corresponding resource group, the starting address of an area in which task information corresponding to the task is stored. For example, if there is a task monopolizing the resource group 10, the starting address of an area in which task information corresponding to the task is stored is set as resource group monopolizing task variable 10.

The active task variable register is a 32-bit unsigned integer register in which an active task variable is stored. The active task variable is a variable designating the starting address of an area in which task information corresponding to a task which is presently being executed is stored. That is, when a task is being executed, the starting address of an area in which task information corresponding to the executed task is stored is set as an active task variable in the active task variable register.

The resource group use permission flag register is a 16-bit unsigned integer register in which sixteen resource group use permission flags are stored. Sixteen bits constituting the resource group use permission flag register are respectively used as sixteen independent resource group use permission flags corresponding to the sixteen resource groups formed as described above. Each of the resource group use permission flags is used for indication as to whether use of the corresponding resource group is permitted.

In each resource group use permission flag, the value "TRUE" is set if the corresponding resource group is usable by an active task, and the value "FALSE" is set if the resource group is unusable. For example, if the resource group 2 is usable, the value "TRUE" is set in the resource group use permission flag corresponding to the resource group 2. If the resource group 5 is unusable, the value "FALSE" is set in the resource group use permission flag corresponding to the resource group 5.

The resource group in-use flag register is a 16-bit unsigned integer register in which sixteen resource group in-use flags are stored. Sixteen bits constituting the resource group in-use flag register are respectively used as sixteen independent resource group in-use flags corresponding to the sixteen resource groups. Each of the resource group in-use flags is used for indication as to whether there is a task presently using the corresponding resource group.

In each resource group in-use flag, the value "TRUE" is set if some task is using the corresponding resource group, and the value "FALSE" is set if no task is using the corresponding resource group. For example, if the resource group 4 is in use, the value "TRUE" is set in the resource group in-use flag corresponding to the resource group 4. If the resource group 10 is not in use, the value "FALSE" is set in the resource group in-use flag corresponding to the resource group 10.

The resource group saved value validity flag register is a 16-bit unsigned integer register in which sixteen resource group saved value validity flags are stored. Sixteen bits constituting the resource group saved value validity flag register are respectively used as sixteen independent resource group saved value validity flags corresponding to the sixteen resource groups. Each of the resource group saved value validity flags is used for indication as to whether, with respect to an active task, effective resource values of the corresponding resource group exist in the resources of the resource group or in the corresponding resource value save area.

In each resource group saved value validity flag, the value "TRUE" is set if, with respect to an active task, effective resource values of the corresponding resource group have been held by the resources of the resource group or saved in the resource value save area, and the value "FALSE" is set if no valid values have been saved. For example, if valid resource values of the resource group 6 have been saved, the value "TRUE" is set in the resource group saved value validity flag corresponding to the resource group 6. If no valid resource values of the resource group 15 have been saved, the value "FALSE" is set in the resource group saved value validity flag corresponding to the resource group 15.

The hardware is arranged so that the operating system can perform reading from or writing to at least the active task variable register, the resource group use permission flag register, the resource group in-use flag register and the resource group saved value validity flag register in the above-described registers uniquely provided in the data processing apparatus.

4-2-2 Task Information and Resource Value Save Area

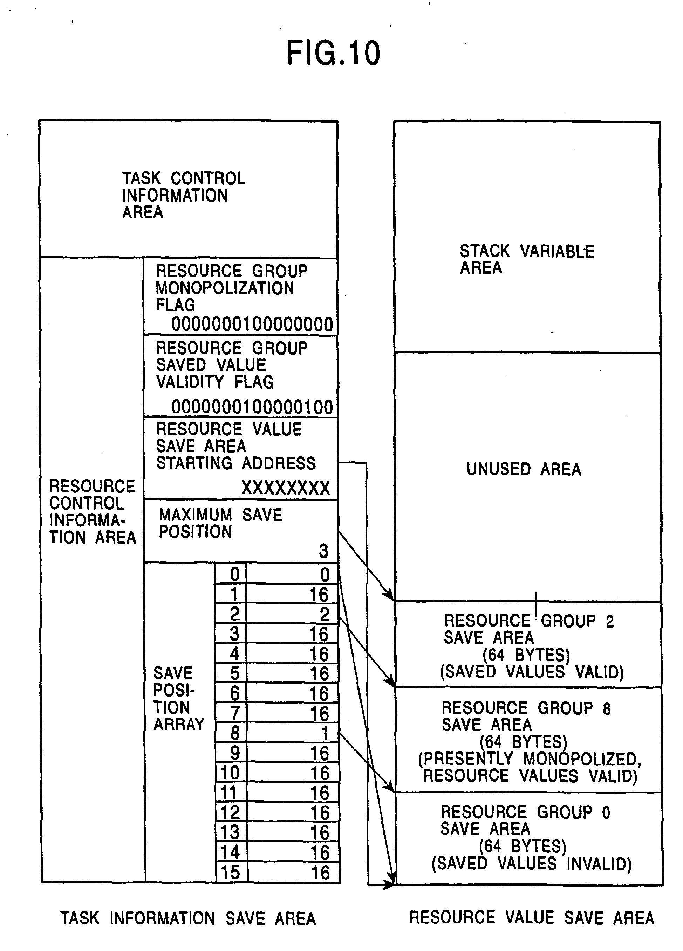

Also in this embodiment, to execute a plurality of tasks in parallel with each other, a task information save for storing information about each task and a resource value save area for saving resource values indicating the status of some of the resources used in execution of each task are provided in a memory. The task information save area and the resource value save area maintained for these purposes will be described in detail with reference to Fig. 10.

4-2-2-1 Task Information Save Area

Task information save areas are areas for saving task information. One set of information items corresponding to one task is stored as task information in each task information save area. Sets of task information items corresponding to tasks are collectively saved as an array in the memory according to numbering of the tasks, as are those in the above-described first embodiment of the invention. Each information set can be referred to by using the corresponding suffix in the array. That is, each task information set is saved in the memory as an array element, and the area in which each array element is saved corresponds to the task information save area. If task information sets are saved as an array in the memory in this manner, the memory can be effectively used and each task information set can be accessed in a short time.

Each task information save area includes a task control information area and a resource control information area, as shown in Fig. 10. The task control information area is an area in which task control information required to control a task is saved. Task control information saved in the task control information area is not a feature of the present invention. It may be the same as that used in the conventional systems and will not be described in detail.

The resource control information area is an area in which resource control information necessary for controlling some of the resources used by a task is saved, and which has not been provided in the conventional systems. In the resource control information area are saved a resource group monopolization flag, a resource group saved value validity flag, a resource value save area starting address, a maximum save position, and a save position array.

The resource group monopolization flag in resource control information is a flag for indication as to whether each of the resource group is monopolized by a task. This flag is a 16-bit flag such that their bits respectively correspond to the resource groups. That is, when a task is monopolizing one of the resource groups, the bit corresponding to the resource group monopolized by the task, in the bits of the resource group monopolization flag in the task information corresponding to the task, is set to the value "TRUE". Each of the bits corresponding to the resource groups not monopolized is set to the value "FALSE".

The resource group saved value validity flag in resource control information is a flag for indication as to whether some valid values have been saved in the resource value save area with respect to each of the resource groups. The resource group saved value validity flag is a 16-bit flag such that their bits respectively correspond to the resource groups. That is, if valid values have been saved in one resource value save area as resource values of one of the resource groups, the bit corresponding to the resource group having the valid values saved, in the bits of the resource group saved value validity flag in the task information corresponding to the resource value save area, is set to the value "TRUE". Each of the bits corresponding to the resource groups having no valid values saved in the area is set to the value "FALSE".

When execution of a task is completed, saving of resource values in the resource value save area is not performed and all the bits of the resource group saved value validity flag in the task information corresponding to the task are set to the value "FALSE", thereby avoiding saving of unnecessary resource values.

A value designating the starting address of each resource value save area in the memory is set as the above-mentioned resource value save area starting address in resource control information. Conventionally, a task information save area and a resource value save area are provided as a set of adjacent areas in a memory, as shown in Fig. 20. In contrast, in this embodiment of the present invention, each task control information area and the corresponding resource value save area are maintained separately from each other in the memory. In this embodiment, therefore, the resource value save area starting address is saved as resource control information for access to each resource value save area.

As a maximum save position in resource control information, a value indicating the number of resource groups for which subareas have been secured in the corresponding resource value save area is set. For example, in the case where, as shown in Fig. 10, subareas for saving the resource values of three resource groups have been secured in one resource value save area, "3" is set as a maximum save position in the task information corresponding to the resource value save area.

As a save position array in resource control information, values designating resource value save positions are set with respect to the resource groups. For example, as shown in Fig. 10, the resource values of the resource group 0 are saved in a first location from the starting address in one resource value save area, the resource values of the resource group 8 in a second location in the resource value save area, and the resource values of the resource group 2 in a third location in the resource value save area. In this case, the value corresponding to the resource group 0 in the save position array in the task information corresponding to the resource value save area is set to the value "0" designating the stating address or the first location in the resource value save area, the value corresponding to the resource group 8 is set to the value "1" designating the second location in the resource value save area, and the value corresponding to the resource group 2 is set to the value "2" designating the third location in the resource value save area. With respect to the resource groups having no resource values saved in the resource value save area, the value "16", which indicates that no resource values have been saved in the resource value save area, is set.

4-2-2-2 Resource Value Save Area

In each resource value save area, the resource values indicating the status of some of the resources used for execution of the task corresponding to the resource value save area are saved. However, the resource values of all the resources are not always saved in each resource value save area, and the resource values of necessary ones of the resources, collectively selected as some of the resource groups, are saved in each resource value save area.

In the conventional task switching method, the resource values of all resources are saved in the resource value save area for each of executable tasks, so that the amount of memory for all the general registers and floating-point registers, i.e., an amount of 1024 bytes, has been required as the resource value save area for one task if a data processing apparatus such as shown in Fig. 10 is employed. On the other hand, in this embodiment, resources are controlled by being separated into resource groups, and only the resource values of the resource groups to which some of the resources the values of which are to be saved belongs are stored in each resource value save area. In this embodiment, therefore, the frequency of saving resource values or the amount of saved resource values can be effectively reduced in comparison with the conventional task switching method.

In this embodiment, as described above, resources are controlled by being separated into resource groups, and only the resource values of the resource groups to which some of the resources the values of which are to be saved belong are stored in each resource value save area. Therefore, the amount of data to be saved in the memory when a task switch is made can be effectively reduced, and the memory access time required at the time of a task switch can be effectively reduced.

When the resource values of some of the resource groups are stored in one resource value save area, they are stored in unit subareas in the save area corresponding to the resource groups. At this time, the resource values of the resource groups are successively stored from the memory address designated by the resource value save area starting address in the resource control information. That is, if the resource values of, for example, the resource group 0 are to be first saved, the resource values of the resource group 0 are successively stored from the memory address designated by the resource value save area starting address in the task information. If the resource values of the resource group 8 are to be next saved, the resource values of the resource group 8 are successively stored immediately after the subarea in which the resource values of the resource group 0 are stored. If the resource values of the resource group 2 are to be next saved, the resource values of the resource group 2 are successively stored immediately after the subarea in which the resource values of the resource group 8 are stored. Fig. 10 shows the state in which the resource values of the resource groups 0, 8, and 2 are successively stored in this manner.

4-2-3 Task Switching

An example of the task switching method using hardware such as shown in Fig. 9 will now be described in detail. "Task switching method" referred to here denotes the entire process of task switching to which the present invention is applied. That is to say, the entire process comprises three processings described below: a task switching process, a resource group usability check, and a resource group monopolizing task switching process.

If hardware such as shown in Fig. 9 is employed, either a process using the resource group use permission flag or a process not using the resource group use permission flag may be performed for task switching. Therefore, a description will be given of each of a case in which task switching is performed by using the resource group use permission flag and a case in which task switching is performed without using the resource group use permission flag.

4-2-3-1 Case of Using Resource Group Use Permission Flag

Task switching performed by using hardware such as shown in Fig. 9 and by using the resource group use permission flag will first be described.

4-2-3-1-1 Operation of Operating system when Task Switching is Performed

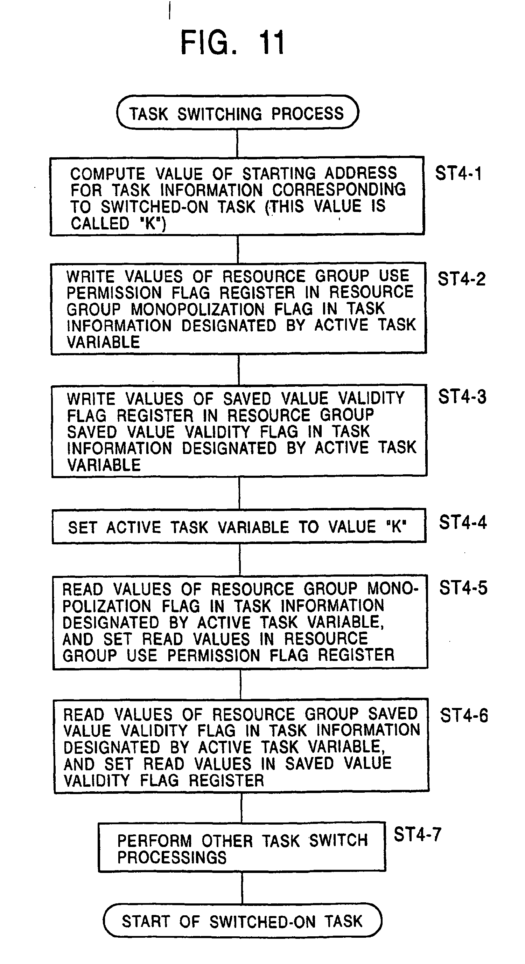

A process executed by the operating system to perform task switching will be described with reference to the flowchart of Fig. 11 with respect to a task switch from task A to task B.

For task switching from task A to task B, the operating system first computes in step ST4-1 the starting address (hereinafter referred to as starting address K) of the task information save area in which the task information corresponding to task B (i.e., the switched-on task) is stored. In the flowchart, "K" alone is put in to represent the starting address K.

In step ST4-2, the values of the resource group use permission flag register of the hardware are written in the resource group monopolization flag in the task information designated by the active task variable register (i.e., task information about task A).

In step ST4-3, the values of the saved value validity flag register are written in the resource group saved value validity flag in the task information designated by the active task variable register (i.e.,,task information about task A).

In step ST4-4, the value of the starting address K computed in step ST4-1 is set in the active task variable register.

In step ST4-5, the values of the resource group monopolization flag in the task information designated by the active task variable register (i.e., task information about task B) are read and are set in the resource group use permission flag register.

In step ST4-6, the values of the resource group saved value validity flag in the task information designated by the active task variable register (i.e., task information about task B) are read and are set in the resource group saved value validity flag register.

Finally, in step ST4-7, other task switch processings are performed. After all the task switch processings have been completed, task B is started. Processings in step ST4-7 are processings other than those for resource management, and will not be described in detail because they may be the same as those performed by the conventional operating systems and do not constitute a feature of the present invention.

As described above, the process to be performed by the operating system to control resource values at the time of task switching is only rewriting of the active task variable and the flags, and the processing load is markedly small. Moreover, since no resource values are saved or read, the number of memory accessing events or the amount of data transferred by accessing the memory is markedly small and only four bytes of data is read and written. In the conventional art, all resource values are saved and read at the time of task switching and 1024 bytes of data is read and written each time task switching is performed. That is, in this embodiment of the present invention, the amount of data transferred by accessing the memory at the time of task switching is reduced to 1/256 in comparison with the conventional art.

The effect of largely reducing the processing load at the time of task switching as described above is attributed to the provision of the mechanisms for controlling resource values in the data processing apparatus. That is, it is possible to realize efficient high-speed task switching by providing the data processing apparatus with mechanisms relating to resource value control.

4-2-3-1-2 Mechanisms Provided in Hardware

In this embodiment, only rewriting of the active task variable and flags is to be executed by the operating system at the time of task switching, and saving and reading of resource values are not performed at the time of task switching. Instead, when a task is about to use one of the resources, a check is performed to ascertain whether the task can use the resource, and processings for saving, reading, etc., of resource values are performed if necessary to enable the task to use the resource.

In this embodiment, to achieve such a process, a mechanism for performing resource group usability check, a mechanism for performing a resource group monopolizing task switching process, a mechanism for performing a resource group saving process, a mechanism for performing a resource group reading process, and a mechanism for performing a resource group save area securing process are provided as functions of hardware.

The processes executed by the mechanisms provided as functions of hardware will now be described.

4-2-3-1-2-1 Resource Group Usability Check

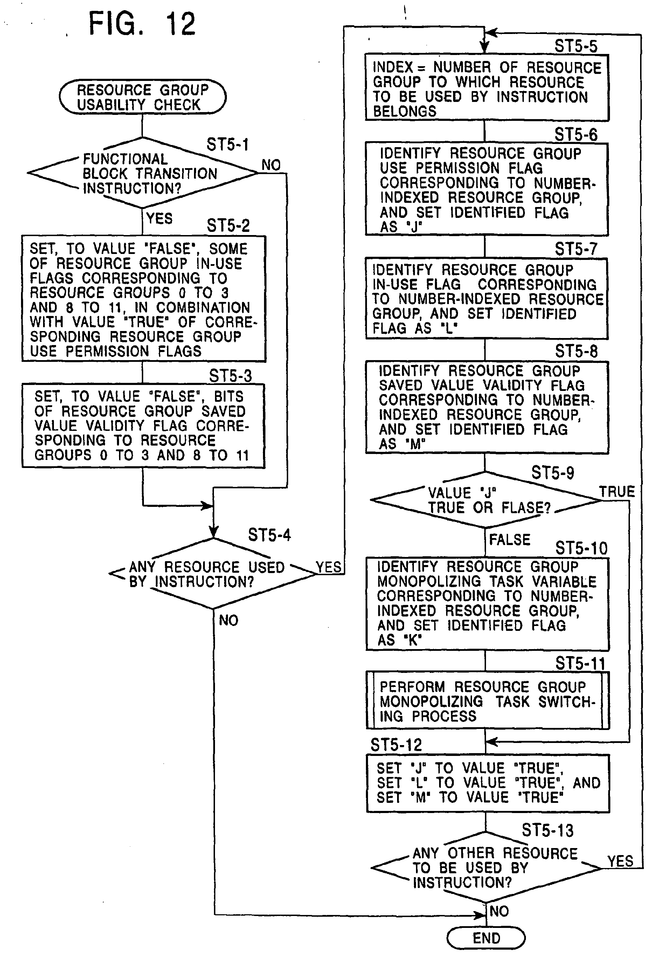

Resource group usability check will first be described in detail with reference to the flowchart of Fig. 12.

A resource group usability check is executed in parallel with execution of an instruction with the central processing unit. That is, a resource group usability check is performed each time an instruction for a task is executed.

First, in step ST5-1 of the process for a resource group usability check, a determination is made as to whether an instruction to be executed for a task is a functional block transition instruction. If the instruction to be executed is a functional block transition instruction, processings in steps ST5-2 and ST5-3 are performed and the process then advances to step ST5-4. If the instruction to be executed is not a functional block transition instruction, the process moves directly to step ST5-4.

In step ST5-2, if, with respect to some of the values of the resource group in-use flag register corresponding to resource groups 0 to 3, and 8 to 11, the corresponding value of the resource group use permission flag register is "TRUE", then the value of the resource group in-use flag register is set to "FALSE". For example, if the value of the resource group use permission flag register corresponding to resource group 2 is "TRUE", the value of the resource group in-use flag register corresponding to resource group 2 is set to "FALSE". If the values of the resource group in-use flag register are set in this manner, the resource values of some of the resource groups presently monopolized by an active task with no need to hold the resource values will not be saved in the resource value save area.

In step ST5-3, the values of the resource group saved value validity flag register corresponding to resource groups 0 to 3, and 8 to 11 are set to "FALSE". If the values of the resource group saved value validity flag register are set in this manner, reading from the resource value save area will not be performed with respect to unnecessary resource values.

As described above, if an instruction to be executed is a functional block transition instruction, processings in steps ST5-2 and ST5-3 are performed to omit saving and reading of unnecessary resource values, thereby reducing the amount of data of saved or read resource values to about 50 % in comparison with the conventional art. In step ST5-4, a determination is made as to whether the instruction to be executed requires use of some of the resources. If the instruction requires use of some of the resources, the process advances to step ST5-5. If the instruction does not require use of any one of the resources, the resource group usability check is terminated and the instruction for the task is executed.

In step ST5-5, the resource group to which the resource to be used in accordance with the execution instruction belongs is identified. In the following description, the resource group identified in step ST5-5, i.e., the resource group to which the resource to be used in execution of the instruction, is referred to as "number-indexed resource group".

In step ST5-6, the resource group use permission flag corresponding to the number-indexed resource group in the resource group use permission flags stored in the resource group use permission flag register is identified. In the following description, the resource group use permission flag identified in step ST5-6 is referred to as "resource group use permission flag J". In the flowchart. "J" alone is put in to represent the resource group use permission flag J.

In step ST5-7, the resource group in-use flag corresponding to the number-indexed resource group in the resource group in-use flags stored in the resource group in-use flag register is identified. In the following description, the resource group in-use flag identified in step ST5-7 is referred to as "resource group in-use flag L". In the flowchart, "L" alone is put in to represent the resource group in-use flag L.

In step ST5-8, the resource group saved value validity flag corresponding to the number-indexed resource group in the resource group saved value validity flags stored in the resource group saved value validity flag register is identified. In the following description, the resource group saved value validity flag identified in step ST5-8 is referred to as "resource group saved value validity flag M". In the flowchart, "M" alone is put in to represent the resource group saved value validity flag M.

In step ST5-9, the value of the resource group use permission flag J is checked. If the value of the resource group use permission flag J is "FALSE", the process advances to step ST5-10. If the value of the resource group use permission flag J is "TRUE", the process moves to step ST5-12.

In step ST5-10, the resource group monopolizing task variable corresponding to the number-indexed resource group in the resource group monopolizing task variables stored in the resource group monopolizing task variable register is identified. In the following description, the resource group monopolizing task variable identified in step ST5-10 is referred to as "resource group monopolizing task variable K". In the flowchart, "K" alone is put in to represent the resource group monopolizing task variable K.

In step ST5-11, the resource group monopolizing task switching process is performed, which will be described below in detail. After the resource group monopolizing task switching process, the process of the resource group usability check advances to step ST5-12.

In step ST5-12, the resource group use permission flag J is set to the value "TRUE", the resource group in-use flag L is set to the value "TRUE", and the resource group saved value validity flag M is set to the value "TRUE". Information that the active task is using some of the resources which belong to the number-indexed resource group is thereby recorded in the resource group in-use flag register and the resource group saved value validity flag register. After completion of the processing in step ST5-12, the process advances to step ST5-13.

In step ST5-13, a determination is made as to whether the instruction to be executed requires use of some other one of the resource groups. If the instruction requires use of another of the resource groups, the process returns to step ST5-5 and the check is performed with respect to the designated resource group. If the instruction does not require use of any one of the other resource groups, the resource group usability check is terminated and the instruction for the task is executed.

When the resource group usability check is performed as described above, the resource group monopolizing task switching process is started only if the value of the resource group usability flag J is "FALSE". If the value of the resource group usability flag J is "TRUE", the resource group monopolizing task switching process is not started. In other words, the resource group monopolizing task switching process is started in the case where, while an instruction to be executed for a task requires use of one of the resources, use of the resource is not permitted.

4-2-3-1-2-2 Resource Group Monopolizing Task Switching Process

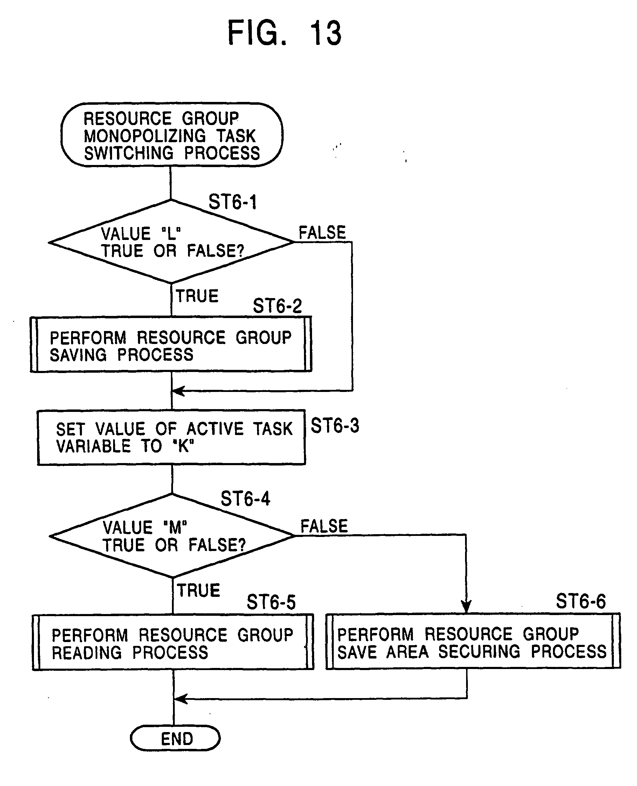

The resource group monopolizing task switching process will be described in detail with reference to the flowchart of Fig. 13. As described above, the resource group monopolizing task switching process is a process called and started in step ST5-11 in the resource group usability check.

First, in step ST6-1 of the resource group monopolizing task switching process, the value of the resource group in-use flag L is checked. If the value of the resource group in-use flag L is "TRUE", the process advances to step ST6-2. If the value of the resource group in-use flag L is "FALSE", the process moves to step ST6-3.

In step ST6-2, the resource group saving process is performed, which will be described below in detail. After the resource group saving process, the resource group monopolizing task switching process advances to step ST6-3.

In step ST6-3, the active task variable is set to the value of the resource group monopolizing task variable K.

In step ST6-4, the value of the resource group saved value validity flag M is checked. If the value of the resource group saved value validity flag M is "TRUE", the process advances to step ST6-5. If the value of the resource group saved value validity flag M is "FALSE", the process moves to step ST6-6.

In step ST6-5, the resource group reading process is performed, which will be described below in detail. After the resource group reading process, the resource group monopolizing task switching process is finished.

In step ST6-6, the resource group save area securing process is performed, which will be described below in detail. After the resource group save area securing process, the resource group monopolizing task switching process is finished.

4-2-3-1-2-3 Resource Group Reading Process

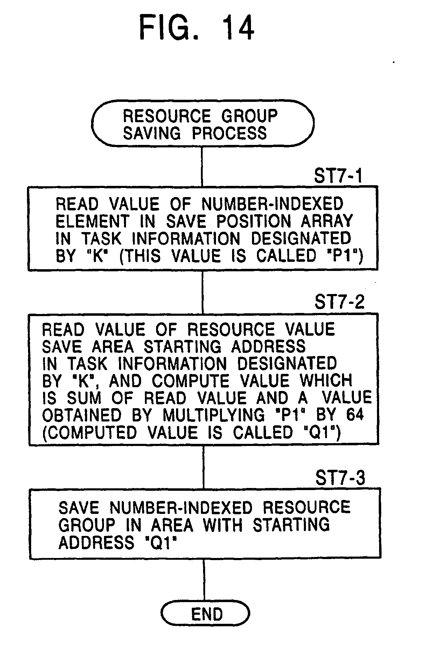

The resource group reading process will be described in detail with reference to the flowchart of Fig. 14. As described above, the resource group reading process is a process called and started in step ST6-2 in the resource group monopolizing task switching process.

First, in step ST7-1 of the resource group reading process, the value corresponding to the number-indexed resource group in the save position array in the task information designated by the resource group monopolizing task variable K is read out. In the following description, the value of the save position array read output in step ST7-1 is referred to as "save position array value P1". In the flowchart, "P1" alone is put in to represent the save position array value P1. The save position array value P1 represents the ordinal number designating one of subarea blocks in the resource value save area in which the resource values of the number-indexed resource group will be saved.

In step ST7-2, the value of the resource value save area starting address in the task information designated by the resource group monopolizing task variable K is read out, and a value is computed which is the sum of the read starting address value and a value obtained by multiplying the save position array value P1 by 64. In the following description, the value computed in step ST7-2 is referred to as "save address Q1". In the flowchart, "Q1" alone is put in to represent the save address Q1. The save address Q1 represents the starting memory address of the subarea in which the resource values of the number-indexed resource group will be saved.

In step ST7-3, the resource values of the number-indexed resource group are saved in the subarea having the starting address corresponding to the save address Q1.

The resource group saving process is thereby completed and the resource values of the number-indexed resource group are saved in the designated location in the resource value save area.

4-2-3-1-2-4 Resource Group Reading Process

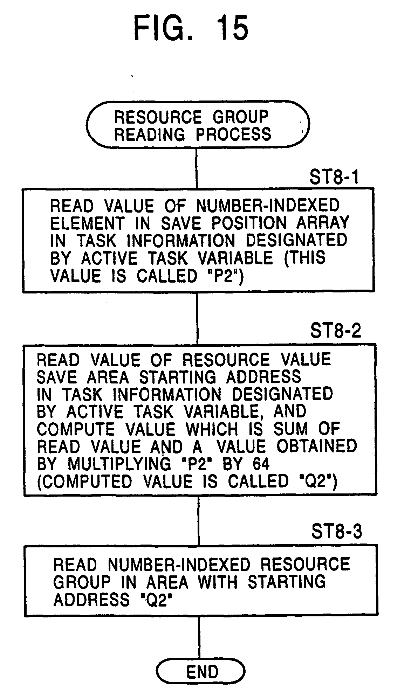

The resource group reading process will be described in detail with reference to Fig. 15. As described above, the resource group reading process is a process called and started in step ST6-5 of the resource group monopolizing task switching process.

First, in step ST8-1 of the resource value reading process, the value corresponding to the number-indexed resource group in the save position array in the task information designated by the active task variable is read out. In the following description, the value of the save position array read output in step ST8-1 is referred to as "save position array value P2". In the flowchart, "P2" alone is put in to represent the save position array value P2. The save position array value P2 represents the ordinal number designating one of subarea blocks in the resource value save area in which the resource values of the number-indexed resource group have been stored.

In step ST8-2, the value of the resource value save area starting address in the task information designated by the active task variable is read out, and a value is computed which is the sum of the read starting address value and a value obtained by multiplying the save position array value P2 by 64. In the following description, the value computed in step ST8-2 is referred to as "save address Q2". In the flowchart, "Q2" alone is put in to represent the save address Q2. The save address Q2 represents the starting memory address of the subarea in which the resource values of the number-indexed resource group have been saved.

In step ST8-3, the resource values of the number-indexed resource group are read from the subarea having the starting address corresponding to the save address Q2.

The resource group reading process is thereby completed and the resource values of the number-indexed resource group are thus read from the resource value save area.

4-2-3-1-2-5 Resource Group Save Area Securing Process

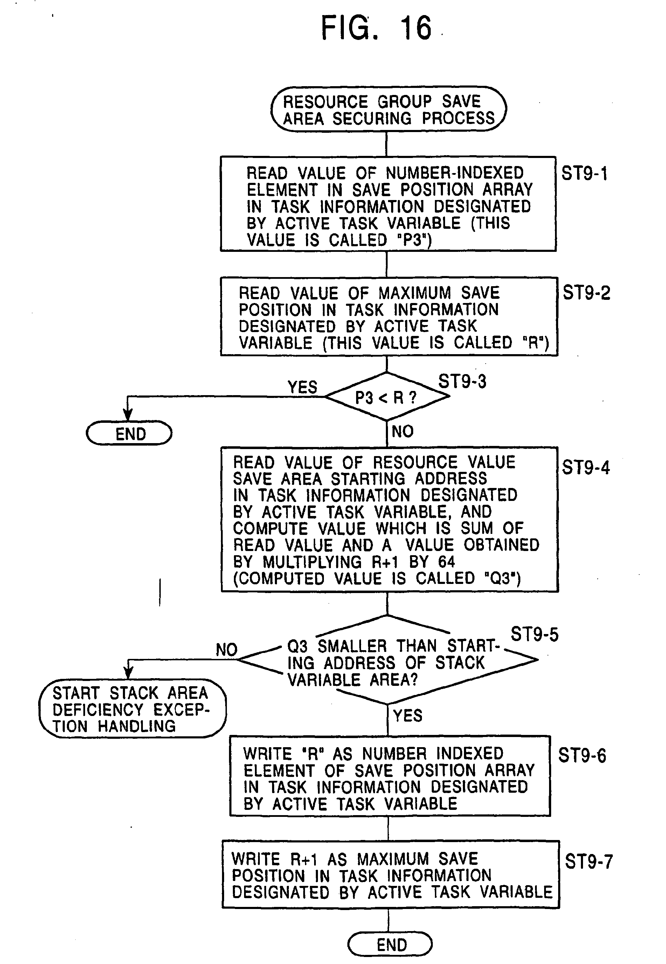

The resource group save area securing process will be described in detail with reference to the flowchart of Fig. 16. As described above, the resource group save area securing process is a process called and started in step ST6-6 of the resource group monopolizing task switching process.

First, in step ST9-1 of the resource group save area securing process, the value corresponding to the number-indexed resource group in the save position array in the task information designated by the active task variable is read out. In the following description, the value of the save position array read output in step ST9-1 is referred to as "save position array value P3". In the flowchart, "P3" alone is put in to represent the save position array value P3.

In step ST9-2, the value of the maximum save position in the task information designated by the active task variable is read out. In the following description, the value of the maximum save position read out in step ST9-2 is referred to as "maximum save position R". In the flowchart, "R" alone is put in to represent the maximum save position R.

In step ST9-3, the save position array value P3 and the maximum save position R are compared with each other. The save position array value P3 is smaller than the maximum save position R after a subarea for saving the resource values of the number-indexed resource group has been secured in the resource value save area. Therefore, if the save position array value P3 is smaller than the maximum save position R, the resource group save area securing process is terminated.

The result of comparison in step ST9-3 that the save position array value P3 is equal to or larger than the maximum save position R corresponds to the case where no subarea for saving the resource values of the number-indexed resource group has been secured in the resource value save area. Therefore, if the save position array value P3 is equal to or larger than the maximum save position R, the resource group save area securing process is continued to secure a subarea for saving the resource values of the number-indexed resource group, and the process advances to step ST9-4.

In step ST9-4, the value of the resource value save area starting address in the task information designated by the active task variable is read out and a value is computed which is the sum of the read area and a value obtained by multiplying R+1 (the sum of maximum save position R and 1) by 64. In the following description, the value computed in step ST9-6 is referred to as "save address Q3". That is, if the value of the resource value save area starting address in the task information designated by the active task variable is A and the maximum save position R is R, save address

$$Q3 = A + \{(R+1) \times 64\}.$$ In the flowchart, "Q3" alone is put in to represent the save address Q3.

In step ST9-5, a determination is made as to whether the value of the save address Q3 is smaller than that of the starting address of a memory area used as a stack by the task (hereinafter referred to as "stack variable area"). The result of determination that the value of the save address Q3 is not smaller than that of the starting address of the stack variable area corresponds to the case where the unused area is not large enough to secure a subarea for saving the resource values of the number-indexed resource group. Therefore, if the value of the save address Q3 is not smaller than that of the starting address of the stack variable area, a stack area deficiency exception handling is started. The stack area deficiency exception handling is a processing for coping with a deficiency of the unused area. Various techniques are conceivable as means for coping with a deficiency of the unused area, and such exception handling departs from the point of the present invention. Therefore, this exception handling will not be specially explained.

The result of determination in step ST9-5 that the value of the save address Q3 is smaller than that of the starting address of the stack variable area corresponds to the case where the unused area is large enough to secure a subarea for saving the resource values of the number-indexed resource group. Therefore, if the value of the save address Q3 is smaller than that of the starting address of the stack variable area, the resource group save area securing process is continued to secure an area for saving the resource values of the number-indexed resource group, and the process advances to step ST9-6.

In step ST9-6, the value of the maximum save position (i.e., maximum save position R) in the task information designated by the active task information is written in the save position array element corresponding to the number-indexed resource group in the save position array in the task information designated by the active task variable.

In step ST9-7, the sum of the maximum save position R and 1 is written as the maximum save position in the task information designated by the active task variable. In other words, in step ST9-7, the value of the maximum save position in the task information designated by the active task variable is incremented by 1.

The resource group save area securing process is thus performed to secure an area for saving the resource values of the number-indexed resource group.

4-2-3-2 Case of Not Using Resource Group Use Permission Flag

Task switching performed by using hardware such as shown in Fig. 9 will be described with respect to a case in which task switching is performed without using the resource group use permission flag.

4-2-3-2-1 Operation of Operating system when Task Switching is Performed

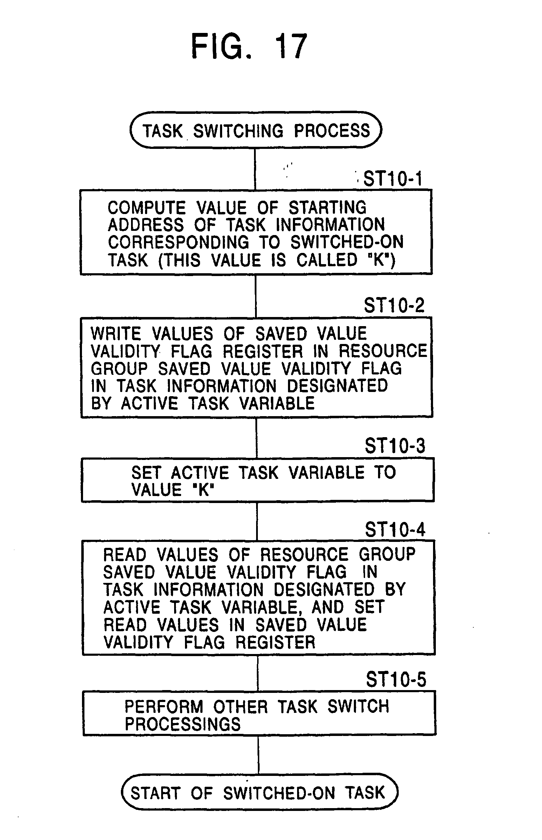

A process executed by the operating system when task switching is performed will be described with reference to the flowchart of Fig. 17 with respect to switching from task A to task B.

When task switching from task A to task B is performed, the operating system computes in step ST10-1 the starting address (hereinafter referred to as starting address K) of the task information save area in which the task information corresponding to task B (i.e., the switched-on task) is stored. In the flowchart, "K" alone is put in to represent the starting address K.

In step ST10-2, the values of the resource group saved value validity flag register are written in the resource group saved value validity flag in the task information designated by the active task variable (i.e., task information about task A).

In step ST10-3, the value of the starting address K computed in step ST10-1 is set in the active task variable register.

In step ST10-4, the values of the resource group saved value validity flag in the task information designated by the active task variable (i.e., task information about task B) are read and are set in the resource group saved value validity flag register.

Finally, other task switch processings are performed in step ST10-5, and task B is thereafter started. Processings in step ST10-5 are processings other than those for resource management, and will not be described in detail because they may be the same as those performed by the conventional operating systems and do not constitute a feature of the present invention.

As described above, the process to be performed by the operating system to control resource values at the time of task switching is only rewriting of the active task variable and the flags, and the processing load is markedly small. Moreover, since no resource values are saved or read, the number of memory accessing events or the amount of data transferred by accessing the memory is markedly small and only two bytes of data is read and written. In the conventional art, all resource values are saved and read at the time of task switching and 1024 bytes of data is read and written each time task switching is performed. That is, in this embodiment of the present invention, the amount of data transferred by accessing the memory at the time of task switching is reduced to 1/512 in comparison with the conventional art.

The effect of largely reducing the processing load at the time of task switching as described above is attributed to the provision of the mechanisms for controlling resource values in the data processing apparatus. That is, it is possible to realize efficient high-speed task switching by providing mechanisms relating to resource value control as functions of hardware.

4-2-3-2-2 Mechanisms Provided in Hardware

In this embodiment, only rewriting of the active task variable and flags is to be executed by the operating system at the time of task switching, and saving and reading of resource values are not performed at the time of task switching. Instead, when a task is about to use one of the resources, a check is performed to ascertain whether the task can use the resource, and processings for saving, reading, etc., of resource values are performed if necessary to enable the task to use the resource.

In this embodiment, to achieve such a process, a mechanism for performing resource group usability check, a mechanism for performing a resource group monopolizing task switching process, a mechanism for performing a resource group saving process, a mechanism for performing a resource group reading process, and a mechanism for performing a resource group save area securing process are provided as functions of hardware.

The processes executed by the mechanisms provided as functions of hardware will now be described. However, the resource group saving process, the resource group reading process and the resource group save area securing process in these processes are the same as those in the case of performing task switching by using the resource group use permission flag, and the description for them will not be repeated.

4-2-3-2-2-1 Resource Group Usability Check

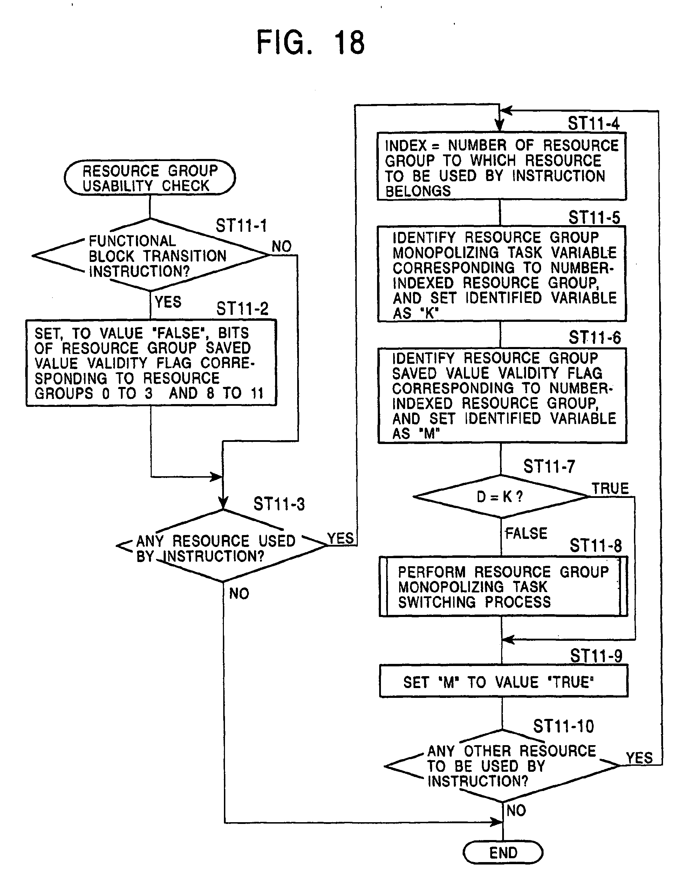

Resource group usability check will be described in detail with reference to the flowchart of Fig. 18.

A resource group usability check is executed in parallel with execution of an instruction with the central processing unit. That is, a resource group usability check is executed each time an instruction for a task is executed.

First, in step ST11-1 of the process for a resource group usability check, a determination is made as to whether an instruction to be executed for a task is a functional block transition instruction. If the instruction to be executed is a functional block transition instruction, processing in step ST11-2 is performed and the process then advances to step ST11-3. If the instruction to be executed is not a functional block transition instruction, the process moves directly to step ST11-3.

In step ST11-2, the values of the resource group saved value validity flag register corresponding to resource groups 0 to 3, and 8 to 11 are set to "FALSE". If the values of the resource group saved value validity flag register are set in this manner, reading from the resource value save area will not be performed with respect to unnecessary resource values.

As described above, if the instruction to be executed is a functional block transition instruction, processing in step ST11-2 is performed to omit saving and reading of unnecessary resource values, thereby reducing the amount of saved or read resource values to about 50 % in comparison with the conventional art.

In step ST11-3, a determination is made as to whether the instruction to be executed requires use of some of the resources. If the instruction requires use of some of the resources, the process advances to step ST11-4. If the instruction does not require any one of the resources, the resource group usability check is terminated and the instruction for the task is executed.

In step ST11-4, the resource group to which the resource to be used in accordance with the instruction to be executed belongs is identified. In the following description, the resource group identified in step ST11-4, i.e., the resource group to which the resource to be used in execution of the instruction belongs, is referred to as "number-indexed resource group".

In step ST11-5, the resource group monopolizing task variable corresponding to the number-indexed resource group in the resource group monopolizing task variables stored in the resource group monopolizing task variable register is identified. In the following description, the resource group monopolizing task variable identified in step ST11-5 is referred to as "resource group monopolizing task variable K". In the flowchart, "K" alone is put in to represent the resource group monopolising task variable K.

In step ST11-6, the resource group saved value validity flag corresponding to the number-indexed resource group in the resource group saved value validity flags stored in the resource group saved value validity flag register is identified. In the following description, the resource group saved value validity flag identified in step ST11-6 is referred to as "resource group saved value validity flag M". In the flowchart, "M" alone is put in to represent the resource group saved value validity flag M.

In step ST11-7, the active task variable and the resource group monopolizing task variable K are compared. In the flowchart, "D" represents the active task variable. If the value of the active task variable and the value of the resource group monopolizing task variable K are not equal to each other, the process advances to step ST11-8. If they are equal to each other, the process moves to step ST11-9.

In step ST11-8, the resource group monopolizing task switching process is performed, which will be described below in detail. After the resource group monopolizing task switching process, the process of the resource group usability check advances to step ST11-9.

In step ST11-9, the value of the resource group saved value validity flag M is set to "TRUE". Information that conditions for saving of the resource values of the number-indexed resource group have been satisfied is recorded in the resource group saved value validity flag register. After completion of the processing in step ST11-9, the process advances to step ST11-10.

In step ST11-10, a determination is made as to whether the instruction to be executed requires use of some other one of the resource groups. If the instruction requires use of another of the resource groups, the process returns to step ST11-4 and the check is performed with respect to the designated resource group. If the instruction does not require use of any one of the other resource groups, the resource group usability check is terminated and the instruction for the task is executed.

When the resource group usability check is performed as described above, the resource group monopolizing task switching process is started only if the value of the active task variable and the value of the resource group monopolizing task variable K are not equal to each other. If the value of the active task variable and the value of the resource group monopolizing task variable K are equal to each other, the resource group monopolizing task switching process is not started. In other words, the resource group monopolizing task switching process is started in the case where, while an instruction to be executed for a task requires use of one of the resources, the task is not monopolizing the resource.

4-2-3-2-2-2 Resource Group Monopolizing Task Switching Process

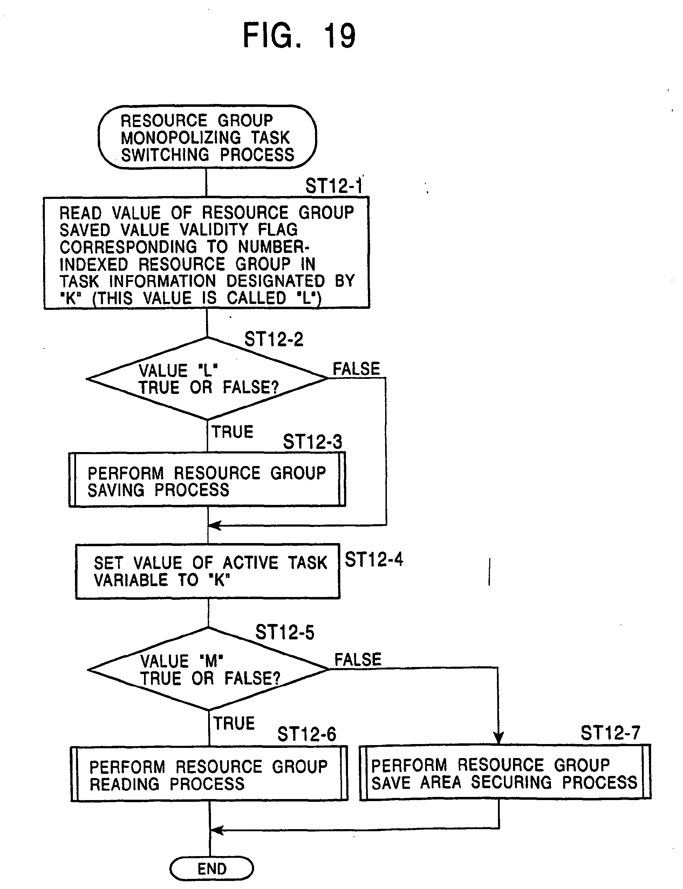

The resource group monopolizing task switching process will be described in detail with reference to the flowchart of Fig. 19. As described above, the resource group monopolizing task switching process is a process called and started in step ST11-9 in the resource group usability check.

First, in step ST12-1 of the resource group monopolizing task switching process, the value of the resource group saved value validity flag corresponding to the number-indexed resource group in the resource group saved value validity flags in the task information designated by the resource group monopolizing task variable K is read out. In the following description, the value of the resource group saved value validity flag read out in step ST12-1 is referred to as "resource group saved value validity flag L". In the flowchart, "L" alone is put in to represent the resource group saved value validity flag L.

In step ST12-2, the value of the resource group saved value validity flag L is checked. If the value of the resource group saved value validity flag L is "TRUE", the process advances to step ST12-3. If the value of the resource group saved value validity flag L is "FALSE", the process moves to step ST12-4.

In step ST12-3, the resource group saving process is performed in accordance with the flowchart of Fig. 14. After the resource group saving process, the resource group monopolizing task switching process advances to step ST12-4.

In step ST12-4, the active task variable is set to the value of resource group monopolising task variable K.

In step ST12-5, the value of the resource group saved value validity flag M is checked. If the value of the resource group saved value validity flag M is "TRUE", the process advances to step ST12-6. If the value of the resource group saved value validity flag M is "FALSE", the process moves to step ST12-7.

In step ST12-6, the resource group reading process is performed in accordance with the flowchart of Fig. 15. After the resource group reading process, the resource group monopolizing task switching process is finished.

In step ST12-7, the resource group save area securing process is performed in accordance with the flowchart of Fig. 16. After the resource group save area securing process, the resource group monopolizing task switching process is finished.

4-2-3-3 Recapitulation

As described above, in each of the case of using the resource group use permission flag and the case of not using the resource group use permission flag, the process to be performed by the operating system to control resource values at the time of task switching is only rewriting of the active task variable and the flags, and the processing load is markedly small. Moreover, since no resource values are saved or read at the time of task switching, the number of memory accessing events or the amount of data transferred by accessing the memory is markedly small. That is, mechanisms relating to control of resource values are provided as functions of hardware to perform saving and reading of resource values by hardware processing instead of processing based on the operating system alone. In this manner, saving and reading of resource values required when tasks are switched can be efficiently performed at a high-speed.

In the above-described task switching process, saving and reading of resource values are not simply postponed but completely omitted with respect to resource groups not used by a started task. Also, with respect to used resource groups, their values which have been set during use are maintained if they will not be used by other tasks. In such a case, saving and reading of the resource values are completely omitted. During execution of a task, each time a functional block transition instruction is executed, the resource group in-use flag register and the resource group saved value validity flag register are updated and saving is not performed with respect to resource groups with no need to save the values thereof. As described above, the number of resource value saving and reading events or the amount of saved or read resource values is minimized and only necessary ones of resource values are saved or read. Thus, saving and reading of resource values can be performed remarkably efficiently.

In the conventional task switching method, there is a possibility of loads for reading from a memory and writing to the memory being concentrated at the time of switching to cause a bottleneck. However, if task switching is performed in the above-described manner, saving and reading of resource values are sporadically performed as described above, so that a bottle neck cannot occur easily.

Moreover, if task switching is performed in the above-described manner, the amount of resource value data which needs saving or reading is markedly small, so that task switching can be performed at a markedly high speed. Therefore, a processing which needs to start quickly, e.g., interrupt processing can be perform by using the task switching mechanism. In other words, if task switching is performed in the above-described manner, the overhead at a start or end of interrupt processing performed by using the task switching mechanism is advantageously small.

5. Other Embodiments of the Invention

The present invention is not limited to the above-described embodiment and can be modified in various ways.

For example, the number of registers for the central processing unit and the number of registers for the floating-point arithmetic unit are not specially limited and may be set to any number selected as desired. Further, the hardware of the present invention is not limited to the above-described one formed by the central processing unit and the floating-point arithmetic unit. For example, the hardware may be a central processing unit alone or may include various coprocessors other than the floating-point arithmetic unit, e.g., a unit for performing a calculation for three-dimensional coordinate conversion, and a unit for performing parallel operations for high-speed image data compression/expansion processing.

When resources usable by tasks are separated into resource groups to be controlled, the number of groups are not particularly limited and may be freely selected. However, the efficiency of task switching varies depending upon the way of grouping resources. Therefore, it is, of course, preferable that, in grouping and controlling resources, grouping of the resources is optimized according to the sorts of tasks to be executed, the configuration of the data processing apparatus, etc., so that task switching can be performed more efficiently. If the central processing unit has a cache memory as mentioned above, it is preferred that resources are separated into resource groups in such a manner that the size of the resource value save area corresponding to each resource group is an integer multiple of the cache line size of the cache memory.

In the second embodiment of the present invention, almost all the processes other than the task switching process are realized through mechanisms in hardware. However, almost entire portions of the hardware mechanisms may be arbitrarily selected to be replaced with software according to the required scale of a semiconductor circuit, etc. In such a case, the hardware and software configuration may be such that, while the resource group monopolizing task switching process is performed by software, some of the functions for the other processes are extracted to be realized by means for hardware. For example, special short sequences of instructions may be prepared to enable hardware to perform high-speed processing for saving and reading of resource groups.

In the second embodiment of the present invention, the starting address of the task information save area corresponding to an active task is set as the value of the active task variable. Alternatively, the starting address of the resource control information area in the task information area corresponding to an active task may be set as the value of active task variable. If the starting address of the resource control information area in the task information area is set as the active task variable, the resource control information area can be directly accessed based on the active task variable with no influence of the portion of task information depending upon the operating system (i.e., task control information). In other words, if the starting address of the resource control information area in task information is set as the active task variable, management of task information necessary for resource control can be performed only by hardware processing without being influenced by the configuration of the operating system.

Finally, the configuration of an example of hardware to which the present invention is applied is described below with reference to Fig. 22. Fig. 22 illustrates an example of an application of the present invention to a television receiver 1. Needless to say, the present invention can be applied to various information processing apparatuses other than the television receiver 1. That is, the present invention can be applied to a wide variety of information processing apparatuses having operating systems (hereinafter referred to as "OS") each of which manages a plurality of tasks and requires task switching. For example, the present invention can be applied to various audio-visual apparatuses, information processing apparatuses for office work, and computer-controlled machines.

Referring to Fig. 22, the television receiver 1 is an apparatus which receives, via an antenna or a cable, a signal transmitted from a broadcasting station, displays an image on an image display unit based on the received signal, and outputs audio information through a speaker.

The television receiver 1 has, as well as an ordinary television receiving function, a function for receiving a program, data, etc., externally supplied. As shown in Fig. 22, the television receiver 1 has components connected to a bus 3: a processor 6 connected to the bus 3 through a bus/memory bridge 5; a read-only memory (ROM) 7 and a random access memory (RAM) 8 connected to the bus 3 through the bus/memory bridge 5; an operating panel 9; an external storage unit 10; and a communication unit 11.

A television function section 4 has a function of reproducing images and sounds based on signals received via an antenna, a cable or the like. The television function section 4 is connected to the bus 3 through a bus/IO bridge 2 to be able to exchange signals with the other sections.

The processor 6 is adapted to control each section of this television receiver 1, and is connected to the bus 3 through the bus/memory bridge 5. The ROM 7 and the RAM 8 are connected to the processor 6 through the bus/memory bridge 5. The ROM 7 holds, for example, fixed information about the television receiver 1. The RAM 8 provides a memory space to be used as a work area by the processor 6. That is, the processor 6 controls each section constituting this television receiver 1 by executing the operation of an OS (including the task switching apparatus and method of the present invention) and an application program recorded in the external storage unit 10 while using the RAM 8 as a work area, as described below.

The operating panel 9 is an input/output device for enabling user's input operations. For example, a signal designating selection of a channel or a change in sound volume is input to the television receiver 1 through the operating panel 9. Specifically, the operating panel 9 is constituted by an input device having a plurality of switches for inputting various signals, a pointing device represented by a so-called mouse, etc. A signal input by the operating panel 9 is input to the processor 6 via the bus 3 and the bus/memory bridge 5. The processor 6 then performs predetermined arithmetic processing based on the signal input from the operating panel 9 to control the corresponding section of the television receiver 1.

The external storage unit 10 is constituted by a storage unit such as a hard disk unit, for example. The external storage unit 10 has the OS (including the task switching apparatus and method of the present invention ), an application program, etc., recorded therein . In the external storage unit 10, image data, control data, a program externally downloaded through the communication unit 11, etc., are also recorded. The communication unit 11 is an input/output section for performing data communication with an external terminal. For example, the communication unit 11 is constituted by a communication device such as a modem or a terminal adapter.

In the television receiver 1, to control each section, the processor 6 executes the operation of the OS recorded in the external storage unit 10, and executes an application program recorded in the external storage unit 10 by using, on the OS, control information or the like recorded on the ROM 7. That is, this television receiver 1 has the external storage unit 10 used as a program provision medium for providing various data processing programs forming the OS.

The OS including the task switching apparatus and method of the present invention and may be recorded in the ROM 7 or RAM 8. In such a case, the ROM 7 or RAM 8 is provided as a program provision medium. If version-up rewriting or the like of the OS is taken into consideration, it is desirable to use a rewritable recording medium for provision of the OS including the task switching apparatus and method of the present invention. The program provision medium in accordance with the present invention may be, for example, a magneto-optic recording medium or an optical recording medium used by being detachably loaded in the television receiver 1, or a network circuit or the like for connecting the television receiver 1 to other various information processing apparatuses.

The OS provided in the television receiver 1 is a pure object-oriented OS. On the OS, an application program for displaying moving images through the television function section 4, and an application program for realizing a graphical user interface (GUI) for controlling the operating panel 9 are executed.

As described above in detail, according to the present invention, the number of memory accessing events at the time of task switching can be reduced, the number of times the memory is unnecessarily accessed can be effectively reduced, and the need to a large amount of hardware resources for holding resource values can be eliminated. At least preferred embodiments of the present invention, therefore, have the following advantages:

(1) In a central processing unit having a large number of registers, the time required for switching tasks can be largely reduced.

(2) In a case where a floating-point arithmetic unit, for example, is added for hardware function expansion, the task switching time is not increased with respect to tasks not using the added function.

(3) Even if the amount of usable resources is increased, there is no need for an extra memory space other than the memory area for saving resources of resource groups used by tasks, and the memory consumption is advantageously limited.

(4) The effect of the present invention is not lowered by an increase in the number of tasks to be switched, and task switching can be performed in a short time.

(5) The processing apparatus of the present invention requires only additional hardware with respect to a large amount of resources for the central processing unit, etc. Therefore, the semiconductor area can be largely reduced in comparison with the case of achieving high-speed task switching based on a register file mechanism or the like.

(6) Even if the amounts of resources for the central processing unit, etc., is increased, the amount of additional hardware required by the present invention is small and the number of tasks switchable at a high speed is not particularly limited.

(7) For tasks requiring a quick start, the task switching speed can be increased by limiting the amount of usable resources. Even in the case of an interrupt processing or the like requiring a high-speed start, the desired effect can be achieved by using a suitable task switching mechanism.

(8) Memory accessing events before completion of task switching can be effectively reduced, so that the start time of a switched-on task can easily be specified.

(9) If a resource use inhibition function (e.g., the floating-point unit use permission flag) is prepared as a hardware function, speedup of task switching can be achieved only by a change in the operating system.

(10) If mechanisms for performing a resource group usability check and a resource group monopolizing task switching process are provided as hardware functions in a data processing apparatus , the number of instruction steps necessary for task switching can be reduced to increase the task switching processing speed. Moreover, the speed of monopolizing task switching started when resources are first used after task switching can be largely increased.

(11) It is also possible to prevent occurrence of unnecessary memory accessing events at starting and trailing ends of the resource value save area by setting the sizes of resource groups such that they correspond to an integer multiple of the cache line size of a cache memory, or by adjusting the starting address of resource value save subareas to a cache line boundary. The memory access efficiency can be improved thereby.

**Claims**

1. A task switching apparatus in a multitasking system comprising:

a plurality of tasks (TASK 0...7) executed in parallel with each other while independence of each task is ensured, each task having a register value save area for its exclusive use;
a plurality of register groups (RESOURCE GROUP 0...15) for controlling registers in a separate state;
a task switcher which switches the tasks so that a second one of the tasks becomes active in place of a first one of the tasks;
a register group usability checker for checking, when the active task uses one- of the registers which belong to one of the plurality of groups, whether the active task has a right to use the register group to which the register to be used by the active task belongs; and
a register group monopolizing task switcher for giving the active task a right to use the register group to which the register to be used by the active task belongs if the active task has no right to use the register group.

2. A task switching apparatus according to Claim 1, wherein, if there is a possibility of said register group usability checker being unable to check a right to use with respect to one of the plurality of register groups, said task switcher comprises:

means for saving values of the registers of said one of the register groups in the register value save area for the first task; and
means for reading, to the registers of said one of the register groups, values saved in the register value save area for the second task.

3. A task switching apparatus according to Claim 1, wherein each of the plurality of tasks has a register group use permission flag for indication as to whether the task has a right to use one of the register groups, and said register group usability checker has means for making a determination as to whether the active task has a right to use one of the register groups based on a value of the register group use permission flag.

4. A task switching apparatus according to Claim 3, wherein each of the plurality of tasks has, in one-to-one correspondence with the plurality of register groups, register group monopolization flags for indication as to whether the task monopolizes at least one of the plurality of register groups, said task switcher having:

means for saving the value of the register group use permission flag as a value of the corresponding register group monopolization flag of the first task; and
means for reading the value of each of the register group monopolization flags of the second task to the corresponding register group use permission flag, and said register group monopolizing task switcher having:

means for setting a value indicating that one of the tasks having a right to use one of the register groups does not monopolize said one of the register groups if said one of the register groups is the register group to which the register that the active task needs to have a right to use belongs, the value being set in the register group monopolization flag corresponding to said one of the register groups in the register group monopolization flags of said one of the tasks having a right to use said one of the register groups.

5. A task switching apparatus according to Claim 3, wherein the register groups are separated into functional blocks each containing at least one of the register groups providing a common function, and each of the functional blocks has the register group use permission flag for indication as to whether the active task has a right to use the functional block.

6. A task switching apparatus according to Claim 3, wherein each of the plurality of register groups has the register group use permission flag for indication as to whether the active task has a right to use the register group.

7. A task switching apparatus according to Claim 2, wherein said register group monopolizing task switcher has:

means for saving, in the register value save area for the active task, values of the register group to which the register that the active task is about to use belongs if there is a need to save at least one register value of the register; and
means for reading any valid value saved in the register value save area for the active task as a register value of the register that the active task is about to use, the register value being read to the register value save area for the active task.

8. A task switching apparatus according to Claim 7, wherein register group monopolizing task variables each set to a value designating one of the tasks monopolizing one of the plurality of register groups are provided, and said register group monopolizing task switcher has means for setting a value designating the active task as the register group monopolizing task variable corresponding to the register group to which the register that the active task is about to use belongs.

9. A task switching apparatus according to Claim 8, wherein an active task variable which is set to a value designating the active task is provided, and said register group usability checker makes a determination as to whether the active task can use the register group to which the register that the active task is about to use belongs by making a comparison between the value of the active task variable and the value of the register group monopolizing task variable corresponding to the register group to which the register that the active task is about to use belongs.

10. A task switching apparatus according to Claim 7, wherein each of the plurality of tasks has, in one-to-one correspondence with the plurality of register groups, register group saved value validity flags for indication as to whether the task is using at least one of the plurality of register groups, said register group monopolizing task switcher having:

means for setting a value indicating that one of the registers in one of the register groups has been used by the active task in the register group saved value validity flag corresponding to said one of the register groups to which said one of the registers belongs in the register group saved value validity flags corresponding to the active task when at least one value of said one of the registers becomes effective as a result of use of said one of the registers by the active task;
means for making a determination as to whether there is a need to save at least one register value of the register that the active task is about to use, the determination being made based on the value of the register group saved value validity flag corresponding to one of the tasks using the register that the active task is about to use; and
means for making a determination as to whether at least one valid value has been saved in the register value save area for the active task as a register value of the register that the active task is about to use, the determination being made based on the value of the register group saved value validity flag corresponding to the active task.

11. A task switching apparatus according to Claim 10, wherein, if there is a possibility of said register group usability checker being unable to check a right to use with respect to one of the plurality of register groups, said task switcher comprises means for setting, in the register group saved value validity flag corresponding to said one of the register groups, a value indicating that at least one valid value exists in the register value save area corresponding to said one of the register groups.

12. A task switching apparatus according to Claim 10, further comprising means for setting, before execution of one of the tasks is stopped, the value of each of the register group saved value validity flags corresponding to the task to a value indicating that none of the registers in the register group is in use.

13. A task switching apparatus according to Claim 7, wherein each of said plurality of tasks has register group in-use flags in one-to-one correspondence with the plurality of register groups, said register group monopolizing task switcher having:

means for setting, in the register group in-use flag corresponding to the register group to which one of the registers that one of the tasks uses belongs, a value indicating that said one of the tasks is using the register that belongs to said one of the register groups; and
means for making a determination as to whether there is a need to save a register value of the register that the active task is about to use, the determination being made based on the value of the register group in-use flag corresponding to the register group to which the register that the active task is about to use belongs.

14. A task switching apparatus according to Claim 13, wherein, if there is a possibility of said register group usability checker being unable to check a right to use with respect to one of the plurality of register groups, said task switcher comprises means for setting, in the register group in-use flag corresponding to said one of the register groups, a value indicating that at least one of the registers that belong to said one of the register groups is in use.

15. A task switching apparatus according to Claim 7, wherein each of said plurality of tasks has a register group monopolization flag for indication as to whether the task is monopolizing each of the plurality of register groups, said register group monopolizing task switcher having:

means for setting a value indicating that one of the register groups is not being monopolized if one of said register groups is the register group to which the register that the active task is about to use belongs, the value being set in the register group monopolization flag corresponding to the register group to which the register that the active task is about to use belongs in the register group monopolization flags of one of the tasks monopolizing said one of the register groups; and
means for setting a value indicating that the register group to which the register that the active task is about to use belongs is being monopolized, the value being set in the register group monopolization flag corresponding to the register groups to which the register that the active task is about to use belongs in the register group monopolization flags corresponding to the active task.

16. A task switching apparatus according to Claim 1, wherein the registers that belong to the register groups are processed with a central processing unit having a cache memory, the task switching apparatus further comprising means for dividing each of the register value save areas into subareas corresponding to some of the register groups so that each subarea has a size corresponding to an integer multiple of a cache line size of the cache memory.

17. A task switching apparatus according to Claim 1, wherein the register value save areas are secured on a cache memory, the task switching apparatus further comprising means for securing the register value save areas so that the starting address of each register value save area corresponds to a cache line boundary.

18. A task switching apparatus according to Claim 1, further comprising means for securing the register value save areas while dynamically changing the size of each register value save area according to the size of saved register values.

19. A task switching apparatus according to Claim 18, further comprising means for dynamically changing the size of the register value save area with respect to each of the register groups.

20. A task switching apparatus according to Claim 18, further comprising means for securing each of the register value save areas in one memory block in which a stack used for the corresponding task is also provided, the register value save area being secured in a direction opposite from the direction in which data is stored in the stack by the task.

21. A task switching apparatus according to Claim 20, further comprising means for checking whether the register value save area and the area used as the stack by the task do not overlap each other when the register value save area is dynamically changed.

22. A task switching method in a multitasking system comprising:

an execution step of executing a plurality of tasks in parallel with each other while independence of each task is ensured, each task having a register value save area for its exclusive use; a storing step of storing a plurality of register groups in a separate state; a task switching step of switching the tasks so that a second one of the tasks becomes active in place of a first one of the tasks; a register group usability checking step of checking, when the active task uses one of the registers which belong to one of the plurality of groups, whether the active task has a right to use the register group to which the register to be used by the active task belongs; and a register group monopolizing task switching step of giving the active task a right to use the register group to which the register to be used by the active task belongs if the active task has no right to use the register group.

23. A task switching method according to Claim 22, wherein, if there is a possibility of said register group usability checking step being ineffective in checking a right to use with respect to one of the plurality of register groups, said task switching step includes:

a step of saving values of the registers of said one of the register groups in the register value save area for the first task; and a step of reading, to the registers of said one of the register groups, values saved in the register value save area for the second task.

24. A task switching method according to Claim 22, wherein said register group usability checking step includes a step of making a determination as to whether the active task has a right to use the register group to which the register that the active task is about to use belongs based on a value of a register group use permission flag corresponding to the register group.

25. A task switching method according to Claim 24, wherein a register group use permission flag is provided with respect to each of functional blocks formed at least one of the register groups providing a common function, and said register group usability checking step includes a step of making a determination as to whether the active task has a right to use the functional block to which the register that the active task is about to use belongs based on a value of the corresponding register group use permission flag.

26. A task switching method according to Claim 24, wherein said task switching step includes:

a step of saving, in each of register group monopolization flags of the first task, a value of a corresponding register group use permission flag; and a step of reading a value of each of register group monopolization flags of the second task to a corresponding register group use permission flag, and said register group monopolizing task switching step includes:

a step of setting a value indicating that one of the tasks having a right to use one of the register groups does not monopolize said one of the register groups if said one of the register groups is the register group to which the register that the active task is about to use belongs, the value being set in the register group monopolization flag corresponding to said one of the register groups in the register group monopolization flags of said one of the tasks having a right to use said one of the register groups.

27. A task switching method according to Claim 23, wherein said register group monopolizing task switching step includes:

a step of saving, in the register value save area for the active task, values of the register group to which the register that the active task is about to use belongs if there is a need to save at least one register value of the register; and a step of reading any valid value saved in the register value save area for the active task as a register value of the register that the active task is about to use, the register value being read to the register value save area for the active task.

28. A task switching method according to Claim 27, wherein said register group monopolizing task switching step includes a step of setting a value designating the active task as a register group monopolizing task variable corresponding to the register group to which the register that the active task is about to use belongs.

**29.** A task switching method according to Claim 28, wherein said register group usability checking step includes a step of making a determination as to whether the active task can use the register group to which the register that the active task is about to use belongs by making a comparison between the value of an active task variable designating the active task and the value of the register group monopolizing task variable corresponding to the register group to which the register that the active task is about to use belongs.

**30.** A task switching method according to Claim 27, wherein said register group monopolizing task switching step includes:

a step of setting a value indicating that one of the registers in one of the register groups has been used by the active task in a register group saved value validity flag corresponding to said one of the register groups to which said one of the registers belongs in register group saved value validity flags corresponding to the active task when at least one value of said one of the registers becomes effective as a result of use of said one of the registers by the active task;
a step of making a determination as to whether there is a need to save at least one register value of the register that the active task is about to use, the determination being made based on a value of a register group saved value validity flag corresponding to one of the tasks using the register that the active task is about to use; and
a step of making a determination as to whether at least one valid value has been saved in the register value save area for the active task as a register value of the register that the active task is about to use, the determination being made based on the value of the register group saved value validity flag corresponding to the active task.

**31.** A task switching method according to Claim 30, wherein, if there is a possibility of said register group usability checking step being ineffective in checking a right to use with respect to one of the plurality of register groups, said task switching step includes a step of setting, in a register group saved value validity flag corresponding to said one of the register groups, a value indicating that at least one valid value exists in the register value save area corresponding to said one of the register groups.

**32.** A task switching method according to Claim 30, further comprising a step of setting, before execution of one of the tasks is stopped, the value of each of the register group saved value validity flags corresponding to the task to a value indicating that none of the registers in the register group is in use.

**33.** A task switching method according to Claim 27, wherein said register group monopolizing task switching step includes:

a step of setting, in a register group in-use flag corresponding to the register group to which one of the registers that one of the tasks uses belongs, a value indicating that said one of the tasks is using the register that belongs to said one of the register groups; and
a step of making a determination as to whether there is a need to save a register value of the register that the active task is about to use, the determination being made based on a value of a register group in-use flag corresponding to the register group to which the register that the active task is about to use belongs.

**34.** A task switching method according to Claim 33, wherein, if there is a possibility of said register group usability checking step being ineffective in checking a right to use with respect to one of the plurality of register groups, said task switching step includes a step of setting, in a register group in-use flag corresponding to said one of the register groups, a value indicating that at least one of the registers that belong to said one of the register groups is in use.

**35.** A task switching method according to Claim 27, wherein said register group monopolizing task switching step include:

means for setting a value indicating that one of the register groups is not being monopolized if said one of the register groups is the register group to which the register that the active task is about to use belongs, the value being set in a register group monopolization flag corresponding to the register group to which the register that the active task is about to use belongs in register group monopolization flags corresponding to one of the tasks monopolizing said one of the register groups; and
a step of setting a value indicating that the register group to which the register that the active task is about to use belongs is being monopolized, the value being set in a register group monopolization flag corresponding to the register group to which the register that the active task is about to use belongs in register group monopolization flags corresponding to the active task.

**36.** A task switching method according to Claim 22, wherein the registers that belong to the register groups are processed with a central processing unit having a cache memory, the task switching method further comprising a step of dividing each of the register value save areas into subareas corresponding to some of the register groups so that each subarea has a size corresponding to an integer multiple of a cache line size of the cache memory.

**37.** A task switching method according to Claim 22, wherein the register value save areas are secured on a cache memory, the task switching method further comprising a step of securing the register value save areas so that the starting address of each register value save area corresponds to a cache line boundary.

**38.** A task switching method according to Claim 22, further comprising a step of securing the register value save areas while dynamically changing the size of each register value save area according to the size of saved register values.

**39.** A task switching method according to Claim 38, further comprising a step of dynamically changing the size of the register value save area with respect to each of the register groups.

**40.** A task switching method according to Claim 38, further comprising a step of securing each of the register value save areas in one memory block in which a stack used for the corresponding task is also provided, the register value save area being secured in a direction opposite from the direction in which data is stored in the stack by the task.

**41.** A task switching method according to Claim 40, further comprising a step of checking whether the register value save area and the area used as the stack by the task do not overlap each other when the register value save area is dynamically changed.

**Patentansprüche**

**1.** Aufgaben-Umschaltvorrichtung in einem Mehrfach-Aufgaben-System, welche aufweist:

mehrere Aufgaben (TASK 0...7), die parallel miteinander ausgeführt werden, während die Unabhängigkeit jeder Aufgabe sichergestellt ist, wobei jede Aufgabe einen Registerwert-Sicherungsbereich für ihre exklusive Verwendung hat;
mehrere Registergruppen (RESOURCE GROUP 0... 15) zum Steuern von Registern in einen separaten Zustand;
einen Aufgabenumschalter, der die Aufgaben so umschaltet, dass eine zweite der Aufgaben anstelle einer ersten der Aufgaben aktiv wird;
einen Registergruppen-Verwendbarkeitsprüfer zum Prüfen, wenn die aktive Aufgabe eines der Register verwendet, welches zu einem der mehreren Gruppen gehört, ob die aktive Aufgabe ein Recht hat, die Registergruppe zu verwenden, zu welcher das Register, welches durch die aktive Aufgabe zu verwenden ist, gehört; und
einen Registergruppen-Monopolisierungs-Aufgabenumschalter, um einer aktiven Aufgabe ein Recht zu geben, die Registergruppe zu verwenden, zu welcher das Register, welches durch die aktive Aufgabe zu verwenden ist, gehört, wenn die aktive Aufgabe kein Recht hat, die Registergruppe zu verwenden.

**2.** Aufgaben-Umschaltvorrichtung nach Anspruch 1, wobei, wenn es eine Möglichkeit des Registergruppen-Verwendbarkeitsprüfers gibt, unfähig zu sein, ein Recht zur Verwendung in Bezug auf eine der mehreren Registergruppen zu prüfen, der Aufgabenumschalter aufweist:

eine Einrichtung zum Sichern von Werten der Register der einen der Registergruppen im Registerwert-Sicherungsbereich für die erste Aufgabe; und
eine Einrichtung zum Lesen - in die Register der einen der Registergruppen - von Werten, welche im Registerwert-Sicherungsbereich für die zweite Aufgabe gesichert sind.

**3.** Aufgaben-Umschaltvorrichtung nach Anspruch 1, wobei jede der mehreren Aufgaben ein Registergruppen-Verwendungs-Zulassungsflag hat, um anzuzeigen, ob die Aufgabe ein Recht hat, eine der Registergruppen zu verwenden, und der Registergruppen-Verwendbarkeitsprüfer eine Einrichtung hat, zu bestimmen, ob die aktive Aufgabe ein Recht hat, eine der Registergruppen auf Basis eines Werts des Registergruppen-Verwendungs-Zulassungsflags zu verwenden.

**4.** Aufgaben-Umschaltvorrichtung nach Anspruch 3, wobei jede der mehreren Aufgaben - in einer Beziehung von eins-zu-eins mit mehreren Registergruppen - Registergruppen-Monopolisierungsflags hat, um anzuzeigen, ob die Aufgabe zumindest eine der mehreren Registergruppen monopolisiert, wobei der Aufgabenumschalter hat:

eine Einrichtung zum Sichern des Werts der Registergruppen- Verwendungs- Zulassungsflags als einen Wert des entsprechenden Registergruppen-Monopolisierungsflags der ersten Aufgabe; und
eine Einrichtung zum Lesen des Werts eines jeden der Registergruppen-Monopolisierungsflags der zweiten Aufgabe zum entsprechenden Registergruppen- Verwendungs- Zulassungsflag, und wobei der Registergruppen-Monopolisierungs-Aufgabenumschalter aufweist:

eine Einrichtung zum Einstellen eines Werts, der zeigt, dass eine der Aufgaben, welche ein Recht hat, eine der Registergruppen zu verwenden, nicht die eine der Registergruppen monopolisiert, wenn die eine der Registergruppen die Registergruppe ist, zu der das Register, für das aktive Aufgabe ein Recht zur Verwendung braucht, gehört, wobei der Wert im Registergruppen-Monopolisierungsflag entsprechend der einen der Registergruppen in den Registergruppen-Monopolisierungsflags der einen der Aufgaben gesetzt wird, welche ein Recht hat, die eine der Registergruppen zu verwenden.

5. Aufgaben-Umschaltvorrichtung nach Anspruch 3, wobei die Registergruppen in Funktionsblöcke getrennt sind, von denen jeder zumindest eine der Registergruppen enthält, welche eine allgemeine Funktion liefern, und jeder der Funktionsblöcke das Registergruppen-Verwendungs-Zulassungsflag hat, um zu zeigen, ob die aktive Aufgabe ein Recht hat, den Funktionsblock zu verwenden.

6. Aufgaben-Umschaltvorrichtung nach Anspruch 3, wobei jede der mehreren Registergruppen das Registergruppen-Verwendungs-Zulassungsflag hat, um zu zeigen, ob die aktive Aufgabe ein Recht hat, die Registergruppe zu verwenden.

7. Aufgaben-Umschaltvorrichtung nach Anspruch 2, wobei der Registergruppen-Monopolisierungs-Aufgabenumschalter hat:

eine Einrichtung zum Sichern - im Registerwert-Sicherungsbereich für die aktive Aufgabe - von Werten der Registergruppe, zu welcher das Register, welches die aktive Aufgabe gerade verwendet, gehört, wenn es eine Notwendigkeit gibt, zumindest einen Registerwert des Registers zu sichern; und
eine Einrichtung zum Lesen irgendeines gültigen Werts, der im Registerwert-Sicherungsbereich gesichert ist, für die aktive Aufgabe als Registerwert des Registers, welches die aktive Aufgabe gerade verwendet, wobei der Registerwert in den Registerwert-Sicherungsbereich für die aktive Aufgabe gelesen wird.

8. Aufgaben-Umschaltvorrichtung nach Anspruch 7, wobei Registergruppen-Monopolisierungs-Aufgabevariable, die jeweils auf einen Wert gesetzt sind, der eine der Aufgaben bezeichnet, welche eine der mehreren Registergruppen monopolisieren, vorgesehen sind, und der Registergruppen-Monopolisierungs-Aufgabenumschalter eine Einrichtung hat, um einen Wert festzulegen, der die aktive Aufgabe als die Registergruppen-Monopolisierungs-Aufgabenvariable entsprechend der Registergruppe bestimmt, zu der das Register, welches die aktive Aufgabe gerade verwendet, gehört.

9. Aufgaben-Umschaltvorrichtung nach Anspruch 8, wobei eine aktive Aufgabenvariable, welche auf einen Wert gesetzt ist, welche die aktive Aufgabe bezeichnet, vorgesehen ist, und der Registergruppen-Verwendbarkeitsprüfer bestimmt, ob die aktive Aufgabe die Registergruppe verwenden kann, zu der das Register, welches die aktive Aufgabe gerade verwendet, gehört, wobei ein Vergleich zwischen dem Wert der aktiven Aufgabenvariable und dem Wert der Registergruppen-Monopolisierungs-Aufgabenvariable entsprechend der Registergruppe ausgeführt wird, zu dem das Register, welches die aktive Aufgabe gerade verwendet, gehört.

10. Aufgaben-Umschaltvorrichtung nach Anspruch 7, wobei jede der mehreren Aufgaben - in einer Beziehung eins-zu-eins mit den mehreren Registergruppen - Registergruppen-Sicherungswert-Gültigkeitsflags hat, um zu zeigen, ob die Aufgabe zumindest eine der mehreren Registergruppen verwendet, wobei der Registergruppen-Monopolisierungs-Aufgabenumschalter hat:

eine Einrichtung zum Setzen eines Werts, der zeigt, dass eines der Register in einer der Registergruppen durch die aktive Aufgabe verwendet wurde, im Registergruppen-Sicherungswert-Gültigkeitsflag entsprechend der einen der Registergruppen, zu der das eine der Register in den Registergruppen-Sicherungswert-Gültigkeitsflags gehört, entsprechend der aktiven Aufgabe, wenn zumindest ein Wert des einen der Register als Ergebnis der Verwendung des einen der Register durch die aktive Aufgabe effektiv wird;
eine Einrichtung zum Bestimmen, ob es eine Notwendigkeit gibt, zumindest einen Registerwert des Registers zu sichern, welches die aktive Aufgabe gerade verwendet, wobei das Bestimmen auf Basis des Werts des Registergruppen-Sicherungswert-Gültigkeitsflags durchgeführt wird, entsprechend einer der Aufgaben unter Verwendung des Registers, welches die aktive Aufgabe gerade verwendet; und
eine Einrichtung zum Bestimmen, ob zumindest ein gültiger Wert im Registerwert-Sicherungsbereich für die aktive Aufgabe als ein Registerwert des Registers gesichert ist, welches die aktive Aufgabe gerade verwendet, wobei das Bestimmen auf Basis des Werts des Registergruppen-Sicherungswert-Gültigkeitsflags entsprechend der aktiven Aufgabe durchgeführt wird.

11. Aufgaben-Umschaltvorrichtung nach Anspruch 10, wobei, wenn es eine Möglichkeit des Registergruppen-Verwendbarkeitsprüfers gibt, nicht in der Lage zu sein, ein Recht in Bezug auf eine der mehreren Registergruppen zu prüfen, der Aufgabeumschalter eine Einrichtung aufweist, im Registergruppen-Sicherungswert-Gültigkeitsflag entsprechend der einen der Registergruppen, einen Wert zu setzen, der zeigt, dass zumindest ein gültiger Wert im Registerwert-Sicherungsbereich existiert, der einer der Registergruppen entspricht.

12. Aufgaben-Umschaltvorrichtung nach Anspruch 10, welche außerdem eine Einrichtung aufweist bevor die Ausführung einer der Aufgaben gestoppt ist - den Wert jeder der Registergruppen-Sicherungswert-Gültigkeitsflags zu setzen, der der Aufgabe entspricht, auf einen Wert, der zeigt, dass keines der Register in der Registergruppe in Verwendung ist.

13. Aufgaben-Umschaltvorrichtung nach Anspruch 7, wobei jede der mehreren Aufgaben Registergruppen-Verwendungsflags in einer Beziehung von eins-zu-eins mit den mehreren Registergruppen hat, wobei der Registergruppen-Monopolisierungs-Aufgabenumschalter hat:

eine Einrichtung zum Setzen - im Registergruppen-Verwendungsflag entsprechend der Registergruppe, zu der eines der Register, welche eine der Aufgaben verwendet, gehört - eines Werts, der zeigt, dass die eine der Aufgaben das Register verwendet, welches zu dem einem der Registergruppen gehört; und eine Einrichtung zum Bestimmen, ob es eine Notwendigkeit gibt, einen Registerwert des Registers, welches die aktive Aufgabe gerade verwendet, zu sichern, wobei das Bestimmen auf Basis des Werts des Registergruppen-Verwendungsflags getroffen wird, welches der Registergruppe entspricht, zu dem das Register, welches die aktive Aufgabe gerade verwendet, gehört.

14. Aufgaben-Umschaltvorrichtung nach Anspruch 13, wobei, wenn es eine Möglichkeit des Registergruppen-Verwendbarkeitsprüfers gibt, nicht in der Lage zu sein, ein Recht zur Verwendung in Bezug auf eine der mehreren Registergruppen zu prüfen, der Aufgabenumschalter eine Einrichtung zum Setzen - im Registergruppen-Verwendungsflag entsprechend der einen der Registergruppen - eines Werts aufweist, der zeigt, dass zumindest eines der Register, welches zu der einer der Registergruppen gehört, in Verwendung ist.

15. Aufgaben-Umschaltvorrichtung nach Anspruch 7, wobei jede der mehreren Aufgaben ein Registergruppen-Monopolisierungsflag hat, um zu zeigen, ob die Aufgabe jede der mehreren Registergruppen monopolisiert, wobei der Registergruppen-Monopolisierungs-Aufgabenumschalter hat:

eine Einrichtung zum Setzen eines Werts, der zeigt, dass eine der Registergruppen nicht monopolisiert ist, wenn eine der Registergruppen die Registergruppe ist, zu der das Register, welches die aktive Aufgabe gerade verwendet, gehört, wobei der Wert im Registergruppen-Monopolisierungsflag entsprechend der Registergruppe gesetzt wird, zu dem das Register, welches die aktive Aufgabe gerade verwendet, gehört, in den Registergruppen-Monopolisierungsflags einer der Aufgaben, welche die eine der Registergruppen monopolisiert; und eine Einrichtung zum Setzen eines Werts, der zeigt, dass die Registergruppe, zu der das Register, welches die aktive Aufgabe gerade verwendet, gehört, monopolisiert wird, wobei der Wert in dem Registergruppen-Monopolisierungsflag entsprechend den Registergruppen, zu denen das Register, welches die aktive Aufgabe gerade verwendet, gehört, in den Registergruppen-Monopolisierungsflags entsprechend der aktiven Aufgabe gesetzt wird.

16. Aufgaben-Umschaltvorrichtung nach Anspruch 1, wobei die Register, welche zu den Registergruppen gehören, mit einer Zentralverarbeitungseinheit verarbeitet werden, welche einen Cache-Speicher hat, wobei die Aufgaben-Umschaltvorrichtung außerdem eine Einrichtung aufweist, um jeden der Registerwert-Sicherungsbereiche in Hilfsbereiche zu unterteilen, welche einigen der Registergruppen entsprechen, so dass jeder Hilfsbereich eine Größe hat, welche einem ganzzahligen Vielfachen einer Cache-Leitungsgröße des Cache-Speichers entspricht.

17. Aufgaben-Umschaltvorrichtung nach Anspruch 1, wobei die Registerwert-Sicherungsbereiche in einem Cache-Speicher gesichert sind, wobei die Aufgaben-Umschaltvorrichtung außerdem eine Einrichtung aufweist, um die Registerwert-Sicherungsbereiche zu sichern, so dass die Startadresse jedes Registerwert-Sicherungsbereichs einer Cache-Leitungsgrenze entspricht.

18. Aufgaben-Umschaltvorrichtung nach Anspruch 1, welche außerdem eine Einrichtung zum Sichern der Registerwert-Sicherungsbereiche aufweist, während die Größe jedes Registerwert-Sicherungsbereichs gemäß der Größe der gesicherten Registerwerte dynamisch geändert wird.

**19.** Aufgaben-Umschaltvorrichtung nach Anspruch 18, welche außerdem eine Einrichtung zum dynamischen Ändern der Größe des Registerwert-Sicherungsbereichs in Bezug auf jede der Registergruppen aufweist.

**20.** Aufgaben-Umschaltvorrichtung nach Anspruch 18, welche außerdem eine Einrichtung zum Sichern eines jeden der Registerwert-Sicherungsbereiche in einem Speicherblock aufweist, in welchem ein Stapel, der für die entsprechende Aufgabe verwendet wird, ebenfalls vorgesehen ist, wobei der Registerwert-Sicherungsbereich in einer Richtung entgegengesetzt von der Richtung gesichert ist, in der Daten im Stapel durch die Aufgabe gesichert sind.

**21.** Aufgaben-Umschaltvorrichtung nach Anspruch 20, welche außerdem eine Einrichtung aufweist, um zu prüfen, ob der Registerwert-Sicherungsbereich und der Bereich, der als Stapel durch die Aufgabe verwendet wird, sich einander nicht überlappen, wenn der Registerwert-Sicherungsbereich dynamisch geändert wird.

**22.** Aufgaben-Umschaltverfahren in einem Mehrfachaufgaben-System, welches aufweist:

einen Ausführungsschritt zum Ausführen von mehreren Aufgaben parallel miteinander, während die Unabhängigkeit jeder Aufgabe sichergestellt ist, wobei jede Aufgabe einen Registerwert-Sicherungsbereich für ihre exklusive Verwendung hat;
einen Speicherschritt zum Speichern mehrerer Registergruppen in einem separaten Zustand;
einen Aufgabenumschaltschritt zum Umschalten der Aufgaben, so dass eine zweite der Aufgaben anstelle einer ersten der Aufgaben aktiv wird;
einen Registergruppen-Verwendbarkeits-Prüfschritt zum Prüfen, wenn die aktive Aufgabe eines der Register verwendet, welches zu einer der mehreren Gruppen gehört, ob die aktive Aufgabe ein Recht hat, die Registergruppe zu verwenden, zu der das Register, welches durch die aktive Aufgabe zu verwenden ist, gehört; und
einen Registergruppen-Monopolisierungs-Aufgabenschaltschritt, um einer aktiven Aufgabe ein Recht zu geben, die Registergruppe zu verwenden, zu der das Register, welches durch die aktive Aufgabe zu verwenden ist, gehört, wenn die aktive Aufgabe nicht ein Recht hat, die Registergruppe zu verwenden.

**23.** Aufgaben-Umschaltverfahren nach Anspruch 22, wobei, wenn es eine Möglichkeit des Registergruppen-Verwendbarkeits-Prüfschritts gibt, beim Prüfen eines Rechts zur Verwendung in Bezug auf eine der mehreren Registergruppen nicht erfolgreich zu sein, der Aufgabenumschaltschritt aufweist:

einen Schritt zum Speichern von Werten der Register der einen der Registergruppen im Registerwert-Sicherungsbereich für die erste Aufgabe; und
einen Schritt zum Lesen - in die Register der einen der Registergruppen - von Werten, welche im Registerwert-Sicherungsbereich für die zweite Aufgabe gespeichert sind.

**24.** Aufgaben-Umschaltverfahren nach Anspruch 22, wobei der Registergruppen-Verwendbarkeits-Prüfschritt einen Schritt zum Bestimmen aufweist, ob die aktive Aufgabe ein Recht hat, die Registergruppe zu verwenden, zu der das Register, welches die aktive Aufgabe gerade verwendet, gehört, auf Basis eines Werts eines Registergruppen-Verwendungs-Zulassungsflags, welches der Registergruppe entspricht.

**25.** Aufgaben-Umschaltverfahren nach Anspruch 24, wobei ein Registergruppen-Verwendungs-Zulassungsflag in Bezug auf jeden der Funktionsblöcke vorgesehen ist, welcher zumindest eine der Registergruppen bildete, welche eine allgemeine Funktion bereitstellen, und der Registergruppen-Verwendbarkeits-Prüfschritt einen Schritt aufweist, zu bestimmen, ob die aktive Aufgabe ein Recht hat, den Funktionsblock zu verwenden, zu dem das Register, welches die aktive Aufgabe gerade verwendet, gehört, auf Basis eines Werts des entsprechenden Registergruppen-Verwendungs-Zulassungsflags.

**26.** Aufgaben-Umschaltverfahren nach Anspruch 24, wobei der Aufgabenumschaltschritt aufweist:

einen Schritt zum Sichern - in jedem der Registergruppen-Monopolisierungsflags der ersten Aufgabe - eines Werts eines entsprechenden Registergruppen- Verwendungs- Zulassungsflags; und
einen Schritt zum Lesen eines Werts jedes der Registergruppen-Monopolisierungsflags der zweiten Aufgabe entsprechend dem Registergruppen-Verwendungs-Zulassungsflag, und der Registergruppen-Monopolisierungsaufgaben-Umschaltschritt aufweist:

ein Schritt zum Setzen eines Werts, der zeigt, dass eine der Aufgaben, welche ein Recht hat, eine der Registergruppen zu nutzen, die eine der Registergruppen nicht monopolisiert, wenn die eine der Registergruppen die Registergruppe ist, zu der das Register, welches die aktive Aufgabe gerade verwendet, gehört, wobei der Wert im Registergruppen-Monopolisierungsflag gesetzt wird, der einer der Registergruppen entspricht, in den Registergruppen-Monopolisierungsflags der einen der Aufgaben, welche ein Recht hat, die eine der Registergruppen zu verwenden.

27. Aufgaben-Umschaltverfahren nach Anspruch 23, wobei der Registergruppen-Monopolisierungs-Aufgabenumschaltschritt aufweist:

einen Schritt zum Sichern - im Registerwert-Sicherungsbereich für die aktive Aufgabe - von Werten der Registergruppe, zu der das Register, welche die aktive Aufgabe gerade verwendet, gehört, wenn es eine Notwendigkeit gibt, zumindest einen Registerwert des Registerwerts zu sichern; und einen Schritt zum Lesen eines gültigen Werts im Registerwert-Sicherungsbereich für die aktive Aufgabe als einen Registerwert des Registers, welches die aktive Aufgabe gerade verwendet, wobei der Registerwert in den Registerwert-Sicherungsbereich für die aktive Aufgabe gelesen wird.

28. Aufgaben-Umschaltverfahren nach Anspruch 27, wobei der Registergruppen-Monopolisierungsaufgaben-Umschaltschritt einen Schritt zum Setzen eines Werts aufweist, der die aktive Aufgabe als Registergruppen- Monopolisierungsaufgabenvariable bestimmt, entsprechend der Registergruppe, zu dem das Register, welches die aktive Aufgabe gerade verwendet, gehört.

29. Aufgaben-Umschaltverfahren nach Anspruch 28, wobei der Registergruppen-Verwendbarkeits-Prüfschritt einen Schritt aufweist, zu bestimmen, ob die aktive Aufgabe die Registergruppe verwenden kann, zu welcher das Register, welches die aktive Aufgabe gerade verwendet, gehört, wobei ein Vergleich zwischen dem Wert einer aktiven Aufgabenvariablen, welche die aktive Aufgabe bezeichnet, und dem Wert der Registergruppen-Monopolisierungsaufgabenvariablen getroffen wird, welche der Registergruppe entspricht, zu der das Register, welches die aktive Aufgabe gerade verwendet, gehört.

30. Aufgaben-Umschaltverfahren nach Anspruch 27, wobei der Registergruppen-Monopolisierungsaufgaben-Umschaltschritt aufweist:

einen Schritt zum Setzen eines Werts, der zeigt, dass eines der Register in einer der Registergruppen durch die aktive Aufgabe in einem Registergruppen- Sicherungswert- Gültigkeitsflag verwendet wurde, welches der einen der Registergruppen entspricht, zu das das eine der Register gehört, in Registergruppen-Sicherungswert-Gültigkeitsflags entsprechend der aktiven Aufgabe, wenn zumindest ein Wert des einen der Register als Ergebnis der Verwendung des einen der Register durch die aktive Aufgabe erfolgreich wird; einen Schritt zum Bestimmen, ob es eine Notwendigkeit gibt, zumindest einen Registerwert des Registers, welches die aktive Aufgabe gerade verwendet, zu sichern, wobei das Bestimmen auf Basis eines Werts des Registergruppen-Speicherwert-Gültigkeitsflags gemacht wird, welches einer der Aufgaben entspricht, unter Verwendung des Registers, welches die aktive Aufgabe gerade verwendet; und einen Schritt zum Bestimmen, ob zumindest ein gültiger Wert im Registerwert-Speicherbereich für die aktive Aufgabe als ein Registerwert des Registers gesichert wurde, welches die aktive Aufgabe gerade verwendet, wobei das Bestimmen auf Basis des Werts des Registergruppen-Sicherungswert-Gültigkeitsflags gemacht wird, welches der aktiven Aufgabe entspricht.

31. Aufgaben-Umschaltverfahren nach Anspruch 30, wobei, wenn es eine Möglichkeit gibt, dass der Registergruppen-Verwendbarkeits-Prüfschritt nicht erfolgreich ist, ein Recht zur Verwendung in Bezug auf eine der mehreren Registergruppen zu prüfen, der Aufgabenumschaltschritt einen Schritt zum Setzen aufweist - in einem Registergruppen-Sicherungswert-Gültigkeitsflag, welches der einen der Registergruppen entspricht - eines Werts, der zeigt, dass zumindest ein gültiger Wert im Registerwert-Sicherungsbereich existiert, der dem einen der Registergruppen entspricht.

32. Aufgaben-Umschaltverfahren nach Anspruch 30, welches außerdem einen Schritt zum Setzen aufweist- bevor die Ausführung einer der Aufgaben gestoppt ist - des Werts jedes der Registerwert-Sicherungsbereich-Gültigkeitsflags entsprechend der Aufgabe auf einen Wert, der zeigt, dass keines der Register in der Registergruppe in Verwendung ist.

33. Aufgaben-Umschaltverfahren nach Anspruch 27, wobei der Registergruppen-Monopolisierungsaufgaben-Umschaltschritt aufweist:

einen Schritt zum Setzen - in einem Registergruppen-Verwendungsflag, welches der Registergruppe entspricht, zu der eines der Register, welches eine der Aufgaben verwendet, gehört - eines Werts, der zeigt, dass die eine der Aufgaben das Register verwendet, zu der die eine der Registergruppen gehört; und einen Schritt zum Bestimmen, ob es eine Notwendigkeit gibt, einen Registerwert des Registers, welches die aktive Aufgabe gerade verwendet, zu sichern, wobei das Bestimmen auf Basis eines Werts eines Registergruppen-Verwendungsflags durchgeführt wird, welches der Registergruppe entspricht, zu der das Register, welches die aktive Aufgabe gerade verwendet, gehört.

34. Aufgaben-Umschaltverfahren nach Anspruch 33, wobei, wenn es eine Möglichkeit gibt, dass der Registergruppen-Verwendbarkeits-Prüfschritt nicht erfolgreich ist, ein Recht in Bezug auf eine der mehreren Registergruppen zur Verwendung zu prüfen, der Aufgabenumschaltschritt einen Schritt zum Setzen aufweist - in einem Registergruppen-Verwendungsflag, welches der einen der Registergruppen entspricht - eines Werts, der zeigt, dass zumindest eines der Register, welches zu der einen der Registergruppe gehört, in Verwendung ist.

35. Aufgaben-Umschaltverfahren nach Anspruch 27, wobei der Registergruppen-Monopolisierungsaufgaben-Umschaltschritt aufweist:

eine Einrichtung zum Setzen eines Werts, der zeigt, dass eine der Registergruppen nicht monopolisiert ist, wenn die eine der Registergruppen die Registergruppe ist, zu der das Register, welches die aktive Aufgabe gerade verwendet, gehört, wobei der Wert in einem Registergruppen-Monopolisierungsflag gesetzt wird, welches der Registergruppe entspricht, zu dem das Register, welches die aktive Aufgabe gerade verwendet, gehört, in Registergruppen-Monopolisierungsflags entsprechend der einen der Aufgaben, welche die eine der Registergruppen monopolisieren; und
einen Schritt zum Setzen eines Werts, der zeigt, dass die Registergruppe, zu der das Register, welches die aktive Aufgabe gerade verwendet, gehört, monopolisiert ist, wobei der Wert in einem Registergruppen-Monopolisierungsflag gesetzt wird, der der Registergruppe entspricht, zu welcher das Register, welches die aktive Aufgabe gerade verwendet, gehört, in Registergruppen-Monopolisierungsflags, welche der aktiven Aufgabe entsprechen.

36. Aufgaben-Umschaltverfahren nach Anspruch 22, wobei die Register, welche zu den Registergruppen gehören, mit einer Zentralverarbeitungseinheit verarbeitet werden, welche einen Cache-Speicher hat, wobei das Aufgabenumschaltverfahren außerdem einen Schritt aufweist, um jeden der Registerwert-Sicherungsbereiche in Hilfsbereiche zu unterteilen, welche einigen der Registergruppen entsprechen, so dass jeder Hilfsbereich eine Größe hat, welche einem ganzzahligen Vielfachen einer Cache-Leitungsgröße des Cache-Speichers entspricht.

37. Aufgaben-Umschaltverfahren nach Anspruch 22, wobei die Registerwert-Sicherungsbereiche in einem Cache-Speicher gesichert sind, wobei das Aufgabenumschaltverfahren außerdem einen Schritt aufweist, um die Registerwert-Sicherungsbereiche zu sichern, so dass die Startadresse jedes Registerwert-Sicherungsbereichs einer Cache-Leitungsgrenze entspricht.

38. Aufgaben-Umschaltverfahren nach Anspruch 22, welches außerdem einen Schritt aufweist, die Registerwert-Sicherungsbereiche zu sichern, wobei die Größe jedes Registerwert-Sicherungsbereichs gemäß der Größe der gesicherten Registerwerte dynamisch geändert wird.

39. Aufgaben-Umschaltverfahren nach Anspruch 38, welches außerdem einen Schritt aufweist, um die Größe des Registerwert-Sicherungsbereichs in Bezug auf jede der Registergruppen dynamisch zu ändern.

40. Aufgaben-Umschaltverfahren nach Anspruch 38, welches außerdem den Schritt aufweist, jeden der Registerwert-Sicherungsbereiche in einem Speicherblock zu sichern, in welchem ein Stapel, der für die entsprechende Aufgabe verwendet wird, ebenfalls vorgesehen ist, wobei der Registerwert-Sicherungsbereich in einer Richtung entgegengesetzt von der Richtung gesichert ist, in welcher Daten im Stapel durch die Aufgabe gespeichert werden.

41. Aufgaben-Umschaltverfahren nach Anspruch 40, welches außerdem einen Schritt zum Prüfen aufweist, ob der Registerwert-Sicherungsbereich und der Bereich, der als Stapel durch die Aufgabe verwendet wird, sich nicht einander überlappen, wenn der Registerwert-Sicherungsbereich dynamisch geändert wird.

**Revendications**

1. Appareil de commutation de tâches dans un système multitâche, comprenant :

une pluralité de tâches (TASK 0...7) exécutées en parallèle les unes par rapport aux autres tandis que l'indépendance de chaque tâche est assurée, chaque tâche comprenant une zone de sauvegarde de valeurs de registres destinée à son usage exclusif ;
une pluralité de groupes de registres (RESOURCE GROUP 0...15) pour gérer des registres dans un état séparé ;
un dispositif de commutation de tâches qui commute les tâches de façon à ce qu'une deuxième des tâches devienne active à la place d'une première des tâches ;

un dispositif de vérification de l'utilisation d'un groupe de registres pour vérifier, quand la tâche active utilise un des registres qui appartient à l'un de la pluralité de groupes, si la tâche active a un droit - ou non - d'utiliser le groupe de registres auquel appartient le registre qui doit être utilisé par la tâche active ; et

un dispositif de commutation de tâches monopolisant un groupe de registres, pour donner à la tâche active un droit d'utiliser le groupe de registres auquel appartient le registre qui doit être utilisé par la tâche active si la tâche active n'a pas le droit d'utiliser le groupe de registres.

2. Appareil de commutation de tâches selon la revendication 1, dans lequel, si une possibilité existe que ledit dispositif de vérification de l'utilisation d'un groupe de registres ne soit pas apte à vérifier un droit d'utilisation par rapport à l'un de la pluralité des groupes de registres, ledit dispositif de commutation de tâches comprend :

des moyens pour sauvegarder des valeurs des registres dudit un des groupes de registres dans la zone de sauvegarde de valeurs de registres pour la première tâche ; et

des moyens pour lire, dans les registres dudit un des groupes de registres, des valeurs sauvegardées dans la zone de sauvegarde de valeurs de registres pour la deuxième tâche.

3. Appareil de commutation de tâches selon la revendication 1, dans lequel chacune de la pluralité de tâches possède un drapeau d'autorisation d'utilisation de groupe de registres pour indiquer si la tâche a - ou non - un droit d'utiliser l'un des groupes de registres, et ledit dispositif de vérification de l'utilisation d'un groupe de registres possède des moyens pour réaliser une détermination liée au fait que la tâche active a - ou non - un droit d'utiliser l'un des groupes de registres sur la base d'une valeur du drapeau d'autorisation d'utilisation de groupe de registres.

4. Appareil de commutation de tâches selon la revendication 3, dans lequel chacune de la pluralité de tâches possède - selon une correspondance de un à un avec la pluralité de groupes de registres, des drapeaux de monopolisation de groupes de registres pour indiquer si la tâche monopolise - ou non - au moins un de la pluralité de groupes de registres, ledit dispositif de commutation de tâches comprenant :

des moyens pour sauvegarder la valeur du drapeau d'autorisation d'utilisation de groupe de registres comme une valeur du drapeau de monopolisation de groupe de registres correspondant de la première tâche ; et

des moyens pour lire la valeur de chacun des drapeaux de monopolisation de groupes de registres de la deuxième tâche par rapport au drapeau d'autorisation d'utilisation de groupe de registres correspondant, ledit dispositif de commutation de tâches monopolisant un groupe de registres comprenant :

des moyens pour définir une valeur indiquant que l'une des tâches qui a un droit d'utiliser l'un des groupes de registres ne monopolise pas ledit un des groupes de registres si ledit un des groupes de registres est le groupe de registres auquel appartient le registre que la tâche active doit avoir le droit d'utiliser, la valeur étant définie dans le drapeau de monopolisation de groupe de registres correspondant audit un des groupes de registres dans les drapeaux de monopolisation de groupes de registres de ladite une des tâches qui a un droit d'utiliser ledit un des groupes de registres.

5. Appareil de commutation de tâches selon la revendication 3, dans lequel les groupes de registres sont séparés en blocs fonctionnels qui contiennent chacun au moins un des groupes de registres assurant une fonction commune, et chacun des blocs fonctionnels possède le drapeau d'autorisation d'utilisation de groupes de registres pour indiquer si la tâche active a - ou non - un droit d'utiliser le bloc fonctionnel.

6. Appareil de commutation de tâches selon la revendication 3, dans lequel chacun de la pluralité de groupes de registres possède le drapeau d'autorisation d'utilisation de groupe de registres pour indiquer si la tâche a - ou non - un droit d'utiliser le groupe de registres.

7. Appareil de commutation de tâches selon la revendication 2, dans lequel ledit dispositif de commutation de tâches monopolisant un groupe de registres comprend :

des moyens pour sauvegarder, dans la zone de sauvegarde de valeurs de registres pour la tâche active, des valeurs du groupe de registres auquel appartient le registre que la tâche active est sur le point d'utiliser si il s'avère nécessaire de sauvegarder au moins une valeur de registre du registre ; et

des moyens pour lire n'importe quelle valeur valide sauvegardée dans la zone de sauvegarde de valeurs de registres pour la tâche active en tant qu'une valeur de registre du registre que la tâche active est sur le point d'utiliser, la valeur de registre étant lue dans la zone de sauvegarde de valeurs de registres pour la tâche active.

8. Appareil de commutation de tâches selon la revendication 7, dans lequel des variables de tâches monopolisant des groupes de registres - qui sont définies chacune à une valeur désignant l'une des tâches qui monopolisent l'un de la pluralité de groupes de registres - sont prévues, et ledit dispositif de commutation de tâches monopolisant un groupe de registres comprend des moyens pour définir une valeur désignant la tâche active comme la variable d'une tâche monopolisant le groupe de registres correspondant au groupe de registres auquel appartient le registre que la tâche active est sur le point d'utiliser.

9. Appareil de commutation de tâches selon la revendication 8, dans lequel une variable de tâche active qui est définie à une valeur désignant la tâche active est prévue, et ledit dispositif de vérification de l'utilisation d'un groupe de registres accomplit une détermination liée au fait que la tâche active peut - ou non - utiliser le groupe de registres auquel appartient le registre que la tâche active est sur le point d'utiliser, en réalisant une comparaison entre la valeur de la variable de la tâche active et la valeur de la variable de la tâche monopolisant le groupe de registres correspondant au groupe de registres auquel appartient le registre que la tâche active est sur le point d'utiliser.

10. Appareil de commutation de tâches selon la revendication 7, dans lequel chacune de la pluralité de tâches possède - selon une correspondance de un à un avec la pluralité de groupes de registres, des drapeaux de validité de valeurs sauvegardées de groupes de registres pour indiquer si la tâche utilise - ou non - au moins un de la pluralité de groupes de registres, ledit dispositif de commutation de tâches monopolisant un groupe de registres comprenant :

des moyens pour définir une valeur indiquant que l'un des registres dans l'un des groupes de registres a été utilisé par la tâche active dans le drapeau de validité de valeurs sauvegardées de groupes de registres correspondant audit un des groupes de registres auquel appartient ledit un des registres dans les drapeaux de validité de valeurs sauvegardées de groupes de registres correspondant à la tâche active quand au moins une valeur dudit un des registres devient effective en résultat de l'utilisation dudit un des registres par la tâche active ;
des moyens pour accomplir une détermination liée au fait qu'il existe - ou non - une nécessité de sauvegarder au moins une valeur de registre du registre que la tâche active est sur le point d'utiliser, la détermination étant accomplie sur la base de la valeur du drapeau de validité de valeurs sauvegardées de groupes de registres correspondant à l'une des tâches utilisant le registre que la tâche active est sur le point d'utiliser ; et
des moyens pour accomplir une détermination liée au fait que au moins une valeur valide a été - ou non - sauvegardée dans la zone de sauvegarde de valeurs de registres pour la tâche active en tant qu'une valeur de registre du registre que la tâche active est sur le point d'utiliser, la détermination étant accomplie sur la base de la valeur du drapeau de validité de valeurs sauvegardées de groupes de registres correspondant à la tâche active.

11. Appareil de commutation de tâches selon la revendication 10, dans lequel, si une possibilité existe que ledit dispositif de vérification de l'utilisation d'un groupe de registres ne soit pas apte à vérifier un droit d'utilisation par rapport à l'un de la pluralité des groupes de registres, ledit dispositif de commutation de tâches comprend des moyens pour définir, dans le drapeau de validité de valeurs sauvegardées de groupes de registres correspondant audit un des groupes de registres, une valeur indiquant que au moins une valeur valide existe dans la zone de sauvegarde de valeurs de registres correspondant audit un des groupes de registres.

12. Appareil de commutation de tâches selon la revendication 10, comprenant par ailleurs des moyens pour définir, avant que l'exécution de l'une des tâches ne soit stoppée, la valeur de chacun des drapeaux de validité de valeurs sauvegardées de groupes de registres correspondant à la tâche, à une valeur indiquant que aucun des registres dans le groupe de registres n'est en cours d'utilisation.

13. Appareil de commutation de tâches selon la revendication 7, dans lequel chacune de ladite pluralité de tâches possède - selon une correspondance de un à un avec la pluralité de groupes de registres, des drapeaux d'utilisation en cours de groupes de registres, ledit dispositif de commutation de tâches monopolisant un groupe de registres comprenant :

des moyens pour définir, dans le drapeau d'utilisation en cours de groupe de registres correspondant au groupe de registres auquel appartient l'un des registres que l'une des tâches utilise, une valeur indiquant que ladite une des tâches est en train d'utiliser le registre qui appartient audit un des groupes de registres ; et
des moyens pour accomplir une détermination liée au fait qu'il existe - ou non - une nécessité de sauvegarder une valeur de registre du registre que la tâche active est sur le point d'utiliser, la détermination étant accomplie sur la base de la valeur du drapeau d'utilisation en cours de groupe de registres correspondant au groupe de registres auquel appartient le registre que la tâche active est sur le point d'utiliser.

14. Appareil de commutation de tâches selon la revendication 13, dans lequel, si une possibilité existe que ledit dispositif de vérification de l'utilisation d'un groupe de registres ne soit pas apte à vérifier un droit d'utilisation par rapport à l'un de la pluralité des groupes de registres, ledit dispositif de commutation de tâches comprend des moyens pour définir, dans le drapeau d'utilisation en cours de groupe de registres correspondant audit un des groupes de registres, une valeur indiquant que au moins un des registres qui appartient audit un des groupes de registres est en cours d'utilisation.

15. Appareil de commutation de tâches selon la revendication 7, dans lequel chacune de ladite pluralité de tâches possède un drapeau de monopolisation de groupe de registres pour indiquer si la tâche monopolise - ou non - chacun de la pluralité de groupes de registres, ledit dispositif de commutation de tâches monopolisant un groupe de registres comprenant :

des moyens pour définir une valeur indiquant que l'un des groupes de registres n'est pas monopolisé si l'un desdits groupes de registres est le groupe de registres auquel appartient le registre que la tâche active est sur le point d'utiliser, la valeur étant définie dans le drapeau de monopolisation de groupe de registres correspondant au groupe de registres auquel appartient le registre que la tâche active est sur le point d'utiliser dans les drapeaux de monopolisation de groupes de registres de l'une des tâches qui monopolisent ledit un des groupes de registres ; et
des moyens pour définir une valeur indiquant que le groupe de registres auquel appartient le registre que la tâche active est sur le point d'utiliser est monopolisé, la valeur étant définie dans le drapeau de monopolisation de groupe de registres correspondant au groupe de registres auquel appartient le registre que la tâche active est sur le point d'utiliser dans les drapeaux de monopolisation de groupes de registres correspondant à la tâche active.

16. Appareil de commutation de tâches selon la revendication 1, dans lequel les registres qui appartiennent aux groupes de registres sont traités au moyen d'une unité centrale de traitement comprenant une mémoire cache, l'appareil de commutation de tâches comprenant par ailleurs des moyens pour diviser chacune des zones de sauvegarde de valeurs de registres en des sous-zones correspondant à certains des groupes de registres, de telle sorte que chaque sous-zone a une dimension qui correspond à un nombre entier multiple de la taille d'une ligne de cache de la mémoire cache.

17. Appareil de commutation de tâches selon la revendication 1, dans lequel les zones de sauvegarde de valeurs de registres sont sécurisées sur une mémoire cache, l'appareil de commutation de tâches comprenant par ailleurs des moyens pour sécuriser les zones de sauvegarde de valeurs de registres, de telle sorte que l'adresse de début de chaque zone de sauvegarde de valeurs de registres correspond à la limite d'une ligne de cache.

18. Appareil de commutation de tâches selon la revendication 1, comprenant par ailleurs des moyens pour sécuriser les zones de sauvegarde de valeurs de registres tout en changeant de façon dynamique la dimension de chaque zone de sauvegarde de valeurs de registres en accord avec la dimension des valeurs de registres sauvegardées.

19. Appareil de commutation de tâches selon la revendication 18, comprenant par ailleurs des moyens pour changer de façon dynamique la dimension de la zone de sauvegarde de valeurs de registres en rapport avec chacun des groupes de registres.

20. Appareil de commutation de tâches selon la revendication 18, comprenant par ailleurs des moyens pour sécuriser chacune des zones de sauvegarde de valeurs de registres dans un seul bloc mémoire dans lequel une pile utilisée pour la tâche correspondante est également prévue, la zone de sauvegarde de valeurs de registres étant sécurisée dans une direction opposée à la direction dans laquelle des données sont enregistrées dans la pile par la tâche.

21. Appareil de commutation de tâches selon la revendication 20, comprenant par ailleurs des moyens pour vérifier si la zone de sauvegarde de valeurs de registres et la zone utilisée comme la pile par la tâche ne se chevauchent pas quand la zone de sauvegarde de valeurs de registres est changée de façon dynamique.

22. Procédé de commutation de tâches dans un système multitâche, comprenant :

une étape d'exécution consistant à exécuter une pluralité de tâches en parallèle les unes par rapport aux autres tandis que l'indépendance de chaque tâche est assurée, chaque tâche comprenant une zone de sauvegarde de valeurs de registres destinée à son usage exclusif ;

une étape de stockage consistant à stocker une pluralité de groupes de registres dans un état séparé ;

une étape de commutation de tâches consistant à commuter les tâches de façon à ce qu'une deuxième des tâches devienne active à la place d'une première des tâches ;

une étape de vérification de l'utilisation d'un groupe de registres consistant à vérifier, quand la tâche active utilise un des registres qui appartient à l'un de la pluralité de groupes, si la tâche active a un droit - ou non - d'utiliser le groupe de registres auquel appartient le registre qui doit être utilisé par la tâche active ; et

une étape de commutation de tâches monopolisant un groupe de registres, consistant à donner à la tâche active un droit d'utiliser le groupe de registres auquel appartient le registre qui doit être utilisé par la tâche active si la tâche active n'a pas le droit d'utiliser le groupe de registres.

23. Procédé de commutation de tâches selon la revendication 22, dans lequel, si une possibilité existe que ladite étape de vérification de l'utilisation d'un groupe de registres ne soit pas apte à vérifier un droit d'utilisation par rapport à l'un de la pluralité des groupes de registres, ladite étape de commutation de tâches comprend :

une étape consistant à sauvegarder des valeurs des registres dudit un des groupes de registres dans la zone de sauvegarde de valeurs de registres pour la première tâche ; et

une étape consistant à lire, dans les registres dudit un des groupes de registres, des valeurs sauvegardées dans la zone de sauvegarde de valeurs de registres pour la deuxième tâche.

24. Procédé de commutation de tâches selon la revendication 22, dans lequel ladite étape de vérification de l'utilisation d'un groupe de registres comprend une étape consistant à accomplir une détermination liée au fait que la tâche active a - ou non - un droit d'utiliser le groupe de registres auquel appartient le registre que la tâche active est sur le point d'utiliser sur la base d'une valeur d'un drapeau d'autorisation d'utilisation de groupe de registres correspondant au groupe de registres.

25. Procédé de commutation de tâches selon la revendication 24, dans lequel un drapeau d'autorisation d'utilisation de groupe de registres est prévu en rapport avec chacun des blocs fonctionnels formés, au moins un des groupes de registres assurant une fonction commune, et ladite étape de vérification de l'utilisation d'un groupe de registres comprend une étape consistant à accomplir une détermination liée au fait que la tâche active a - ou non - un droit d'utiliser le bloc fonctionnel auquel appartient le registre que la tâche active est sur le point d'utiliser sur la base d'une valeur du drapeau d'autorisation d'utilisation de groupe de registres correspondant.

26. Procédé de commutation de tâches selon la revendication 24, dans lequel ladite étape de commutation de tâches comprend :

une étape consistant à sauvegarder, dans chacun des drapeaux de monopolisation de groupes de registres de la première tâche, une valeur d'un drapeau d'autorisation d'utilisation de groupe de registres correspondant ; et

une étape consistant à lire une valeur de chacun des drapeaux de monopolisation de groupes de registres de la deuxième tâche par rapport à un drapeau d'autorisation d'utilisation de groupe de registres correspondant, et ladite étape de commutation de tâches monopolisant un groupe de registres comprend :

une étape consistant à définir une valeur indiquant que l'une des tâches qui a un droit d'utiliser l'un des groupes de registres ne monopolise pas ledit un des groupes de registres si ledit un des groupes de registres est le groupe de registres auquel appartient le registre que la tâche active est sur le point d'utiliser, la valeur étant définie dans le drapeau de monopolisation de groupe de registres correspondant audit un des groupes de registres dans les drapeaux de monopolisation de groupes de registres de ladite une des tâches qui a un droit d'utiliser ledit un des groupes de registres.

27. Procédé de commutation de tâches selon la revendication 23, dans lequel ladite étape de commutation de tâches monopolisant un groupe de registres comprend :

une étape consistant à sauvegarder, dans la zone de sauvegarde de valeurs de registres pour la tâche active, des valeurs du groupe de registres auquel appartient le registre que la tâche active est sur le point d'utiliser si il s'avère nécessaire de sauvegarder au moins une valeur de registre du registre ; et

une étape consistant à lire n'importe quelle valeur valide sauvegardée dans la zone de sauvegarde de valeurs de registres pour la tâche active en tant qu'une valeur de registre du registre que la tâche active est sur le point d'utiliser, la valeur de registre étant lue dans la zone de sauvegarde de valeurs de registres pour la tâche active.

**28.** Procédé de commutation de tâches selon la revendication 27, dans lequel ladite étape de commutation de tâches monopolisant un groupe de registres comprend une étape consistant à définir une valeur désignant la tâche active comme une variable d'une tâche monopolisant le groupe de registres correspondant au groupe de registres auquel appartient le registre que la tâche active est sur le point d'utiliser.

**29.** Procédé de commutation de tâches selon la revendication 28, dans lequel ladite étape de vérification de l'utilisation d'un groupe de registres comprend une étape consistant à accomplir une détermination liée au fait que la tâche active peut - ou non - utiliser le groupe de registres auquel appartient le registre que la tâche active est sur le point d'utiliser en réalisant une comparaison entre la valeur d'une variable de tâche active désignant la tâche active et la valeur de la variable de la tâche monopolisant le groupe de registres correspondant au groupe de registres auquel appartient le registre que la tâche active est sur le point d'utiliser.

**30.** Procédé de commutation de tâches selon la revendication 27, dans lequel ladite étape de commutation de tâches monopolisant un groupe de registres comprend :

une étape consistant à définir une valeur indiquant que l'un des registres dans l'un des groupes de registres a été utilisé par la tâche active dans un drapeau de validité de valeurs sauvegardées de groupes de registres correspondant audit un des groupes de registres auquel appartient ledit un des registres dans les drapeaux de validité de valeurs sauvegardées de groupes de registres correspondant à la tâche active quand au moins une valeur dudit un des registres devient effective en résultat de l'utilisation dudit un des registres par la tâche active ;

une étape consistant à accomplir une détermination liée au fait qu'il existe - ou non - une nécessité de sauvegarder au moins une valeur de registre du registre que la tâche active est sur le point d'utiliser, la détermination étant accomplie sur la base d'une valeur d'un drapeau de validité de valeurs sauvegardées de groupes de registres correspondant à l'une des tâches utilisant le registre que la tâche active est sur le point d'utiliser ; et

une étape consistant à accomplir une détermination liée au fait que au moins une valeur valide a été - ou non - sauvegardée dans la zone de sauvegarde de valeurs de registres pour la tâche active en tant qu'une valeur de registre du registre que la tâche active est sur le point d'utiliser, la détermination étant accomplie sur la base de la valeur du drapeau de validité de valeurs sauvegardées de groupes de registres correspondant à la tâche active.

**31.** Procédé de commutation de tâches selon la revendication 30, dans lequel, si une possibilité existe que ladite étape de vérification de l'utilisation d'un groupe de registres ne soit pas apte à vérifier un droit d'utilisation par rapport à l'un de la pluralité des groupes de registres, ladite étape de commutation de tâches comprend une étape consistant à définir, dans un drapeau de validité de valeurs sauvegardées de groupes de registres correspondant audit un des groupes de registres, une valeur indiquant que au moins une valeur valide existe dans la zone de sauvegarde de valeurs de registres correspondant audit un des groupes de registres.

**32.** Procédé de commutation de tâches selon la revendication 30, comprenant par ailleurs une étape consistant à définir, avant que l'exécution de l'une des tâches ne soit stoppée, la valeur de chacun des drapeaux de validité de valeurs sauvegardées de groupes de registres correspondant à la tâche, à une valeur indiquant que aucun des registres dans le groupe de registres n'est en cours d'utilisation.

**33.** Procédé de commutation de tâches selon la revendication 27, dans lequel ladite étape de commutation de tâches monopolisant un groupe de registres comprend :

une étape consistant à définir, dans un drapeau d'utilisation en cours de groupe de registres correspondant au groupe de registres auquel appartient l'un des registres que l'une des tâches utilise, une valeur indiquant que ladite une des tâches est en train d'utiliser le registre qui appartient audit un des groupes de registres ; et une étape consistant à accomplir une détermination liée au fait qu'il existe - ou non - une nécessité de sauvegarder une valeur de registre du registre que la tâche active est sur le point d'utiliser, la détermination étant accomplie sur la base d'une valeur d'un drapeau d'utilisation en cours de groupe de registres correspondant au groupe de registres auquel appartient le registre que la tâche active est sur le point d'utiliser.

**34.** Procédé de commutation de tâches selon la revendication 33, dans lequel, si une possibilité existe que ladite étape de vérification de l'utilisation d'un groupe de registres ne soit pas apte à vérifier un droit d'utilisation par rapport à l'un de la pluralité des groupes de registres, ladite étape de commutation de tâches comprend une étape consistant à définir, dans un drapeau d'utilisation en cours de groupe de registres correspondant audit un des groupes de registres, une valeur indiquant que au moins un des registres qui appartient audit un des groupes de registres est en cours d'utilisation.

35. Procédé de commutation de tâches selon la revendication 27, dans lequel ladite étape de commutation de tâches monopolisant un groupe de registres comprend :

   des moyens pour définir une valeur indiquant que l'un des groupes de registres n'est pas monopolisé si l'un desdits groupes de registres est le groupe de registres auquel appartient le registre que la tâche active est sur le point d'utiliser, la valeur étant définie dans un drapeau de monopolisation de groupe de registres correspondant au groupe de registres auquel appartient le registre que la tâche active est sur le point d'utiliser dans les drapeaux de monopolisation de groupes de registres correspondant à l'une des tâches qui monopolisent ledit un des groupes de registres ; et
   des moyens pour définir une valeur indiquant que le groupe de registres auquel appartient le registre que la tâche active est sur le point d'utiliser est monopolisé, la valeur étant définie dans un drapeau de monopolisation de groupe de registres correspondant au groupe de registres auquel appartient le registre que la tâche active est sur le point d'utiliser dans les drapeaux de monopolisation de groupes de registres correspondant à la tâche active.

36. Procédé de commutation de tâches selon la revendication 22, dans lequel les registres qui appartiennent aux groupes de registres sont traités au moyen d'une unité centrale de traitement comprenant une mémoire cache, le procédé de commutation de tâches comprenant par ailleurs une étape consistant à diviser chacune des zones de sauvegarde de valeurs de registres en des sous-zones correspondant à certains des groupes de registres, de telle sorte que chaque sous-zone a une dimension qui correspond à un nombre entier multiple de la taille d'une ligne de cache de la mémoire cache.

37. Procédé de commutation de tâches selon la revendication 22, dans lequel les zones de sauvegarde de valeurs de registres sont sécurisées sur une mémoire cache, le procédé de commutation de tâches comprenant par ailleurs une étape consistant à sécuriser les zones de sauvegarde de valeurs de registres, de telle sorte que l'adresse de début de chaque zone de sauvegarde de valeurs de registres correspond à la limite d'une ligne de cache.

38. Procédé de commutation de tâches selon la revendication 22, comprenant par ailleurs une étape consistant à sécuriser les zones de sauvegarde de valeurs de registres tout en changeant de façon dynamique la dimension de chaque zone de sauvegarde de valeurs de registres en accord avec la dimension des valeurs de registres sauvegardées.

39. Procédé de commutation de tâches selon la revendication 38, comprenant par ailleurs une étape consistant à changer de façon dynamique la dimension de la zone de sauvegarde de valeurs de registres en rapport avec chacun des groupes de registres.

40. Procédé de commutation de tâches selon la revendication 38, comprenant par ailleurs une étape consistant à sécuriser chacune des zones de sauvegarde de valeurs de registres dans un seul bloc mémoire dans lequel une pile utilisée pour la tâche correspondante est également prévue, la zone de sauvegarde de valeurs de registres étant sécurisée dans une direction opposée à la direction dans laquelle des données sont enregistrées dans la pile par la tâche.

41. Procédé de commutation de tâches selon la revendication 40, comprenant par ailleurs une étape consistera à vérifier si la zone de sauvegarde de valeurs de registres et la zone utilisée comme la pile par la tâche ne se chevauchent pas quand la zone de sauvegarde de valeurs de registres est changée de façon dynamique.

# FIG. 1

GENERAL
REGISTERS

GENERAL
REGISTERS
0 ~ 127

FLOATING-
POINT
REGISTERS

FLOATING-
POINT
REGISTERS
0 ~ 63

FLOATING-POINT
ARITHMETIC UNIT USE
PERMISSION FLAG

1

TOTAL OF 8192 BITS          TOTAL OF 1 BIT

# FIG. 2

| GENERAL REGISTERS | VARIABLES IN MEMORY |
|---|---|
| RESOURCE GROUP 0 — GENERAL REGISTERS 0 ~ 63 | RESOURCE GROUPS 2 - 3 MONOPOLIZING TASK VARIABLE |
| RESOURCE GROUP 1 — GENERAL REGISTERS 64 ~ 127 | ACTIVE TASK VARIABLE |
| FLOATING-POINT REGISTERS | |
| RESOURCE GROUP 2 — FLOATING-POINT REGISTERS 0 ~ 31 | |
| RESOURCE GROUP 3 — FLOATING-POINT REGISTERS 32 ~ 63 | FLOATING-POINT ARITHMETIC UNIT USE PERMISSION FLAG  1 |

# FIG. 3

APPLICATION
PROGRAMS

APPLICATION
PROGRAM

APPLICATION
PROGRAM

APPLICATION
PROGRAM

OPERATING
SYSTEM

RESOURCE
GROUP
MONOPOLIZING
TASK SWITCH
MECHANISM

TASK
SWITCHING
MECHANISM

OTHER
MECHANISMS
OF OPERATING
SYSTEM

MEMORY

TASK
INFORMATION
SAVE AREA

TASK
INFORMATION
SAVE AREA

TASK
INFORMATION
SAVE AREA

RESOURCE
VALUE
SAVE AREA

RESOURCE
VALUE
SAVE AREA

RESOURCE
VALUE
SAVE AREA

OTHER
DATA OF
OPERATING
SYSTEM

# FIG. 4

| |
|---|
| TASK INFORMATION CORRESPONDING TO TASK 0 |
| TASK INFORMATION CORRESPONDING TO TASK 1 |
| TASK INFORMATION CORRESPONDING TO TASK 2 |
| TASK INFORMATION CORRESPONDING TO TASK 3 |
| TASK INFORMATION CORRESPONDING TO TASK 4 |
| TASK INFORMATION CORRESPONDING TO TASK 5 |
| TASK INFORMATION CORRESPONDING TO TASK 6 |
| TASK INFORMATION CORRESPONDING TO TASK 7 |
| ⋮ |

# FIG. 5

TASK CONTROL INFORMATION AREA

| RESOURCE CONTROL INFORMA-TION AREA | RESOURCE GROUPS 2-3 MONOPOLIZING FLAG |
| | 0 |
| | RESOURCE GROUP SAVED VALUE VALIDITY FLAGS |
| | 0010 |
| | RESOURCE VALUE SAVE AREA STARTING ADDRESS |
| | XXXXXXX |

TASK INFORMATION SAVE AREA

STACK VARIABLE AREA

UNUSED AREA

RESOURCE GROUP 1 SAVE AREA (256 BYTES) (SAVED VALUES VALID)

RESOURCE GROUP 0 SAVE AREA (256 BYTES) (SAVED VALUES INVALID)

RESOURCE VALUE SAVE AREA

# FIG. 6

TASK SWITCHING PROCESS

ST1-1 SWITCH MADE BY INTERRUPT PROCESSING?

YES

NO

ST1-2 SET RESOURCE GROUP SAVED VALUE VALIDITY FLAGS ACCORDING TO TASK SWITCH MADE BY INTERRUPT PROCESSING

ST1-4 SET RESOURCE GROUP SAVED VALUE VALIDITY FLAGS ACCORDING TO TASK SWITCH MADE BY FUNCTIONAL BLOCK TRANSITION INSTRUCTION

ST1-3 SAVE RESOURCE VALUES OF RESOURCE GROUPS 0 AND 1

ST1-5 SAVE RESOURCE VALUE OF RESOURCE GROUP 1

ST1-6 SET VALUE OF FLOATING-POINT ARITHMETIC UNIT USE PERMISSION FLAG AS RESOURCE GROUPS 2-3 MONOPOLIZATION FLAG OF SWITCHED-OFF TASK

ST1-7 RESOURCE GROUP 0 STORED VALUE VALIDITY FLAG OF SWITCHED-ON TASK TRUE OR FALSE?

FALSE

TRUE

ST1-8 READ RESOURCE VALUES OF RESOURCE GROUP 0

ST1-9 RESOURCE GROUP 1 STORED VALUE VALIDITY FLAG OF SWITCHED-ON TASK TRUE OR FALSE?

FALSE

TRUE

ST1-10 READ RESOURCE VALUES OF RESOURCE GROUP 1

ST1-11 SET VALUE OF RESOURCE GROUPS 2-3 MONOPOLIZATION FLAG OF SWITCHED-ON TASK AS FLOATING-POINT ARITHMETIC UNIT USE PERMISSION FLAG

ST1-12 SET ACTIVE TASK VARIABLE TO VALUE CORRESPONDING TO SWITCHED-ON TASK

ST1-13 PERFORM OTHER TASK SWITCH PROCESSINGS

START OF SWITCHED-ON TASK

# FIG. 7

```
        ( RESOURCE GROUP USABILITY CHECK )
                        |
                     ST2-1
            /  FLOATING-POINT  \
   NO  <      ARITHMETIC UNIT    >
            \  TO BE USED?      /
                        |
                      YES
                     ST2-2
            /  FLOATING-POINT   \
           /  ARITHMETIC UNIT USE \    TRUE
           \  PERMISSION FLAG     /
            \ TRUE OR FALSE?    /
                        |
                     FALSE
                            ST2-3
         | PERFORM RESOURCE GROUP |
         | MONOPOLIZING TASK      |
         | [SWITCHING PROCESS]    |
                        |
                    ( END )
```

# FIG. 8

RESOURCE GROUP MONOPOLIZ-
ING TASK [SWITCHING PROCESS]

ST3-1
SET, AS MONOPOLIZING TASK INFORMATION,
TASK INFORMATION CORRESPONDING TO
TASK DESIGNATED BY RESOURCE GROUPS
2-3 MONOPOLIZING TASK VARIABLE

ST3-2
SET RESOURCE GROUPS 2-3 MONOPOLI-
ZATION FLAG IN MONOPOLIZING TASK
INFORMATION TO VALUE "FALSE"

ST3-3
SET FLOATING-POINT ARITHMETIC UNIT USE
PERMISSION FLAG TO VALUE "TRUE"

ST3-4
RESOURCE GROUP 2 STORED
VALUE VALIDITY FLAG IN
MONOPOLIZING TASK INFOR-
MATION TRUE OR FALSE?       FALSE

TRUE       ST3-5
SAVE RESOURCE VALUES OF
RESOURCE GROUP 2

ST3-6
RESOURCE GROUP 3 STORED
VALUE VALIDITY FLAG IN
MONOPOLIZING TASK INFOR-
MATION TRUE OR FALSE?       FALSE

TRUE       ST3-7
SAVE RESOURCE VALUES OF
RESOURCE GROUP 3

ST3-8
SET, AS ACTIVE TASK INFORMATION, TASK
INFORMATION CORRESPONDING TO TASK
DESIGNATED BY ACTIVE TASK VARIABLE

ST3-9
RESOURCE GROUP 2 STORED
VALUE VALIDITY FLAG IN
ACTIVE TASK INFORMATION
TRUE OR FALSE?       FALSE

TRUE       ST3-10
READ RESOURCE VALUES
OF RESOURCE GROUP 2

ST3-11
RESOURCE GROUP 3 STORED
VALUE VALIDITY FLAG IN
ACTIVE TASK INFORMATION
TRUE OR FALSE?       FALSE

TRUE       ST3-12
READ RESOURCE VALUES
OF RESOURCE GROUP 3

ST3-13
SET RESOURCE GROUP 2
STORED VALUE VALIDITY FLAG
AND RESOURCE GROUP 3
STORED VALUE VALIDITY FLAG
TO VALUE "TRUE"

ST3-14
SET RESOURCE GROUPS 2-3
MONOPOLIZING TASK VARIABLE
TO VALUE OF ACTIVE TASK
VARIABLE

END

# FIG. 9

### GENERAL REGISTERS

| | |
|---|---|
| RESOURCE GROUP 0 | GENERAL REGISTERS 0~15 |
| RESOURCE GROUP 1 | GENERAL REGISTERS 16~31 |
| RESOURCE GROUP 2 | GENERAL REGISTERS 32~47 |
| RESOURCE GROUP 3 | GENERAL REGISTERS 48~63 |
| RESOURCE GROUP 4 | GENERAL REGISTERS 64~79 |
| RESOURCE GROUP 5 | GENERAL REGISTERS 80~95 |
| RESOURCE GROUP 6 | GENERAL REGISTERS 96~111 |
| RESOURCE GROUP 7 | GENERAL REGISTERS 112~127 |

### FLOATING POINT REGISTERS

| | |
|---|---|
| RESOURCE GROUP 8 | FLOATING POINT REGISTERS 0~7 |
| RESOURCE GROUP 9 | FLOATING POINT REGISTERS 8~15 |
| RESOURCE GROUP 10 | FLOATING POINT REGISTERS 16~23 |
| RESOURCE GROUP 11 | FLOATING POINT REGISTERS 24~31 |
| RESOURCE GROUP 12 | FLOATING POINT REGISTERS 32~39 |
| RESOURCE GROUP 13 | FLOATING POINT REGISTERS 40~47 |
| RESOURCE GROUP 14 | FLOATING POINT REGISTERS 48~55 |
| RESOURCE GROUP 15 | FLOATING POINT REGISTERS 56~63 |

TOTAL OF 8192 BITS

REGISTERS USABLE BY TASKS

### RESOURCE GROUP MONOPOLIZING TASK VARIABLE REGISTERS

| |
|---|
| RESOURCE GROUP MONO-POLIZING TASK VARIABLE 0 |
| RESOURCE GROUP MONO-POLIZING TASK VARIABLE 1 |
| RESOURCE GROUP MONO-POLIZING TASK VARIABLE 2 |
| RESOURCE GROUP MONO-POLIZING TASK VARIABLE 3 |
| RESOURCE GROUP MONO-POLIZING TASK VARIABLE 4 |
| RESOURCE GROUP MONO-POLIZING TASK VARIABLE 5 |
| RESOURCE GROUP MONO-POLIZING TASK VARIABLE 6 |
| RESOURCE GROUP MONO-POLIZING TASK VARIABLE 7 |
| RESOURCE GROUP MONO-POLIZING TASK VARIABLE 8 |
| RESOURCE GROUP MONO-POLIZING TASK VARIABLE 9 |
| RESOURCE GROUP MONO-POLIZING TASK VARIABLE 10 |
| RESOURCE GROUP MONO-POLIZING TASK VARIABLE 11 |
| RESOURCE GROUP MONO-POLIZING TASK VARIABLE 12 |
| RESOURCE GROUP MONO-POLIZING TASK VARIABLE 13 |
| RESOURCE GROUP MONO-POLIZING TASK VARIABLE 14 |
| RESOURCE GROUP MONO-POLIZING TASK VARIABLE 15 |

ACTIVE TASK VARIABLE REGISTER

| ACTIVE TASK VARIABLE |
|---|

RESOURCE GROUP USE PERMISSION FLAG REGISTER

| 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|

RESOURCE GROUP IN-USE FLAG REGISTER

| 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|

RESOURCE GROUP SAVED VALUE VALIDITY FLAG REGISTER

| 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|

TOTAL OF 592 BITS

REGISTERS FOR TASK SWITCHING

# FIG.10

| TASK CONTROL INFORMATION AREA | | |
|---|---|---|
| RESOURCE CONTROL INFORMA- TION AREA | RESOURCE GROUP MONOPOLIZATION FLAG<br>0000000100000000 | |
| | RESOURCE GROUP SAVED VALUE VALIDITY FLAG<br>0000000100000100 | |
| | RESOURCE VALUE SAVE AREA STARTING ADDRESS<br>XXXXXXXX | |
| | MAXIMUM SAVE POSITION<br>3 | |
| | SAVE POSI- TION ARRAY | 0 | 0 |
| | | 1 | 16 |
| | | 2 | 2 |
| | | 3 | 16 |
| | | 4 | 16 |
| | | 5 | 16 |
| | | 6 | 16 |
| | | 7 | 16 |
| | | 8 | 1 |
| | | 9 | 16 |
| | | 10 | 16 |
| | | 11 | 16 |
| | | 12 | 16 |
| | | 13 | 16 |
| | | 14 | 16 |
| | | 15 | 16 |

TASK INFORMATION SAVE AREA

| STACK VARIABLE AREA |
|---|
| UNUSED AREA |
| RESOURCE GROUP 2 SAVE AREA (64 BYTES) (SAVED VALUES VALID) |
| RESOURCE GROUP 8 SAVE AREA (64 BYTES) (PRESENTLY MONOPOLIZED, RESOURCE VALUES VALID) |
| RESOURCE GROUP 0 SAVE AREA (64 BYTES) (SAVED VALUES INVALID) |

RESOURCE VALUE SAVE AREA

# FIG. 11

```
( TASK SWITCHING PROCESS )
```

| | |
|---|---|
| COMPUTE VALUE OF STARTING ADDRESS FOR TASK INFORMATION CORRESPONDING TO SWITCHED-ON TASK (THIS VALUE IS CALLED "K") | ST4-1 |

| | |
|---|---|
| WRITE VALUES OF RESOURCE GROUP USE PERMISSION FLAG REGISTER IN RESOURCE GROUP MONOPOLIZATION FLAG IN TASK INFORMATION DESIGNATED BY ACTIVE TASK VARIABLE | ST4-2 |

| | |
|---|---|
| WRITE VALUES OF SAVED VALUE VALIDITY FLAG REGISTER IN RESOURCE GROUP SAVED VALUE VALIDITY FLAG IN TASK INFORMATION DESIGNATED BY ACTIVE TASK VARIABLE | ST4-3 |

| | |
|---|---|
| SET ACTIVE TASK VARIABLE TO VALUE "K" | ST4-4 |

| | |
|---|---|
| READ VALUES OF RESOURCE GROUP MONO-POLIZATION FLAG IN TASK INFORMATION DESIGNATED BY ACTIVE TASK VARIABLE, AND SET READ VALUES IN RESOURCE GROUP USE PERMISSION FLAG REGISTER | ST4-5 |

| | |
|---|---|
| READ VALUES OF RESOURCE GROUP SAVED VALUE VALIDITY FLAG IN TASK INFORMATION DESIGNATED BY ACTIVE TASK VARIABLE, AND SET READ VALUES IN SAVED VALUE VALIDITY FLAG REGISTER | ST4-6 |

| | |
|---|---|
| PERFORM OTHER TASK SWITCH PROCESSINGS | ST4-7 |

```
( START OF SWITCHED-ON TASK )
```

# FIG. 12

RESOURCE GROUP
USABILITY CHECK

ST5-1
FUNCTIONAL
BLOCK TRANSITION
INSTRUCTION? — NO

YES ST5-2
SET, TO VALUE "FALSE", SOME
OF RESOURCE GROUP IN-USE
FLAGS CORRESPONDING TO
RESOURCE GROUPS 0 TO 3
AND 8 TO 11, IN COMBINATION
WITH VALUE "TRUE" OF CORRE-
SPONDING RESOURCE GROUP
USE PERMISSION FLAGS

ST5-3
SET, TO VALUE "FALSE", BITS
OF RESOURCE GROUP SAVED
VALUE VALIDITY FLAG CORRE-
SPONDING TO RESOURCE
GROUPS 0 TO 3 AND 8 TO 11

ST5-4
ANY RESOURCE USED — YES
BY INSTRUCTION?

NO

ST5-5
INDEX = NUMBER OF RESOURCE
GROUP TO WHICH RESOURCE
TO BE USED BY INSTRUCTION
BELONGS

ST5-6
IDENTIFY RESOURCE GROUP
USE PERMISSION FLAG
CORRESPONDING TO NUMBER-
INDEXED RESOURCE GROUP,
AND SET IDENTIFIED FLAG
AS "J"

ST5-7
IDENTIFY RESOURCE GROUP
IN-USE FLAG CORRESPONDING
TO NUMBER-INDEXED RESOURCE
GROUP, AND SET IDENTIFIED
FLAG AS "L"

ST5-8
IDENTIFY RESOURCE GROUP
SAVED VALUE VALIDITY FLAG
CORRESPONDING TO NUMBER-
INDEXED RESOURCE GROUP,
AND SET IDENTIFIED FLAG
AS "M"

ST5-9
VALUE "J"
TRUE OR FLASE? — TRUE

FALSE ST5-10
IDENTIFY RESOURCE GROUP
MONOPOLIZING TASK VARIABLE
CORRESPONDING TO NUMBER-
INDEXED RESOURCE GROUP,
AND SET IDENTIFIED FLAG
AS "K"

ST5-11
PERFORM RESOURCE GROUP
MONOPOLIZING TASK SWITCH-
ING PROCESS

ST5-12
SET "J" TO VALUE "TRUE",
SET "L" TO VALUE "TRUE", AND
SET "M" TO VALUE "TRUE"

ST5-13
ANY OTHER RESOURCE
TO BE USED BY — YES
INSTRUCTION?

NO

END

# FIG. 13

RESOURCE GROUP
MONOPOLIZING TASK
SWITCHING PROCESS

ST6-1
VALUE "L"
TRUE OR FALSE?
FALSE
TRUE
ST6-2
PERFORM RESOURCE GROUP
SAVING PROCESS

SET VALUE OF ACTIVE TASK
VARIABLE TO "K"   ST6-3

ST6-4
VALUE "M"
TRUE OR FALSE?
FALSE
TRUE
ST6-5
PERFORM RESOURCE GROUP
READING PROCESS

ST6-6
PERFORM RESOURCE GROUP
SAVE AREA SECURING PROCESS

END

# FIG. 14

```
      ╭─────────────────────╮
      │   RESOURCE GROUP     │
      │   SAVING PROCESS     │
      ╰─────────────────────╯
                 │
                 │                    ST7-1
    ┌────────────────────────────────────┐
    │ READ VALUE OF NUMBER-INDEXED        │
    │ ELEMENT IN SAVE POSITION ARRAY      │
    │ IN TASK INFORMATION DESIGNATED      │
    │ BY "K" (THIS VALUE IS CALLED "P1")  │
    └────────────────────────────────────┘
                 │
                 │                    ST7-2
    ┌────────────────────────────────────┐
    │ READ VALUE OF RESOURCE VALUE        │
    │ SAVE AREA STARTING ADDRESS          │
    │ IN TASK INFORMATION DESIGNATED      │
    │ BY "K", AND COMPUTE VALUE WHICH     │
    │ IS SUM OF READ VALUE AND A VALUE    │
    │ OBTAINED BY MULTIPLYING "P1" BY 64  │
    │ (COMPUTED VALUE IS CALLED "Q1")     │
    └────────────────────────────────────┘
                 │
                 │                    ST7-3
    ┌────────────────────────────────────┐
    │ SAVE NUMBER-INDEXED RESOURCE        │
    │ GROUP IN AREA WITH STARTING         │
    │ ADDRESS "Q1"                        │
    └────────────────────────────────────┘
                 │
            ╭─────────╮
            │   END   │
            ╰─────────╯
```

# FIG. 15

```
┌─────────────────────────┐
│   RESOURCE GROUP        │
│   READING PROCESS       │
└─────────────────────────┘
              │
                            ST8-1
┌─────────────────────────────────┐
│ READ VALUE OF NUMBER-INDEXED    │
│ ELEMENT IN SAVE POSITION ARRAY  │
│ IN TASK INFORMATION DESIGNATED  │
│ BY ACTIVE TASK VARIABLE (THIS   │
│ VALUE IS CALLED "P2")           │
└─────────────────────────────────┘
              │
                            ST8-2
┌─────────────────────────────────┐
│ READ VALUE OF RESOURCE VALUE    │
│ SAVE AREA STARTING ADDRESS      │
│ IN TASK INFORMATION DESIGNATED  │
│ BY ACTIVE TASK VARIABLE, AND    │
│ COMPUTE VALUE WHICH IS SUM OF   │
│ READ VALUE AND A VALUE OBTAINED │
│ BY MULTIPLYING "P2" BY 64       │
│ (COMPUTED VALUE IS CALLED "Q2") │
└─────────────────────────────────┘
              │
                            ST8-3
┌─────────────────────────────────┐
│ READ NUMBER-INDEXED RESOURCE    │
│ GROUP IN AREA WITH STARTING     │
│ ADDRESS "Q2"                    │
└─────────────────────────────────┘
              │
        ┌───────────┐
        │    END    │
        └───────────┘
```

# FIG. 16

```
    ┌─────────────────────────┐
    ( RESOURCE GROUP SAVE      )
    ( AREA SECURING PROCESS    )
    └─────────────────────────┘
                │
    ┌─────────────────────────────────┐
    │ READ VALUE OF NUMBER-INDEXED    │  ST9-1
    │ ELEMENT IN SAVE POSITION ARRAY  │
    │ IN TASK INFORMATION DESIGNATED  │
    │ BY ACTIVE TASK VARIABLE (THIS   │
    │ VALUE IS CALLED "P3")           │
    └─────────────────────────────────┘
                │
    ┌─────────────────────────────────┐
    │ READ VALUE OF MAXIMUM SAVE      │  ST9-2
    │ POSITION IN TASK INFORMATION    │
    │ DESIGNATED BY ACTIVE TASK       │
    │ VARIABLE (THIS VALUE IS CALLED "R") │
    └─────────────────────────────────┘
                │
         YES  ◇ P3 < R ?  ST9-3
    ┌────────◇
    │         │ NO
┌───────┐     │
( END   )     │
└───────┘     │
    ┌─────────────────────────────────┐
    │ READ VALUE OF RESOURCE VALUE    │  ST9-4
    │ SAVE AREA STARTING ADDRESS      │
    │ IN TASK INFORMATION DESIGNATED  │
    │ BY ACTIVE TASK VARIABLE, AND    │
    │ COMPUTE VALUE WHICH IS SUM OF   │
    │ READ VALUE AND A VALUE OBTAINED │
    │ BY MULTIPLYING R+1 BY 64        │
    │ (COMPUTED VALUE IS CALLED "Q3") │
    └─────────────────────────────────┘
                │
         NO  ◇ Q3 SMALLER THAN START-  ST9-5
    ┌────────◇ ING ADDRESS OF STACK
    │         ◇ VARIABLE AREA?
┌──────────────────┐  │ YES
( START STACK AREA  )
( DEFICIENCY EXCEP- )
( TION HANDLING     )
└──────────────────┘  │
    ┌─────────────────────────────────┐
    │ WRITE "R" AS NUMBER INDEXED     │  ST9-6
    │ ELEMENT OF SAVE POSITION ARRAY  │
    │ IN TASK INFORMATION DESIGNATED  │
    │ BY ACTIVE TASK VARIABLE         │
    └─────────────────────────────────┘
                │
    ┌─────────────────────────────────┐
    │ WRITE R+1 AS MAXIMUM SAVE       │  ST9-7
    │ POSITION IN TASK INFORMATION    │
    │ DESIGNATED BY ACTIVE TASK VARIABLE │
    └─────────────────────────────────┘
                │
         ┌───────┐
         ( END   )
         └───────┘
```

# FIG. 17

TASK SWITCHING PROCESS

ST10-1

COMPUTE VALUE OF STARTING
ADDRESS OF TASK INFORMATION
CORRESPONDING TO SWITCHED-ON
TASK (THIS VALUE IS CALLED "K")

ST10-2

WRITE VALUES OF SAVED VALUE
VALIDITY FLAG REGISTER IN RESOURCE
GROUP SAVED VALUE VALIDITY FLAG
IN TASK INFORMATION DESIGNATED
BY ACTIVE TASK VARIABLE

ST10-3

SET ACTIVE TASK VARIABLE TO
VALUE "K"

ST10-4

READ VALUES OF RESOURCE GROUP
SAVED VALUE VALIDITY FLAG IN
TASK INFORMATION DESIGNATED BY
ACTIVE TASK VARIABLE, AND SET
READ VALUES IN SAVED VALUE
VALIDITY FLAG REGISTER

ST10-5

PERFORM OTHER TASK SWITCH
PROCESSINGS

START OF SWITCHED-ON TASK

# FIG. 18

```
      ( RESOURCE GROUP )
      ( USABILITY CHECK )
              |
              |                    ST11-1
         /FUNCTIONAL\
        < BLOCK TRANSITION >────NO
         \INSTRUCTION?/
              |
             YES      ST11-2
    ┌────────────────────────┐
    │ SET, TO VALUE "FALSE", BITS │
    │ OF RESOURCE GROUP SAVED │
    │ VALUE VALIDITY FLAG CORRE- │
    │ SPONDING TO RESOURCE │
    │ GROUPS 0 TO 3  AND 8 TO 11 │
    └────────────────────────┘
              |
              |             ST11-3
         /ANY RESOURCE USED\────YES
        < BY INSTRUCTION? >
         \               /
              |
              NO
```

```
                                        ST11-4
    ┌────────────────────────┐
    │ INDEX = NUMBER OF RESOURCE │
    │ GROUP TO WHICH RESOURCE │
    │ TO BE USED BY INSTRUCTION │
    │ BELONGS │
    └────────────────────────┘
              |                 ST11-5
    ┌────────────────────────┐
    │ IDENTIFY RESOURCE GROUP │
    │ MONOPOLIZING TASK VARIABLE │
    │ CORRESPONDING TO NUMBER- │
    │ INDEXED RESOURCE GROUP, │
    │ AND SET IDENTIFIED VARIABLE │
    │ AS "K" │
    └────────────────────────┘
              |                 ST11-6
    ┌────────────────────────┐
    │ IDENTIFY RESOURCE GROUP │
    │ SAVED VALUE VALIDITY FLAG │
    │ CORRESPONDING TO NUMBER- │
    │ INDEXED RESOURCE GROUP, │
    │ AND SET IDENTIFIED VARIABLE │
    │ AS "M" │
    └────────────────────────┘
              |            ST11-7
         /         \         TRUE
        <  D = K ?  >────────
         \         /
              |
            FALSE      ST11-8
    ┌────────────────────────┐
    │ PERFORM RESOURCE GROUP │
    │ MONOPOLIZING TASK │
    │ SWITCHING PROCESS │
    └────────────────────────┘
              |               ST11-9
    ┌────────────────────────┐
    │ SET "M" TO VALUE "TRUE" │
    └────────────────────────┘
              |              ST11-10
         /ANY OTHER RESOURCE\
        < TO BE USED BY >────YES
         \INSTRUCTION?/
              |
              NO
              |
           ( END )
```

# FIG. 19

```
        ┌─────────────────────────┐
        │   RESOURCE GROUP         │
        │  MONOPOLIZING TASK       │
        │  SWITCHING PROCESS       │
        └────────────┬────────────┘
                     │        ST12-1
     ┌───────────────┴─────────────────┐
     │ READ VALUE OF RESOURCE GROUP     │
     │ SAVED VALUE VALIDITY FLAG        │
     │ CORRESPONDING TO NUMBER-         │
     │ INDEXED RESOURCE GROUP IN        │
     │ TASK INFORMATION DESIGNATED BY   │
     │ "K" (THIS VALUE IS CALLED "L")   │
     └───────────────┬─────────────────┘
                     │      ST12-2
                   ◇─┴─◇           FALSE
              ◇ VALUE "L"   ◇──────────────┐
               ◇ TRUE OR FALSE? ◇          │
                   ◇───◇                    │
                     │ TRUE    ST12-3       │
         ┌───────────┴──────────┐           │
         │ PERFORM RESOURCE GROUP│          │
         │ SAVING PROCESS        │          │
         └───────────┬──────────┘           │
                     │◄─────────────────────┘
         ┌───────────┴──────────┐ ST12-4
         │ SET VALUE OF ACTIVE TASK│
         │ VARIABLE TO "K"        │
         └───────────┬──────────┘
                     │      ST12-5
                   ◇─┴─◇           FALSE
              ◇ VALUE "M"   ◇──────────────────────┐
               ◇ TRUE OR FALSE? ◇                  │
                   ◇───◇                            │
                     │ TRUE  ST12-6                 │ ST12-7
         ┌───────────┴──────────┐   ┌──────────────┴──────────────┐
         │ PERFORM RESOURCE GROUP│   │ PERFORM RESOURCE GROUP      │
         │ READING PROCESS       │   │ SAVE AREA SECURING PROCESS  │
         └───────────┬──────────┘   └──────────────┬──────────────┘
                     │◄───────────────────────────┘
                ┌────┴────┐
                │   END   │
                └─────────┘
```

# FIG. 20

# FIG. 21A

SELECTION

REGISTER SET
USABLE BY
ACTIVE TASK

REGISTER FILE

# FIG. 21B

REGISTER
STACK

REGISTER SET
USABLE BY
ACTIVE TASK

# FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5682531 A
- US 5179685 A

- EP 0272150 A